(19) Europäisches Patentamt
European Patent Office
Office européen des brevets

(11) EP 3 345 049 B1

(12) EUROPÄISCHE PATENTSCHRIFT

(45) Veröffentlichungstag und Bekanntmachung des Hinweises auf die Patenterteilung:
**06.10.2021 Patentblatt 2021/40**

(21) Anmeldenummer: **16760698.7**

(22) Anmeldetag: **31.08.2016**

(51) Int Cl.:
***G02B 3/00*** (2006.01) ***G02B 27/18*** (2006.01)
***B60Q 1/04*** (2006.01) ***B60Q 1/24*** (2006.01)
***F21K 9/60*** (2016.01) ***G03B 21/13*** (2006.01)
***F21W 121/00*** (2006.01)

(86) Internationale Anmeldenummer:
**PCT/EP2016/070490**

(87) Internationale Veröffentlichungsnummer:
**WO 2017/037101 (09.03.2017 Gazette 2017/10)**

(54) **PROJEKTIONSVORRICHTUNG**

PROJECTION DEVICE

DISPOSITIF DE PROJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2015 DE 102015216985**

(43) Veröffentlichungstag der Anmeldung:
**11.07.2018 Patentblatt 2018/28**

(73) Patentinhaber: **Fraunhofer Gesellschaft zur Förderung der angewandten Forschung e.V.
80686 München (DE)**

(72) Erfinder:
- **MICHAELIS, Dirk
07747 Jena (DE)**
- **SCHREIBER, Peter
07749 Jena (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**DE-A1-102013 208 625**
**US-A- 5 162 844**
**DE-A1-102013 208 625**
**US-A- 5 162 844**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 345 049 B1

## Beschreibung

Die vorliegende Erfindung bezieht sich auf eine Projektionsvorrichtung zur Projektion mit refraktiven optischen Freiformflächen. Ausführungsbeispiele zeigen eine Freiformarrayprojektion. Gemäß Ausführungsbeispielen erzeugen die Freiformflächen eine Köhlersche Beleuchtung einer Projektionsoptik der Projektionsvorrichtung von einer Lichtobjektstruktur.

Einsatz findet der Strahlformer/Projektionseinheit bei der Erzeugung von beliebig strukturierten Beleuchtungen in vielen Anwendungsgebieten, wie z.B. Hintergrund und Akzentbeleuchtung im Bereich der Allgemeinbeleuchtung, der Erzeugung definierter Abstrahlprofile für z.B. Automobilanwendungen, der Generation bzw. Generierung von Lichtstrukturen auf Objekte für messtechnische Zwecke. Es können Informationen optisch visualisiert werden, wobei dies sowohl durch die Beleuchtung eines reellen Targets als auch durch die Generation von für das Auge sichtbaren virtuellen Bildern geschehen kann.

Um einen Vergleich und Gegenüberstellung von verschiedenen Lösungsansätzen objektiv durchführen zu können, werden kurz einige, hier relevante Kenngrößen für solche Strahlformer/Projektionseinheiten zusammengefasst. Für die meisten Anwendungen bei Beleuchtungs- und Projektionsaufgaben sind folgende Kenngrößen relevant:

(A) Gewährleistung eines genügend großen Lichtstroms / optische Leistung
(B) kompakte, miniaturisierte Optik, wobei Hauptaugenmerk auf die Optikdicke gelegt wird
(C) hohe Leistungstransmission durch die Optik / Leistungseffizienz
(D) Möglichkeit der Erzeugung von verschiedensten Lichtverteilungen:

- grobe, glatte, schwach veränderliche Verteilungen
- feine, stark strukturierte Lichtverteilung mit hoher Auflösung, wie z.B. Schriftzüge, Bilder mit hoher Auflösung
- von kleinen Kontrasten bis zu sehr hohen Kontrasten (z.B. Targetbereiche innerhalb des Beleuchtungsgebiets ohne Licht)
- beliebige Berandungsgeometrien
- alle unterschiedlichsten Anforderung in Kombination

(E) Homogenisierungswirkung bzgl. räumlich Quellinhomogenitäten, im Besonderen auch Möglichkeit zur Farbmischung, ausreichende Toleranzen, im Speziellen gegenüber Quellorte und Quellanordnungen

(i) Strukturierte Beleuchtungen und Projektion von Lichtverteilungen mit einkanaligen, makroskopischen Projektoren sind bekannt [Malacara]. Es können quasi beliebige Lichtverteilungen (D) auf Targets erzeugt werden. Allerdings wird dafür Licht, durch z.B. absorptive Dias oder dynamische Bildgeber, weggeblendet, was also einem erheblichen Leistungseffizienzverlusts (C) nach sich ziehen kann. Zwar wird in der Regel das Köhlersche Beleuchtungsprinzip angewendet, was einer Transformation des Quellortsraumes in den Targetwinkelraum bedeutet (E), aber eine weitere Lichtdurchmischung muss allerdings gesondert eingeführt werden, wie z.B. durch den Einsatz von Wabenkondensoren [Pan]. Bei der Miniaturisierung (B), also Optikhöhenverringerung, von Einkanalprojektoren [Pan, US 2006/0285078 A1] muss sich gleichzeitig die Optikfläche verringern, was mit einer Verkleinerung des übertragbaren Lichtstroms (A) einhergeht.

(ii) Zur Erzeugung von quasi beliebigen strukturierten Beleuchtungsmustern mit sehr hoher Leistungseffizienz (C) können refraktive oder reflektive Beleuchtungsfreiformen eingesetzt werden [Ries, Oliker]. Diese Art der Freiformbeleuchtung basiert auf einer refraktiven oder reflektiven Lichtumverteilung und benötigt prinzipiell keine absorptiven oder abblendenden Strukturen. Es wird in der Regel das Quelllicht ohne zusätzliche Projektionseinheit auf das Target überführt. Als Anwendungsbeispiel sei hier die Erzeugung von Streifenmustern für messtechnische Zwecke aufgeführt [DE 102011014779 A1]. Allerdings weist die Anwendung dieser Art der Freiformumverteilung erhebliche Defizite auf. Bei dieser Lichtumverteilung muss die auf die Freiform/Freiformen auftreffende Lichtverteilung (also die Quellverteilung oder die durch eine Primäroptik modifizierte Quellverteilung) sehr gut bekannt und darf keinen Veränderungen unterworfen sein, d.h. das System ist relativ intolerant (E). Homogenisierungs- und Lichtmischwirkungen sowie Köhlersche Beleuchtung etc. liegen nicht vor. Analog zum oben angeführten Makro-Projektor besteht das gleiche Problem bzgl. Miniaturisierbarkeit und Lichtstrom (A,B). Das weitaus größte Defizit ist allerdings die beschränkte Auflösung bei der Lichtverteilungsgeneration für realistische Quellverteilungen [Zwick]. Sehr feine Lichtverteilungsstrukturen auf dem Target können nur erzeugt werden, wenn sich die Quellverteilung näherungsweise als eine Wellenfront beschreiben lässt, als z.B. bei sehr gut kollimierter Quellstrahlung oder bei sehr kleiner Quellfläche. Im anderen Fall kommt es zu relativ starken Verschmierungs- bzw. Verwaschungeffekten, die einerseits beim optischen Design berücksichtigt werden müssen [Wu] und andererseits feine Targetstrukturen verhindern. Aus diesem Grund besteht die häufigste, praktische Anwendung von Umverteilungsfreiformen in der Erzeugung von sehr glatten bzw. homogenen Ausleuchtungen [Luo,Wu,Zhao].

(iii) Bei der Verbindung von Projektion und Freiformoptik sind im Wesentlichen zwei Tendenzen zu verzeichnen. Auf der einen Seite werden oben beschriebene Umverteilungsfreiformen bei der guten, homogenen Ausleuchtung von Dias bzw. Bildgebern oder Lichtmischern eingesetzt [Zhao, Minano]. Auf der anderen Seite können Abbildungsfreiformen, also Freiformelemente im Abbildungsstrahlengang des Projektors, zu kompakteren Optiken mit höherer Abbildungsqualität führen [Ricoh,_US 8717671 B2,US8616711, US 2015/0205099A1]. Hierdurch werden allerdings nicht die in (i) beschriebenen Defizite verringert.

(iv) Das im Punkt (i) beschriebene Defizit des geringen Lichtstroms, also der geringer Helligkeit auf dem Target, bei Verringerung der Optikbauhöhe wurde durch sogenannte Arrayprojektoren [DE 102013208625 A1, DE 102009024894 A1, DE 102011076083 A1, Sieler] aufgehoben. Durch die Verwendung von einer Vielzahl an optischen Kanälen mit mindestens einem Kondensorlenslet, einer abzubildenden Objektstruktur und mindestens einem Projektionslenslet pro optischem Kanal, wird sowohl die Optikbauhöhe verringert, als auch ein hoher Lichtstrom gewährleistet. Homogenisierungs- und Lichtmischwirkung, das Köhlersche Beleuchtungsprinzip als auch Toleranzen bzgl. Quellverteilungen sind vorhanden. Das Problem einer potentiell geringen Leistungseffizienz bzw. Systemtransmission bleibt allerdings bestehen. Durch die Absorption bzw. das Wegblenden von Licht infolge der abzubildenden Objektstrukturen können erhebliche Transmissionsverlusten auftreten. Erhebliche Verluste entstehen beispielsweise bei der Erzeugung von Graustufenprofilen mit ausgeprägten Bestrahlungsstärkemaxima, bei der Ausbildung von enge Lichtstrukturfeatures auf einer weniger hellen oder sogar fehlenden Hintergrundbeleuchtung oder bei der Generation von nichttrivialen Berandungen des auszuleuchtenden reellen oder virtuellen Bereichs.

Bekannte einkanalige Projektoren bzw. Beleuchtungskonfigurationen weisen demnach die Nachteile auf, dass eine Miniaturisierung der Projektoren/Beleuchtungskonfigurationen mit einer Verkleinerung des übertragbaren Lichtstroms einhergeht. Ferner weisen aktuelle Beleuchtungskonfigurationen mit Freiformlichtumverteilung bei realen Eingangslichtverteilungen erhebliche Defizite auf und können ausschließlich mit nahezu kollimierten Eingangslicht bzw. kleinen Quellflächen zur Erzeugung von räumlich hochfrequenten Beleuchtungsmustern eingesetzt werden. Andernfalls kann es zu relativ starken Verschmierungs- bzw. Verwaschungseffekten kommen, so dass feine Strukturen in einem projizierten Bild nicht generiert werden können. Zusätzlich sind solche Systeme optisch intolerant. Ferner können Blenden in Projektoren einen Eingangslichtstrom des Projektors erheblich reduzieren, so dass stark verminderte Leistungstransmissionen vorhanden sind.

Der vorliegenden Erfindung liegt somit die Aufgabe zugrunde, ein verbessertes Konzept zur Projektion von Bildern bzw. der strukturierten Beleuchtung zu schaffen.

Diese Aufgabe wird durch den Gegenstand des unabhängigen Patentanspruchs gelöst. Erfindungsgemäße Weiterbildungen sind in den Unteransprüchen definiert.

Ausführungsbeispiele zeigen eine Projektionsvorrichtung mit mindestens einer Lichtquelle und einem Array von optischen Kanälen, wobei jeder Kanal eine erste und eine zweite refraktive optische Freiformfläche und eine Projektionsoptik aufweist. Die erste und die zweite refraktive optische Freiformfläche sind zwischen der Lichtquelle und der Projektionsoptik angeordnet und bewirken eine Köhlersche Beleuchtung der Projektionsoptik von einer Lichtobjektstruktur, die in einer Bildfläche der Projektionsoptik das zu projizierende Bild ergibt, wobei sich Bilder des Arrays der optischen Kanäle überlagern. Somit kann durch die Überlagerung der Bilder der optischen Kanäle eine Gesamtlichtverteilung bzw. eine Gesamtabbildung oder ein Gesamtbild erhalten werden. Als Lichtobjektstruktur wird diejenige Lichtstruktur angesehen, die von der Projektionsoptik abgebildet wird. In anderen Worten ist die Lichtobjektstruktur also das Objekt bei der Abbildung, wobei im Gegensatz zu herkömmlichen Arrayprojektoren kein Dia, sondern eine Lichtverteilung verwendet wird.

Der vorliegenden Erfindung liegt die Idee zugrunde, eine Köhlersche Beleuchtung zu nutzen, um mittels zwei in einem optischen Kanal angeordneten refraktiven optischen Freiformflächen eine Lichtumverteilung sowie eine Änderung der Winkelverteilung von Licht einer Lichtquelle zu erhalten, die eine Lichtobjektstruktur bewirken, die mittels der Projektionsoptik in einem projizierten Bild dargestellt werden kann. Die Lichtobjektstruktur kann sowohl reell als auch virtuell sein. Das einfallende Licht kann sowohl kollimiert als auch divergent sein. In anderen Worten kann die Lichtobjektstruktur eine Lichtverteilung in der Projektionsoptik bewirken, so dass die Projektionsoptik das Bild anhand der Lichtverteilung projiziert. Der Einsatz von refraktiven optischen Freiformflächen ermöglicht, zumindest bei einer vollständigen Entspiegelung der Oberflächen, eine vollständige Übertragung der optischen Eingangsleistung auf das projizierte Bild bzw. Beleuchtungstarget. Somit können der Verlust an optischer Gesamtleistung verringert sowie insgesamt hellere bzw. intensiver leuchtende Bilder projiziert bzw. abgebildet werden, d.h. die Beleuchtungsstärke bzw. Intensität auf dem Target bzw. der Bildebene wird erhöht. Die Begriffe Beleuchtungsstärke und Intensität werden im Folgenden synonym verwendet, wobei sich beide Begriffe sowohl auf kollimiertes als auch auf nicht kollimiertes bzw. divergentes Licht beziehen. Insbesondere soll sich der Ausdruck der Intensität nicht ausschließlich auf kollimiertes Licht beschränken.

Die vorgenannte Prinzipien werden durch die Kombination von Freiformlichtumverteilung und der Köhlerschen Beleuchtung der Projektionsoptik erheblich verbessert. Die Köhlersche Beleuchtung besagt, dass die räumliche Quellstruktur in die Eingangspupille der Projektionsoptik aberriert abgebildet wird. In anderen Worten wird durch die Köhlersche Beleuchtung die Lichtquelle in eine Ebene oder eine (gekrümmte) Fläche der Projektionsoptik abgebildet. Diese Ebene bzw. die Fläche ist die Eingangspupille der Projektionsoptik, d.h. die räumliche Ortsinformation in der Eingangspupille wird durch die Quellstruktur bestimmt. Allerdings wird durch die Freiformlichtumverteilung die Winkelverteilungsinformation in der Eingangspupille durch die zu erzielende Beleuchtungsverteilung festgelegt. Hierdurch entsteht in der Projektionsvorrichtung hinter der Eingangspupille der Projektionsoptik eine räumliche Lichtobjektstruktur, die von der Projektionsoptik auf das Target abgebildet wird. Die Lichtobjektstruktur liegt zwischen der Quelle und der Projektionsoptik. Lichtobjektstrukturen in der Nähe der beiden Freiformflächen (virtuelle Lichtobjektstruktur vor der ersten Freiformfläche, virtuelle Lichtobjektstruktur auf bzw. zwischen den beiden Freiformflächen, reelle Lichtobjektstruktur nach der zweiten Freiformfläche) können trotz divergentem bzw. nicht-kollimiertem Lichteinfall besonders viel räumlich hochfrequente Information enthalten, d.h. es können Lichtobjektstrukturen mit scharfen, räumlich hochfrequenten Lichtverteilungsinhalt generiert werden. Falls solche Lichtobjektstrukturen durch die Projektionsoptik abgegriffen werden, können Beleuchtungsstrukturen auf einem Target ohne Verwaschungseffekte oder Überlagerungsartefakte, bzw. mit reduzierten Verwaschungseffekten oder Überlagerungsartefakten generiert werden, obwohl divergentes bzw. nicht-kollimiertes Licht von räumlich ausgedehnten Lichtquellen verwendet wird. Eine sichtbare Reduktion der Verwaschungseffekte im Vergleich zu einem herkömmlichen Freiformbeleuchtungskonzept ohne Köhlersche Beleuchtung einer Projektsionsoptik ermöglicht eine Verbesserung der Bildschärfe um zumindest 20%, zumindest 40% oder zumindest 60%.

Gemäß Ausführungsbeispielen kann die Projektionsvorrichtung eine transmissionsmodulierte Struktur aufweisen, wobei die transmissionsmodulierte Struktur ausgebildet ist, räumlich hochfrequente Strukturen auf die Lichtstruktur aufzuprägen, um ein geschärftes zu projizierendes Bild in der Bildebene der Projektionsoptik zu erzeugen. Somit können Bilder basierend auf den Lichtobjektstrukturen abgebildet werden, die z.B. schärfere Kanten oder feinere Strukturen, aber auch stark schwankende, glatte Intensitätsverteilungen bzw. Beleuchtungsstärken im Vergleich zu einer Abbildung aufweisen, die ohne transmissionsmodulierte Strukturen erzeugt wurde. Eine transmissionsmodulierte Struktur ist beispielsweise eine Blende, ein Dia, eine Maske oder ein Bildgeber, die Bereiche sich unterscheidender Transmissionsgrade für Licht aufweisen bzw. derart moduliert sind, dass Bereiche der Struktur Licht (überwiegend) transmittieren und weitere Bereiche der Struktur Licht (überwiegend) reflektieren und/oder absorbieren. In anderen Worten wird Licht, das auf die transmissionsmodulierte Struktur auftrifft im Wesentlichen bzw. ausschließlich in einem lichtdurchlässigen Bereich transmittiert bzw. durchgelassen, wobei Licht, das in einem lichtundurchlässigen Bereich der transmissionsmodulierten Struktur auftrifft (im Wesentlichen) reflektiert oder absorbiert wird und somit nicht transmittiert oder durch die Struktur durchgelassen wird. Die transmissionsmodulierte Struktur kann also eine Intensitätsmodulierung des Lichts bewirken, wobei der Begriff der Intensitätsmodulierung hier auf kollimiertes und divergentes Licht anwendbar ist und sich insbesondere nicht auf kollimiertes Licht beschränkt.

Gemäß weiteren Ausführungsbeispielen kann die erste und/oder die zweite optisch refraktive Freiformfläche ausgebildet sein, eine Bestrahlungsstärke des Lichts von der Lichtquelle in einem lichtdurchlässigen Bereich der transmissionsmodulierten Struktur zu erhöhen, um in dem lichtdurchlässigen Bereich der transmissionsmodulierten Struktur eine höhere Bestrahlungsstärke im Vergleich zu der Bestrahlungsstärke auf einem lichtundurchlässigen Bereich der transmissionsmodulierten Struktur zu erhalten. In anderen Worten können die beiden optisch refraktiven Freiformflächen eine Lichtverteilung (und eine Winkelverteilung des Lichts) in den transmissiven bzw. lichtdurchlässigen Bereich der transmissionsmodulierten Struktur, also beispielsweise der Blende, des Dias oder der Maske, vornehmen. Dies ist vorteilhaft, da somit der Anteil des Lichts, der durch die transmissionsmodulierte Struktur abgeschattet bzw. nicht durchgelassen wird, reduziert wird und somit eine erhöhte Lichtintensität bzw. eine größere Bestrahlungsstärke zur Projektion des Bilds zur Verfügung steht. Somit ist es möglich, Bilder mit einer erhöhten Helligkeit bzw. Beleuchtungsstärke zu projizieren.

In dieser Anordnung kann die transmissionsmodulierte Struktur die (finale) Lichtobjektstruktur formen, die von der ersten und der zweiten optisch refraktiven Freiformfläche vorgeformt wurde. Somit kann die Projektionsoptik eine Objektebene bzw. eine Objektfläche aufweisen, die in oder zumindest in der Nähe der transmissionsmodulierten Struktur liegt, um die Beleuchtung von der Lichtobjektstruktur in der Bildfläche der Projektionsoptik zu erhalten. Für eine Fernfeldbeleuchtung, also einem Beleuchtungstarget im Unendlichen, wird die linksseitige, d.h. die der Lichtquelle zugewandte Brennebene der Projektionsoptik zumindest in der Nähe der transmissionsmodulierten Struktur liegen. Im Fall einer Beleuchtung eines Targets (reell/virtuell) im endlichen Abstand zur Projektionsvorrichtung werden die klassischen Abbildungsgsetze [Born-Wolf] angewendet, um die Objektebene bzw. Objektfläche der Projektionsoptik in die Nähe der transmissionsmodulierten Struktur zu bringen. Die weiteren refraktiven optischen Freiformflächen nehmen eine Lichtumverteilung vor, um eine Lichtstruktur in der Ebene der transmissionsmodulierten Struktur zu erhalten, die Ähnlichkeit mit der Lichtobjektstruktur hat. Eine Ähnlichkeit der Lichtstruktur in Bezug auf die Lichtobjektstruktur bezieht sich auf die Erkennbarkeit eines Motivs oder zumindest auf die Übereinstimmung einer Grobstruktur oder wenigstens einer Position. So kann die Lichtobjektstruktur schärfere Konturen, oder allgemein höhere räumliche Frequenzen aufweisen, eine Struktur bzw. eine grobe Form oder zumindest die Lage des zu projizierenden Bilds ist jedoch bereits in der Lichtstruktur zu erkennen. Die zur Abbildung vorgesehene Lichtobjektstruktur wird dann jedoch mittels der transmissionsmodulierten Struktur gebildet. Ferner erzeugen die optisch refraktiven Freiformflächen auch in diesem Ausführungsbeispiel eine Änderung der Winkelverteilung des einfallenden Lichts in der Art, dass eine Köhlersche Beleuchtung der Projektionsoptik von der Lichtobjektstruktur erhalten wird.

Gemäß der Erfindung ist die erste refraktive optische Freiformfläche ausgebildet, eine räumliche Lichtumverteilung und/oder eine Steuerung der Strahlwinkel von Lichtstrahlen, die von der Lichtquelle ausgesendet werden, vorzunehmen. Darüber hinaus ist die zweite refraktive optische Freiformfläche ausgebildet, Lichtstrahlen gemäß der Köhlerschen Beleuchtung konvergent auf die Projektionsoptik zu leiten, wobei sich die erste und die zweite refraktive optische Freiformfläche gegenseitig beeinflussen. Insbesondere können die erste und die zweite optisch refraktive Freiformfläche, mathematisch gesehen, durch das Lösen von gekoppelten Differentialgleichungen erhalten werden, um sowohl die Köhlersche Beleuchtung der Projektionsoptik als auch eine räumliche Lichtumverteilung dahin gehend vorzunehmen, dass basierend auf der neu geschaffenen Lichtverteilung eine gewünschte Lichtobjektstruktur erzeugt werden kann.

Weitere Ausführungsbeispiele zeigen die erste und die zweite refraktive optische Freiformfläche, die basierend auf einer reellen Lichtstruktur, eine virtuelle Lichtobjektstruktur in dem optischen Kanal zwischen der Lichtquelle und der zweiten refraktiven optischen Freiformfläche erzeugen, wobei die virtuelle Lichtobjektstruktur eine Abbildung des zu projizierenden Bilds ist und wobei die reelle Lichtstruktur nach dem Durchstrahlen der ersten und der zweiten refraktiven optischen Freiformfläche entsteht. In anderen Worten erzeugt hier die erste und die zweite refraktive optische Freiformfläche eine virtuelle Lichtobjektstruktur, die vor der zweiten optisch refraktiven Freiformfläche liegt. Diese kann, bildlich dargestellt, durch Verlängerung der Lichtstrahlen der reellen Lichtstruktur nach der zweiten refraktiven optischen Freiformfläche erhalten werden. Die virtuelle Lichtobjektstruktur ist eine Hilfsdarstellung, um zu verdeutlichen, wie die reelle Lichtstruktur in der Projektionsoptik als das zu projizierende Bild dargestellt wird. Demnach kann die Projektionsoptik die Lichtobjektstruktur in der Nähe der Ebene bzw. Fläche aufgreifen, in der die virtuelle Lichtobjektstruktur dargestellt wird und dieselbe schließlich auf das Target abbilden. In anderen Worten wird die Objektebene der Projektionsoptik in die Nähe der Fläche bzw. in die Fläche gelegt, in der die virtuelle Lichtobjektstruktur erhalten wird. Ferner kann die virtuelle Lichtobjektstruktur mit den geringsten Verwaschungseffekten (bzw. mit dem größten oder schärfsten Informationsgehalt) komplexe Formen annehmen, die nicht in einer Ebene liegen. In diesem Fall kann die Objektebene der Projektionsoptik nur in eine mittlere Position dieser virtuellen Lichtobjektstruktur und somit in die Nähe derselben gelegt werden, da die virtuelle Lichtobjektstruktur mit minimaler Verwaschung und die Objektebene nicht deckungsgleich sein können. Dennoch kann die Objektebene auch hier wenigstens näherungsweise (teilweise) in der anvisierten, virtuellen Lichtobjektstruktur liegen. Um solche Lichtobjektstrukturen mit komplexer Form (doch) besser bzw. schärfer abbilden zu können, kann die Projektionsoptik mit Hilfe von weiteren Freiformen so gestaltet werden, dass die Objektfläche der Projektionsoptik besser mit der Form der Lichtobjektstruktur übereinstimmt. Weist die Lichtobjektstruktur die Form einer (planen) Ebene auf, so wird die Objektebene der Projektionsoptik die Lichtobjektstruktur in der Ebene liegen, in der die Lichtobjektstruktur dargestellt wird. Andernfalls wird nicht die anvisierte Lichtobjektstruktur abgebildet, sondern eine daneben liegende Lichtstruktur, die dann die (nicht anvisierte) Lichtobjektstruktur ist.

Die Projektionsoptik bildet das zu projizierende Bild auf eine Projektionsfläche ab, wobei die Projektionsoptiken des Arrays von optischen Kanälen ausgebildet sind, die zu projizierenden Bilder auf der Projektionsfläche zu überlagern. Dies ist vorteilhaft, da die Projektionsoptik das zu projizierende Bild auf einer reellen Projektionsfläche (target), beispielsweise einer Wand, abbilden kann. Gemäß einem nicht zur Erfindung gehörenden Vergleichsbeispiel kann die Projektionsvorrichtung auch ein virtuelles Bild projizieren, dass theoretisch erst im Unendlichen ein reelles Bild ergibt, jedoch mit einer weiteren Linse, beispielsweise mit dem Auge, auf eine reale Projektionsfläche abgebildet werden kann. In diesem Fall wäre das Auge auf einem unendlichen Abstand eingestellt. Analog hierzu kann in diesem Vergleichsbeispiel die Projektionsvorrichtung auch ein virtuelles Bild in einem endlichen Abstand zum Element erzeugen, und durch eine weitere Optik, z.B. mit dem Auge, kann dieses Bild auf eine reale Projektionsfläche gebracht werden. In diesem Falle wäre das Auge auf einen endlichen Objektabstand eingestellt. Demnach können die einzelnen Kanäle des Arrays von optischen Kanälen ausgebildet sein, jeweils Bilder mit dem gleichen Motiv auf der reellen oder virtuellen Projektionsfläche zu überlagern. Dies ist vorteilhaft, da gemäß diesem Vergleichsbeispiel jeder Kanal Bilder mit dem gleichen Motiv erzeugt, die sich z.B. in einer Helligkeitsverteilung oder in Wellenlängenbereichen (also z.B. unterschiedliche Grundfarben aufweisen) unterscheiden können und eine Überlagerung der Bildern von verschiedenen Kanälen zu einer verbesserten Lichtverteilung auf der Projektionsfläche führt. Dies führt zu einer Homogenisierung der Lichtverteilung bei inhomogenen Quellverteilungen. Des Weiteren können hiermit verbesserte Farbmischungen von farbigen Quellanordnungen erreicht werden. Letztlich wird die Toleranz des Systems gegenüber Quellanordnungen bzw. Optikfabrikationsungenauigkeiten erhöht. So kann ein Motiv der Gesamtabbildung aus den projizierten (Einzel-) Bildern der optischen Kanäle zusammengesetzt werden, wobei die Bilder der optischen Kanäle ein jeweils anderes Motiv aufweisen. Die Einzelbilder sind z.B. derart auf der Projektionssfläche angeordnet, dass Bilder zweier Kanäle z.B. zur Hälfte oder zu einem Viertel überlappen, um Unstetigkeiten in den Bildübergängen zu vermeiden. In anderen Worten können (beispielsweise durch Produktionsungenauigkeit hervorgerufene) Bildfehler im projizierten (Einzel-) Bild, z.B. eine ungleiche Helligkeitsverteilung aufweisen, die durch die Überlagerung mit weiteren Bildern zu einem Gesamtbild ausgeglichen werden. Alternativ können die einzelnen Kanäle oder Gruppen von Kanälen ausgebildet sein, sich unterscheidende Bilder auf der Projektionsfläche zu erzeugen, wobei ein Gesamtbild auf der Projektionsfläche mittels einer zumindest teilweisen Überlagerung der sich unterscheidenden Bilder erzeugt ist. Dies ist vorteilhaft, da somit zusammengesetzte Gesamtabbildungen aus den einzelnen projizierten Bildern der Kanäle erzeugt werden können, die in einem Einzelbild der gleichen Größe nur unter erheblich höherem Aufwand dargestellt werden können. Dies kann z.B. auftreten, wenn für die Bestrahlung oder Beleuchtung der Projektionssfläche große Abstrahlwinkel der Projektionsoptiken vorteilhaft sind.

Weitere Ausführungsbeispiele zeigen zumindest zwei Kanäle oder zwei Gruppen von Kanälen, die ausgebildet sind, sich unterscheidende Wellenlängenbereiche zu verarbeiten, wobei der erste Kanal oder die erste Gruppe von Kanälen Abbildungsfehler in einem ersten Wellenlängenbereich reduzieren und wobei der zweite Kanal oder die zweite Gruppe von Kanälen Abbildungsfehler in einem zweiten Wellenlängenbereich reduziert. Somit können die verschiedenen optischen Kanäle auf unterschiedliche Wellenbereiche optimiert werden, so dass eine exaktere Projektion, beispielsweise mit geringeren Unschärfen oder chromatischen Aberrationen in dem Wellenlängenbereich, für die der Kanal optimiert wurde, zu schaffen. Ferner kann die Projektionsvorrichtung hierzu eine Mehrzahl von Farbfiltern oder eine Mehrzahl von Lichtquellen sich unterscheidender Wellenlängenbereiche aufweisen, wobei die Mehrzahl von Farbfiltern oder die Mehrzahl von Lichtquellen ausgebildet ist, Licht in einem ersten Wellenlängenbereich in den ersten Kanal oder die erste Gruppe von Kanälen zu leiten und Licht in einem zweiten Wellenlängenbereich in den zweiten Kanal oder die zweite Gruppe von Kanälen zu leiten. Somit kann vorteilhafterweise z.B. für die drei Grundfarben Rot, Grün und Blau jeweils ein Kanal bzw. eine Gruppe von Kanälen in dem Array optimiert werden. Durch eine Abstimmung bzw. Anpassung der optischen Strukturen an die einzelnen Wellenlängenbereiche können Bildfehler somit reduziert werden, so dass bei der Projektion der Bilder eine Überlagerung der farbigen Einzelbilder zu einem Gesamtbild erfolgt, das z.B. eine erhöhte Schärfe bzw. geringere Artefakte bzw. Aberrationen wie z:B. Farbsäume im Vergleich zu einem Gesamtbild aufweist, das durch Kanäle erzeugt wird, die auf weißes Licht abgestimmt sind.

Gemäß weiteren Ausführungsbeispielen sind optische Strukturen aller Kanäle des Arrays von optischen Kanälen auf planen Substraten und/oder in Ebenen angeordnet. Dies ist vorteilhaft, da diese Anordnung keinen erhöhten Herstellungsaufwand erfordert und somit preisgünstig hergestellt werden kann. Optische Strukturen fassen hier alle Elemente zusammen, die einen Einfluss auf die Lichtverteilung im optischen Kanal haben, wie z.B. die erste und die zweite refraktive optische Freiformfläche sowie optional weitere refraktive optische Freiformflächen, die Projektionsoptik sowie optional weitere Projektionslinsen und die transmissionsmodulierten Strukturen.

Gemäß weiteren Ausführungsbeispielen kann zumindest eine optische Struktur ausgebildet sein, eine asymmetrische Lichtverteilung in der Bildebene der Projektionsoptik zu erzeugen, wobei die optische Struktur auf einer geneigten Ebene angeordnet ist, um Unstetigkeiten zwischen aneinander angrenzenden optischen Strukturen benachbarter optischer Kanäle zu reduzieren und wobei die Projektionsoptik ausgebildet ist, die Bilder basierend auf der asymmetrischen Lichtverteilung zu projizieren. Wird demnach eine asymmetrische Lichtverteilung in dem projizierten Bild gewünscht, so weisen beispielsweise die refraktiven optischen Freiformflächen schräge bzw. prismatische Flächenanteile auf, die die Asymmetrie in der Lichtverteilung herstellen. Werden die optischen Strukturen in einer Ebene angeordnet, so entstehen an den Flächen, an denen die optischen Strukturen benachbarter Kanäle aneinander grenzen, Sprungstellen bzw. Unstetigkeiten, die z.B. Artefakte in dem projizierten Bild hervorrufen können. Durch das Anordnen der optischen Strukturen auf einer geneigten Ebene wird der Grad der Unstetigkeit bzw. die Höhe der Sprünge zwischen den angrenzenden optischen Strukturen reduziert, wodurch auch die Artefakte reduziert werden. Gemäß einem weiteren Ausführungsbeispiel können sowohl jeweils die erste und die zweite refraktive optische Freiformfläche sowie die Projektionsoptik zumindest in einem optischen Kanal auf einer gekrümmten Fläche angeordnet sein, wobei Hauptabstrahlwinkel des optischen Kanals angepasst werden, um bei der Überlagerung der Bilder Projektionsartefakte und/oder optisch inaktive Bereiche und/oder Totzonen zwischen den Arraykanälen zu reduzieren bzw. zu vermeiden. Vorteilhaft ist diese Anordnung beispielweise, wenn alle Kanäle des Arrays von optischen Kanälen auf einer gemeinsamen Einhüllenden angeordnet sind, die Hauptabstrahlwinkel der einzelnen Kanäle individuell angepasst werden können, um die vorgenannten Effekte zu minimieren und eine, mathematisch betrachtet, bestmögliche Gesamtabbildung nach der Überlagerung der projizierenden Bilder zu erhalten.

Ausführungsbeispiele zeigen ferner die Projektionsvorrichtung, nachfolgend auch Strahlformer/Projektionseinheit oder Freiform-Array-Projektor genannt mit mindestens einer Lichtquelle und optionaler Primäroptik sowie benachbarten optischen Kanälen. Jeder optischer Kanal enthält mindestens zwei refraktive Freiformflächen, eine Projektionslinse/- optik und eine oder mehrere transmissionsmodulierte Strukturen. Die einfallsseitig angeordneten optischen Freiformflächen bewirken sowohl eine räumliche Lichtumverteilung als auch eine Steuerung der Strahlwinkel, so dass einerseits räumliche reelle oder virtuelle Lichtstrukturen entstehen, und andererseits eine Köhlersche Beleuchtung der nachfolgenden Projektionslinse/-optik ermöglicht wird. Die Projektionslinse/-optik transferiert die durch die Freiformlichtumverteilung als auch durch die transmissionsmodulierte Einheiten erzeugte Lichtstruktur auf ein oder mehrere reelle oder virtuelle Targets, wobei die Gesamtlichtverteilung durch die Überlagerung der individuellen Lichtverteilungen der einzelnen Kanäle entsteht.

Ein einfacher Einsatz von einer lichtumverteilenden Freiformfläche in den Arrayprojektor ist wenig zielführend. Es ist ferner vorteilhaft mindestens zwei, in ihrer Wirkung gekoppelte Freiformflächen einzusetzen.

Gemäß Ausführungsbeispielen ist der Strahlformer/Projektionseinheit eine kompakte, ultradünne Optik (A) mit gleichzeitig großem Lichtstrom (B). Es können sowohl glatte / grob strukturierte Lichtverteilungen durch Freiformlichtumverteilung, als auch sehr feine, hochaufgelöste Lichtmuster mit quasi beliebigen Kontrasten durch die Kombination der Freiformlichtumverteilung und transmissionsmodulierte Strukturen erzeugt werden (D). Durch die Anwendung der Freiformlichtumverteilung kann die Leistungstransmission der Optik erheblich verbessert werden (C). Bei sehr feinen, hochaufgelösten Targetlichtmustern wird durch die Freiformlichtumverteilung ein reelle Lichtstruktur innerhalb der Optik erzeugt, die sehr gut an die transmissionsmodulierte Strukturen (z.B. Blenden) angepasst ist und damit das verlustbehaftete Abblenden von Licht stark reduziert. Bei weniger feinen Targetlichtverteilungen kann exklusiv die verlustfreie Freiformlichtumverteilung angewendet werden, und die transmissionsmodulierte Strukturen dienen eher nur zur Streu- und Störlichtminimierung. Hierbei muss besonders hervorgehoben werden, dass die im Punkt (ii) beschriebene Strukturverwaschung/-verschmierung bei herkömmlicher Freiformlichtumverteilung durch unsere neuartige Optik sehr stark reduziert werden kann. Durch die gemeinsame Wirkung der beiden Freiformflächen entsteht innerhalb der Optik eine nur wenig verwaschene Lichtobjektstruktur, die durch die Projektionslinse/optik auf das Target überführt wird. Häufig handelt es sich in diesem Fall um eine virtuelle Lichtobjektstruktur, die von der abbildenden Projektionslinse/optik abgegriffen werden muss. Die abbildende Projektionsoptik kann im einfachsten Fall eine einzige Mikrolinse sein. Für eine verbesserte Abbildungsqualität können auch hierfür Mehrflächenoptiken eingesetzt werden. Bei nichttrivial verteilter "Objektlichtstruktur" als auch bei nichttrivialen Targetformen sind weitere Freiformflächen in der abbildende Projektionsoptik förderlich. Zusätzlich zu den verschiedensten Möglichkeiten der Targetlichtstrukturen wird durch die Optik das Köhlersche Beleuchtungsprinzip angewendet, so dass räumliche Inhomogenitäten im Quellbereich auf dem Target nicht sichtbar sein werden (E). Die Superposition der Lichtverteilungen der Einzekanäle auf dem Target ergibt die Gesamtlichtverteilung. Falls wenigstens jeweils einige Kanäle gleiche Targetbereiche mit quasi gleichen Sublichtverteilungen bedienen, kommt es zu Lichtmischungen und Homogenisierungswirkung der Optik (E).

Gemäß vorteilhafter Ausgestaltungen der vorliegenden Erfindung ist es vorteilhaft, zumindest zwei, in ihrer Wirkung gekoppelte Freiformflächen in einem optischen Kanal anzuordnen, um die Lichtumverteilung sowie die Anpassung der Winkelverteilung des Lichts vorzunehmen.

Bevorzugte Ausführungsbeispiele der vorliegenden Anmeldung werden nachfolgend Bezug nehmend auf die beiliegenden Zeichnungen näher erläutert. Es zeigen:

Fig. 1: eine schematische Darstellung einer Projektionsvorrichtung;

Fig. 2: eine schematische Darstellung einer erfingungsgemäßen Ausführungsform des Strahlformers / Projektionseinheit bzw. der Projektionsvorrichtung;

Fig. 3: eine schematische Darstellung eines Einzelkanals (hier ohne Kanalneigung) des Strahlformers / Projektionseinheit zur Erläuterung von Wirkungsprinzipien an Hand einer Ausführungsform mit drei refraktiven Flächen und einer Blendenstruktur;

Fig. 4: eine schematische Veranschaulichung einer virtuellen Objektstrukturebene mit minimaler Strukturverwaschung bei exklusiver Freiformstrahlumverteilung an Hand eines Einzelkanals;

Fig. 5: eine schematische Veranschaulichung einiger Eigenschaften des Freiform-Array-Projektors mit ausschließlicher Lichtumverteilung an Hand eines vereinfachten Modells und Abgrenzung zum konventionellen Arrayprojektor;

Fig. 6: eine schematische Darstellung von zwei Freiformflächen zur Verdeutlichung eines Grundgedankens eines gleichzeitigen Konzipierens zweier Freiformen, um eine räumliche Lichtstruktur zu erhalten und die Winkelverteilung der Strahlen zu steuern, es zeigt Fig. 6a ein Schema einer Freiformlaserstrahlformung, um eine kollimierte Eingangsintensität zu einer gewissen gebündelten Ausgangsintensität umzuverteilen, wobei die Freiformflächen in Sätze von Paaren von Ellipsoiden/Koniken zerlegt werden, wobei die relevanten Foki an dem das Gegenstück bildenden Grundelement platziert werden, Fig. 6b zeigt schematisch eine Erzeugung eines ideal konvergierenden Strahlenbündels mit einer bestimmten Strahlungsintensitätsverteilung von einer gebündelten Lichtquelle mit einem gegebenen Eingangsstrahlungsintensitätsmuster bzw. einer gegebenen Eingangsstrahlungsintensitätsstruktur, wobei die zwei Freiformflächen in Sätze von Paaren von Eingangsellipsoiden und Ausgangsovalen (Kartesische Ovale) zerlegt werden und Fig. 6c zeigt schematisch eine Erzeugung eines konvergierenden Strahlenbündels einer spezifischen Winkelverteilung mit einem bestimmten Strahlungsintensitätsmuster bzw. einer bestimmten Strahlungsintensitätsstruktur von einem gebündelten Quellenlicht mit einer gegebenen Eingangsstrahlungsintensität, wobei die zwei Freiformflächen in Sätze von Paaren von Eingangsellipsoiden und verallgemeinerten Kartesischen Ovalen am Ausgang zerlegt werden;

Fig. 7: eine schematische Darstellung der Projektionsvorrichtung (bzw. eines Freiform-Array-Projektors) ohne transmissionsmodulierte Strukturen (wie absorptive Blenden etc. ) als Verallgemeinerung des konventionellen Wabenkondensors, die rechtsseitigen Insets zeigen die Oberflächenprofile von zwei Beleuchtungsfreiformen eines Optikkanals;

Fig. 8: eine schematische Darstellung des Freiform-Array-Projektors zur Veranschaulichung der Köhlerschen Beleuchtung sowie der Mischungs- und Homogenisierungswirkung bei Anwesenheit von einer oder mehreren, homogenen oder strukturierten sowie monochromatischen, polychromatischen oder weiß abstrahlenden Lichtquellen (hier beispielhaft eine Multichip-RGGB-Quelle);

Fig. 9: eine schematische Darstellung des Freiform-Array-Projektors gemäß einem Ausführungsbeispiel zur Erzeugung von Targetmustern mit sehr hoher Raumfrequenz als auch hoher Systemtransmission durch das Zusammenwirkung von Freiformlichtumverteilung, absorptiv/reflektiver Lichtabblendung und Abbildung, die rechtsseitigen Insets zeigen für einen Kanal eine absorptive Blende und Oberflächenprofile der beiden Beleuchtungsfreiformen, der linksseitige Inset verdeutlicht, dass die Lichtstrahlen infolge der Lichtumverteilung vorzugsweise durch die Blendenöffnungen propagieren;

Fig. 10: eine schematische Darstellung der Projektionsvorrichtung zur Erzeugung von Targetlichtstrukturen durch refraktive Lichtumverteilung mit inversen Kontrastverhältnissen im Vergleich zu Fig. 7;

Fig. 11: eine schematische Darstellung des Freiform-Array-Projektors mit zusätzlichen Blendenstrukturen (Blendenlagen / Blendenwände /) zur Minimierung von Streuund Störlicht infolge von potentiell unstetigen Kanalübergängen, Störflanken, Totzonen, ungenügende Kollimation des Eingangslichts etc;

Fig. 12: eine schematische Darstellung des Freiform-Array-Projektors zur Erzeugung einer hellen Dreiecksstruktur mit rechteckiger Hintergrundbeleuchtung auf dem Target, wobei unterschiedliche Kanalüberlagerungen auf dem Target angewendet werden, Links: alle Kanäle bedienen den gleichen Bereich des Targets mit quasi gleicher Einzelkanalbeleuchtung, Rechts: verschiedene Gruppen von Kanälen bedienen unterschiedliche Bereiche des Targets mit unterschiedlichen Einzelkanalbeleuchtungen, Insets zeigen die Oberflächenprofile von zwei Beleuchtungsfreiformen eines Optikkanals;

Fig. 13: eine schematische Darstellung des Freiform-Array-Projektors mit nach und vorgeschalteten, zusätzlichen, für alle/einige Kanäle gemeinsamen optischen Flächen/Freiformflächen zur Anpassung der Hauptabstrahlrichtungen der einzelnen Kanäle an die erforderliche Targetverteilung;

Fig. 14: eine schematische Darstellung der Projektionsvorrichtung zur Erzeugung einer dreieckigen Targetverteilung ohne zusätzlicher Hintergrundbeleuchtung durch Freiformumverteilung, Die starke Unsymmetrie in den Leistungsverteilungen wird durch einen ausgeprägten Blaze-Charakter (prismatische Form) der Freiformen erreicht, was allerdings zu starken Unstetigkeiten der Optikfläche beim Übergang zwischen verschiedenen Kanälen führt und Blendenstrukturen zur Störlichtminimierung notwendig macht;

Fig. 15: die Projektionsvorrichtung aus Fig. 14 mit Blenden zwischen den einfallsseitig ersten beiden Freiformflächen;

Fig. 16: eine schematische Darstellung des Freiform-Array-Projektors, wobei die eingangsseitig ersten beiden Freiformarrays auf geneigten Ebenen und das Projektionslinsenarray auf einer gestuften Struktur angeordnet sind. Hierdurch werden die bei asymmetrischen Lichtverteilungen notwendigen Unstetigkeiten/steile Übergänge zwischen den Kanälen der Freiformarrays stark minimiert, was die Herstellung deutlich vereinfacht;

Fig. 17: die Projektionsvorrichtung aus Fig. 16 mit einem Projektionslinsenarray auf einer geneigten Ebene und zusätzliche Einführung von Blenden auf dem ersten Substrat zur Störlichtminimierung;

Fig. 18: die Projektionsvorrichtung aus Fig. 17 mit zusätzlich geneigter Quelleinheit (Neigung der Kollimationsoptik und/oder Quellen);

Fig. 19: eine schematische Darstellung des Freiform-Array-Projektors mit Anordnung von Optikkanälen auf gekrümmten Flächen, wobei sich hierdurch die Hauptstrahlwinkel der Einzelkanäle durch Lichtbrechung an die Quell- und Zielverteilung anpassen lassen und gleichzeitig Unstetigkeiten/ steile Übergänge / Totzonen / optisch inaktive Bereiche zwischen den Kanälen reduzieren bzw. verhindern lassen;

Fig. 20: eine schematische Darstellung verschiedener Beispiele von Parkettierungstypen für die Anordnung von optischen Kanälen;

Fig. 21: eine schematische Darstellung des Freiform-Array-Projektors mit verschiedenen Farbfiltern innerhalb unterschiedlicher Kanalbereiche, so dass die Einzelkanäle eine chromatische Aberrationskorrektur durch eine Optikstrukturanpassung haben; und

Fig. 22: ein schematisches Blockdiagramm eines Verfahrens zur Projektion von Bildern.

In der nachfolgenden Beschreibung der Figuren werden gleiche oder gleichwirkende Elemente mit den gleichen Bezugszeichen versehen, so dass deren Beschreibung in den unterschiedlichen Ausführungsbeispielen untereinander austauschbar ist.

Gemäß Ausführungsbeispielen ist das Ziel der Erfindung ein ultra-dünnes, hocheffizientes optisches Element zur Erzeugung einer strukturierten Beleuchtung bzw. zur Projektion mit potentiell großem Lichtstrom zu schaffen, wobei zusätzlich eine Homogenisierungswirkung/Farbmischung der Quellstrahlung erfolgt. Es sollen Lichtverteilungen auf reellen und/oder virtuellen Targets mit unterschiedlichsten Strukturmerkmalen (z.B. feine Strukturen mit hoher Auflösung, hohe Kontraste etc.) ermöglicht werden.

Fig. 1 zeigt eine schematische Blockdarstellung einer Projektionsvorrichtung 2 mit mindestens einer Lichtquelle 4 und einem Array von optischen Kanälen 6, 6a, 6b. Jeder Kanal weist eine erste refraktive optische Freiformfläche 8a, 8b und eine zweite refraktive optische Freiformfläche 10a, 10b sowie eine Projektionsoptik 12 auf. Die erste und die zweite refraktive optische Freiformfläche 8, 10 sind zwischen der Lichtquelle 4 und der Projektionsoptik 12 angeordnet und bewirken eine Köhlersche Beleuchtung der Projektionsoptik 12 von einer Lichtobjektstruktur 13, (sowohl reelle Lichtobjektstrukturen 13a, 13b, als auch virtuelle Lichtobjektstrukturen 13a', 13a", 13b', 13b"), die in einer Bildfläche der Projektionsoptik 12 das zu projizierende Bild 14a, 14b ergeben, wobei sich Bilder des Arrays der optischen Kanäle 6 überlagern. Die Lichtquelle 4 ist ausgebildet, Licht 16a, 16b, das gemäß Ausführungsbeispielen, divergentes oder kollimiertes Licht, inkohärentes oder kohärentes bzw. partiell kohärentes Licht, monochromatisches, polychromatisches oder weißes Licht, d.h. Licht mit einer bestimmten spektralen Verteilung sein kann, auszusenden und in die optischen Kanäle 6 zu leiten. Dort trifft das Licht 16 zunächst auf die erste optische Freiformfläche 8 und dann auf die zweite optische Freiformfläche 10 auf. Die zweite refraktive optische Freiformfläche 10 ist demnach nach der refraktiven optischen Freiformfläche 8 angeordnet, wobei die räumlichen Bezeichnungen "vor" und "nach" sich auf die Ausbreitungrichtung bzw. das Auftreffen des Lichts 16 auf das jeweilige Element beziehen.

Die refraktiven optischen Freiformflächen können gemäß Ausführungsbeispielen sowohl reelle Lichtobjektstrukturen 13a,13b als auch virtuelle Lichtobjektstrukturen 13a',13b'13a"13b" erzeugen. Die Projektionsoptik bildet die anvisierte Lichtobjektstruktur auf das Target ab, indem die Objektebene der Projektionsoptik in die ausgewählte Lichtobjektstruktur gelegt wird. Im Falle von virtuellen Lichtobjektstrukturen erhält zwar die Projektionsoptik 12 die von den refraktiven optischen Freiformflächen gebildete reelle Lichtstruktur, jedoch wird eine Objektebene/Objektfläche der Projektionsoptik 12 zwischen der Lichtquelle 4 und der zweiten refraktiven optischen Freiformfläche 10 angeordnet, so dass die Projektionsoptik die virtuelle Lichtstruktur in der Objektebene gemäß der reellen Lichtstruktur der refraktiven optischen Freiformflächen abbildet.

Als Lichtobjektstruktur wird diejenige Lichtstruktur angesehen, die von der Projektionsoptik abgebildet wird. In anderen Worten ist die Lichtobjektstruktur also das Objekt bei der Abbildung mit der Projektionsoptik, wobei im Gegensatz zu herkömmlichen Arrayprojektoren kein Dia, sondern eine Lichtverteilung verwendet wird.

Als Lichtstruktur bzw. Lichtverteilung soll ferner eine (aktuelle) räumliche Verteilung des Lichts angesehen werden. Diese wird zu einer Lichtobjektstruktur, falls sie für eine Abbildung vorgesehen ist. Als besonders wichtige Lichtobjektstruktur können solche Lichtstrukturen betrachtet werden, die besonders viel räumlich hochfrequente Information, wie z.B. scharfe Kanten, hohe Kontraste, steile Flanken, große Helligkeitsmodulationen, enthalten können. Solche Lichtstrukturen haben somit geringe Verwaschungs- und Verschmierungseffekte. Sie können einerseits entstehen, wenn Licht von einem realen Objekt herrührt. Von jedem Objektpunkt werden Strahlen herrühren. Es entsteht eine Korrelation zwischen Strahlort und Winkel. Beispielsweise entsteht bei Durchstrahlen eines absorptiven Dias eine räumliche Lichtverteilung weitestgehend unabhängig vom Strahlwinkel, d.h. wir haben für alle Strahlwinkel eine quasi gleiche räumliche Verteilung, deren Überlagerung z.B. durch eine Abbildung eine scharfe Struktur ergeben können. Ähnliche Lichtstrukturen mit speziellen Abhängigkeiten zwischen Strahlort und -winkel können auch losgelöst von realen Objekten, wie Dias, durch Lichtumverteilung und Lichtstrahlsteuerung erzeugt werden und ermöglichen räumlich hochfrequente Beleuchtungsmuster. Diese Lichtobjektstrukturen mit geringsten Verwaschungseffekten sind besonders wichtig, da mit hoher Effizienz räumlich hochfrequente Beleuchtungspattern erzeugt werden können.

Fig. 2 zeigt ferner die reelle Projektionsfläche 18, auf der die Bilder 14a, 14b zu einer Gesamtlichtverteilung bzw. einer Gesamtabbildung oder einem Gesamtbild überlagert werden können. Gemäß nicht zur Erfindung gehörenden Vergleichsbeispielen kann die Projektionsoptik die Bilder 14a, 14b jedoch auch auf ein virtuelles Target abbilden, so dass erst im Unendlichen bzw. mit einer weiteren Optik ein reelles Gesamtbild entsteht.

Die erfindungsgemäße Projektionsvorrichtung 2, im Folgenden häufig Freiform-Array-Projektor oder Strahlformer/Projektionseinheit genannt, stellt ein neues optisches Konzept dar, welches sehr flache Optiken mit gleichzeitig hohem Lichtstrom und hoher Systemtransmission/Leistungseffizienz ermöglicht, wobei beliebige Lichtverteilungen mit hohen Auflösungsanforderungen auf reellen bzw. virtuellen Targets generiert werden und simultan das Köhlerscher Beleuchtungsprinzip sowie Quelllichthomogenisierung angewendet werden können. Die beispielhafte Realisierung in Fig. 2 zeigt schematisch eine Lichtquelle 4 oder eine Lichtquelleneinheit (subsummiert Lichtquellen und potentielle Primäroptiken), aus welcher Licht 16 emittiert wird und auf Arrays mit jeweils zwei Beleuchtungsfreiformen in jedem Arraykanal trifft. Bei der hier betrachteten Realisierung befinden sich die einfallsseitig ersten Freiformflächen auf der Endseite eines optischen Substrats/Elements und die einfallsseitig zweiten Freiformflächen auf der Eintrittsseite eines zweiten, nachfolgenden optischen Substrats/Elements. Es werden hierfür vorteilhaft transparente, refraktive Materialien eingesetzt. Die Oberflächenstrukturen der beiden Freiformen pro Kanal sind derart gestaltet, dass durch Lichtbrechung einerseits eine reelle oder virtuelle Lichtobjektverteilung innerhalb der Optik erzeugt wird und andererseits das Licht gemäß der Köhlerschen Beleuchtung auf die zugehörige Projektionslinse/optik fällt.

In anderen Worten kann die erste und die zweite optisch refraktive Freiformfläche 8, 10 ausgebildet sein, basierend auf einer reellen Lichtstruktur 13a eine virtuelle Lichtobjektstruktur 13a' in dem optischen Kanal 6a - 6i zwischen der Lichtquelle 4 und der zweiten refraktiven optischen Freiformfläche 10 zu erzeugen, wobei die virtuelle Lichtobjektstruktur eine Abbildung des zu projizierenden Bildes ist und wobei die reelle Lichtstruktur nach dem Durchstrahlen der ersten und der zweiten refraktiven optischen Freiformfläche entsteht.

In den Insets 8i, 10h der Fig. 2 sind exemplarisch zwei Oberflächenprofile zu sehen. Leicht zu erkennen sind Oberflächendeformationen, die den Buchstaben "IOF" zuzuordnen sind. Diese Oberflächendeformationen erzeugen durch rein refraktive Lichtumverteilung eine optikinterne Lichtstruktur mit begrenzter Auflösung. Diese Lichtstrukturen werden mittels des nachfolgenden Projektionslinsenarrays 12 durch optische Abbildung auf ein Target 18 überführt. Auf dem Target entsteht die helle Buchstabenfolge "IOF" auf einem dunkleren Hintergrundfeld. Die Buchstaben auf dem Target weisen trotz oben angesprochener Verwaschungseffektminimierung möglicherweise keine scharfen Strukturkanten auf. Um viel feinere Lichtstrukturen auf dem Target zu generieren, werden zusätzlich transmissionsmodulierte Strukturen 20 eingesetzt. In dem gezeigten Ausführungsbeispiel kommen Blendenstrukturen mit Wellenlinien auf dem zweiten optischen Substrat/Element zum Einsatz. Die Erzeugung von solch feinen Targetverteilungen mit ausschließlicher Freiformlichtumverteilung ist auf Grund von verbleibenden Verwaschungseffekten bislang nicht möglich. Allerdings kann die Blendenstruktur durch Freiformlichtumverteilung in geeigneter Weise ausgeleuchtet werden, so dass Leistungsverluste minimiert werden. In Ausführungsbeispielen generieren die beiden Beleuchtungsfreiformen pro Kanal eine größere Beleuchtungsstärke im Bereich der Durchlassgebiete der Blenden. Die nach der Blende entstehende, reelle Lichtstruktur, welche sowohl durch Abblendung als auch Lichtumverteilung entstanden ist, wird durch die jeweilige Projektionslinse des Kanals mit einer gewissen bzw. ausreichenden Abbildungsschärfe auf das Target 18 abgebildet. Bei dem Realisierungsbeispiel sind die Lage der schärfsten Lichtobjektstruktur für die Buchstabenfolge "IOF" nicht mit der Dia-Ebene identisch. Aus diesem Grund wurde die Objektebene der Projektionsoptik zwischen die potentiell schärfsten "IOF"-Lichtobjektstruktur und die Dia-Ebene gelegt. Hierdurch wird eine vergrößerte Verwaschung der Buchstabenfolge in Kauf genommen. Auch das Bild des Dias ist mit einem Defokus behaftet. Im hier dargestellten Ausführungsbeispiel des Freiform-Array-Projektors 2 beleuchten alle Kanäle das gleiche Targetgebiet mit quasi gleichen Einzellichtverteilungen, d.h. hierdurch wird der maximale Grad an Quelllichthomogensierung ermöglicht. Die Kanalüberlagerung kann z.B. durch refraktive Lichtablenkungswirkungen innerhalb der einfallsseitig ersten beiden Freiformen erreicht werden. Auch ein konventioneller Versatz von objekterzeugenden Strukturen und Projektionslinsen sowie die Kanalanordnung auf gekrümmten Flächen (siehe unten) kann hierfür angewendet werden. Die Anwendung des Köhlerschen Beleuchtungsprinzips pro Kanal wurde in Fig. 2 aus Gründen der Übersichtlichkeit nicht veranschaulicht — wird aber in den folgenden Abbildungen verdeutlicht.

Die Fig. 3 veranschaulicht die Wirkungsweise eines Einzelkanals 6a (hier ohne Kanalneigung) aufgeschlüsselt auf die Wirkung von drei refraktiven Flächen und einer Blendenstruktur 20a. Das Licht 16a, kommend von kollimierten Quellen, fällt auf eine erste refraktive Freiformfläche 8a. Hier befindet sich diese Freiformfläche auf der Austrittsseite eines optischen Elements 22 (z.B. Austrittsseite eines optischen Substrats). Diese Freiformfläche erzeugt durch Lichtumverteilung eine räumliche Intensitätsstruktur bzw. eine Beleuchtungsstruktur, d.h. das Licht wird in geeigneter Weise so refraktiv umgelenkt, dass entsprechend einer Zielverteilung eine intensitätsmoduliertes Lichtverteilung entsteht. Dies geschieht (bei Vernachlässigung von Fresnelverlusten) im Idealfall mit einer Effizienz von 100%. In der Fig. 3a wurde diese Lichtverteilung 14a' kurz nach der ersten Freiformfläche (siehe Graustufenbilder oben) für sowohl geradeaus kollimiertes Einfallslicht als auch geneigt, kollimiertes Einfallslicht detektiert. Die Detektorlage 24 wird durch die dicke Linie kurz nach der ersten Freiformfläche veranschaulicht. Die Lichtumverteilung erfolgt durch entsprechende Strahlrichtungsänderungen, so dass beispielweise ein ursprünglich in der optischen Achse ideal kollimiertes Einfallslicht nun nach der Freiform ein gewisses Strahlwinkelspektrum aufweist (siehe Fig. 3a links). Neben der Lichtumverteilung wird die erste Freiformfläche noch zusätzlich immer eine generelle Lichtkonvergenz erzeugen müssen, damit zur optischen Achse geneigtes Einfallslicht exklusiv auf die zweite Freiformfläche des gleichen Optikkanals trifft und somit kein Übersprechen im Freiformbereich erfolgt. Allerdings kann durch eine einzelne Freiform nicht gewährleistet werde, dass die intensitätsmodulierte bzw. transmissionsmodulierte Lichtverteilung vollständig die für den Kanal vorgesehene Projektionslinse trifft. Dies verdeutlicht das rechte Bild der Fig. 3a. kollimiertes, aber zur optischen Achse stärker geneigtes Einfallslicht wird sich letztlich teilweise außerhalb des für die Projektorlinse 12a vorgesehenen Raumbereichs befinden.

Ein Übersprechen im Bereich der Projektionslenslets wäre damit nur bei einem stark eingeschränkten Einfallswinkelspektrum vermeidbar.

Um das Licht in definierter Form auf die Projektionslinse/Projektionsoptik zu bringen, ist eine zweite Freiformfläche nötig. In Ausführungsbeispielen befindet sich diese Freiformfläche auf der Eingangsseite eines zweiten optischen Elements 26 (z.B. Eintrittsfläche eines weiten optischen Substrats, siehe Fig. 3b). Eine günstige Variante hierfür ist, die Lichtquelle 16a entsprechend des Köhlerschen Beleuchtungsprinzips in die Eingangspupille der Projektionsoptik 12a aberriert abzubilden (siehe Fig. 3b, c). Die zweite Freiformfläche muss somit die Strahlrichtungen der intensitätsstrukturierten Lichtverteilung in geeigneter Weise umlenken.

Die Wirkung der den beiden Freiformflächen folgende Projektionsoptik 12a (im Ausführungsbeispiel der Fig. 3 nur eine Projektionslinse) kann auf zwei verschiedenen Weisen verstanden werden. Die beiden ersten Freiformflächen generieren eine intensitätsstrukturierte Lichtverteilung mit zusätzlicher Beeinflussung der Strahlwinkel. Die gemeinsame Wirkung der beiden Freiformflächen ergibt eine minimal verwaschene Objektlichtstruktur trotz divergenten Lichteinfalls. In unserem Falle ist dies eine virtuelle Objektstruktur in der Nähe der zweiten Freiformfläche. Eine genauere Veranschaulichung der besten Objektstruktur erfolgt in den Fig. 4, 5. Die Projektionslinse bildet nun diese virtuelle Objektstruktur auf das Target ab. Die zweite Erläuterungsmöglichkeit ist in den Fig. 3b, c dargestellt. Für kollimiertes Eingangslicht entlang der optischen Achse des Kanals (oder Mittenachse, falls eine optische Achse schwer zu definieren ist) wird durch die beiden Eingangsfreiformen eine gewünschte Lichtstruktur 14a" auf dem Target erzeugt. Hierfür wird bislang keine Projektionslinse 12a benötigt (siehe Fig. 3b links und rechts). Für geneigt kollimiertes Licht wird ohne Projektionslinse ein aberriertes, aber hauptsächlich verschobenes Targetbild 14‴ erzeugt. (siehe Fig. 4c rechts). Die Projektionslinse verhindert einerseits die Verschiebung des Targetbildes (siehe Fig. 4b), d.h. verringert den Haupteffekt für die Verschmierung von strukturierten Beleuchtungsverteilungen, und andererseits werden Aberrationen verkleinert. Ferner können weitere Aberrationen auftreten, die eine vollständige Vermeidung von Verwaschungseffekten der Lichtverteilung verhindern. Die Fig. 3d, e verdeutlichen die zunehmende Verschmierung einer Targetlichtverteilung bei vergrößerter Winkeldivergenz des Einfallslichts. Die Projektionsoptik ist hier auf eine numerische Apertur von ca. +-7° ausgelegt. Bei einer Eingangsstrahlwinkeldivergenz von +-4.5° (siehe Fig. 3d) wird die Projektionslinse noch nicht vollständig mit Licht ausgefüllt, d.h. die Etendue wird durch die Optik noch merklich vergrößert. Eine geringe Verwaschung der Lichtverteilungsstruktur ist vorhanden (Vergleiche die rechten Bilder in Fig. 3b und 3d). Ohne Projektionsoptik entstünde eine extreme Lichtverteilungsverwaschung auf dem Target (siehe Fig. 3d links), so dass in solchen Fällen feinere Strukturauflösungen durch rein refraktive Wirkung unmöglich sind. Bei vergrößerter Eingangswinkeldivergenzen von ~ +-6 ° nahe der maximal erreichbaren Winkelgrenze von +-7° (Etendue-Erhaltung) werden schon merkliche Verwaschungseffekte durch Aberrationen sichtbar (Fig. 3e). Nichtsdestotrotz sind diese Strukturverschmierungseffekte um Größenordnungen geringer als für herkömmliche Ein- und Zweiflächen Freiformstrahlformungen [Zwick,Feng,Ries,Oliker]. Somit bewirkt das Zusammenspiel der beiden refraktiven Freiformelemente und der Projektionslinse eine extreme Verringerung von Verwaschungseffekten. Detailliertere Erläuterungen der Hauptursachen für die verbleibende Strukturverschmierung werden weiter unten an Hand der Fig. 4,5 dargelegt.

Zur Erzeugung von scharfen Beleuchtungsstrukturen können zusätzlich transmissionsmodulierte Strukturen 20a (wie z.B. absorptive/reflektive Blenden, Graustufenfilter etc.) eingesetzt werden (siehe Fig. 3f). In der Fig. 3f wurde die Projektionsoptik so eingestellt, dass sich die ideale Objektebene für die Projektionsabbildung zwischen den beiden ersten Freiformflächen befindet. Somit sind die Blendenstrukturen 20a in der Fig. 3f links außerhalb der idealen Objekteben der Projektsionsoptik/Projektsionslinse, was zu einer unscharfen Abbildung der Blendenstruktur infolge eines Defokus führt. Hingegen werden die Blendenstrukturen zwischen den beiden ersten Freiformlinsen etwas schärfer auf die Targetebene abgebildet. Weitere Blendenstrukturen können zur Stör- und Streulichtminimierung dienen (siehe unten Fig. 9, 14-18). Durch das Zusammenspiel von refraktiver Freiformstrahlformung und transmissionsmodulierte Strukturen können scharfe Lichtstrukturen auf dem Target bei gleichzeitig großer Effizienz erreicht werden. Die Freiformstrahlformung kann angepasste Beleuchtungen der transmissionsmodulierten Strukturen generieren, so dass Letztere nur wenig Licht wegblenden muss.

Im einfachsten Fall besteht die Projektionsoptik 12 aus einer sphärischen, einer konischen oder aspärischen Einzelprojektsionslinse, die mit genügend guter Abbildungsqualität eine Objektlichtverteilung (erzeugt durch Freiformstrahlformung oder durch Blendenstrukturen) in das Target überführt. Reicht die Abbildungsqualität, z.B. infolge von großer, benötigter numerischer Apertur oder Farbfehler, nicht aus, kann auch ein Mehrflächenprojektionsobjektiv angewendet werden. Im Falle von kompliziert verteilten "Objektlichtstrukturen" als auch bei nichttrivialen Targetformen sind weitere Freiformflächen in der abbildende Projektionsoptik förderlich (siehe Fig. 5e).

In der Fig. 4 wird beispielhaft die Lage einer effektiven, virtuellen Objektstrukturebene bei der Freiformstrahlformung eines Einzelkanals 6a veranschaulicht. Auf das optische Element fällt rel. stark divergentes Licht 16a (siehe Pfeile in Fig. 4 unten, entspricht fast maximalem Winkelspektrum für den betrachteten Arrayprojektor infolge der Etendue-Erhaltung), welches durch die eingangsseitig ersten beiden Freiformflächen 8a, 10a (siehe Freiformflächen in Fig. 4, restliche Elemente des Strahlformers/Projektoreinheit sind nicht dargestellt) umverteilt wird. Betrachtet man die reale bzw. reelle Lichtverteilung 13a direkt nach der eingangsseitig zweiten Freiformfläche in der gestrichelt umrandeten Ebene 15a, so ist ein extrem verwaschenes, kaum identifizierbares Lichtmuster zu erkennen (siehe Graustufenbild 13a zu obersten, gestrichelt umrandeten Ebene 15a). Die Lichtverwaschung ist Ausdruck der starken Strahlwinkeldivergenz. Startend von diesem realen Lichtmuster werden nun alle Lichtstrahlen entsprechend ihrer Strahlrichtung rückwärts verlängert, d.h. wir untersuchen im Folgenden die Eigenschaften von virtuellen Lichtstrukturen 13a', 13a". Die Lichtstruktur, die zur Abbildung ausgewählt wird (anhand der Einstellung bzw. Form der Projektionsoptik) ist dann die Lichtobjektstruktur 13a', 13a". Es zeigt sich, dass trotz starker Einfallslichtdivergenz eine gering verwaschene, virtuelle Lichtobjektstruktur mit einer Objektlage in Richtung der eingangsseitig ersten Freiformfläche für unser Beispiel existiert.

Die Abbildung dieser virtuellen, minimal verwaschen Objektstrukturebene in das Target führt zu den schärfst möglichen Lichtmustern bei exklusiver Lichtumverteilung und konventioneller Abbildungstransformation (Abbildung von einer Objektebene in eine Bildebene). Die Lage der besten Objektstrukturebene ist durch gezieltes Design steuerbar.

In der Fig. 5 werden einige wesentlichen Eigenschaften des Freiform-Array-Projektors an Hand eines Systems mit einem Target im Unendlichen (Fernfeld) veranschaulicht. Es werden mittels eines vereinfachten Modells grobe Abschätzungen von Kenngrößen angegeben, und es erfolgt eine Abgrenzung zum konventionellen Arrayprojektor [DE 102009024894 A1, DE 102011076083 A1, Sieler]. In Bezug auf den Freiform-Array-Projektor 2 werden hier ausschließlich refraktive Lichtumverteilungsprozesse (ohne den Einsatz von transmissionsmodulierten Strukturen) beachtet. Weiterhin werden diesen Betrachtungen auf paraxiale Näherungen beschränkt, was auch moderaten Lichtumverteilungsprozessen entspricht. Der Anwendungsbereich des Freiform-Array-Projektors besteht natürlich auch jenseits dieser Approximationen.

Die Fig. 5a zeigt einen prinzipiellen Aufbau eines Einzelkanals des konventionellen Arrayprojektors mit einer rechtsseitigen Kondensorlinse 30, einer darauffolgenden Diastruktur 32 und einer abschließenden Projektionslinse 34. Die Lenslets haben eine freie Apertur *CA* und befinden sich auf einem Substrat der Dicke ~ $H_{sub}$ 17f. Kollimiertes Einfallslicht mit einer Lichtdivergenz von $\delta\theta_{col}$ fällt auf die Kondensorlinsen. Die Kondensorlinsen arbeiten entsprechend des Köhlerschen Beleuchtungsprinzips und bilden approximativ die Quellverteilung in die Eingangspupille der Projektionsoptik ab. Für den in Fig. 5 dargestellten Spezialfall bedeutet dies für eine paraxiale Abschätzung, dass die rechtsseitige Kondensorbrennweite im Substratmaterial $F'_{cond}$ betraglich annähernd mit der Substratdicke $H_{sub}$ übereinstimmen muss $F'_{cond} \sim -H_{sub}$ (Konvention: siehe [Born-Wolf]). Hieraus ergibt sich eine Forderung an die Kollimationsoptik. Um ein Übersprechen zwischen den einzelnen Projektorkanälen zu verhindern, darf ein maximaler Eingangsdivergenzwinkel von $\delta\theta_{col}^{\max}$ mit

$$\delta Y \sim \delta\theta_{col}^{\max} F_{cond} \cong CA \quad \text{und} \quad F_{cond} \sim n_{sub} H_{sub} \tag{1}$$

nicht überschritten werden. $n_{sub}$ ist die Substratbrechzahl. Für die Erzeugung von vorgegebenen Bestrahlungsstärkeverteilungen *E(x,y)* auf dem Target werden in der Regel in Diastrukturen kurz nach den Kondensorlenslets 30 eingesetzt. Die Diastrukturen werden durch die Projektionslenslets auf das Target scharf abgebildet. Für den hier betrachteten Spezialfall eines Targets im Fernfeld muss somit die linksseitige Brennweite der Projektionsoptik annähernd mit der Substratdicke übereinstimmen $F_{pro} \sim H_{sub}$. Konventionelle Aberrationen bei der Abbildung $\delta\theta_{ab}^{pro}$ werden zu Bildfehlern / Verwaschungen der Lichtverteilung auf dem Target führen

$$\delta\theta_{blur} \sim \delta\theta_{ab}^{pro}. \tag{2}$$

Bei zu starken Aberrationen einer einzigen Projektionslinse können prinzipiell Mehrlinsenanordnungen verwendet werden, was allerdings zu viel komplexeren Optiken führt.

Ein vollständig geöffneter Arrayprojektor, also ohne transmissionsmodulierte Strukturen, wird im Wesentlichen eine konstante Bestrahlungsstärke $\overline{E}$ hervorbringen (moderate Feldwinkel, Vernachlässigung des moderaten Bestrahlungsstärkeabfalls). Eine vollständige Umverteilung der vorhandenen Leistung $\overline{E}A_{\mathrm{targ}}$ auf eine gewünschte, strukturierte Bestrahlungsstärkeverteilung $E_{ideal}\,(x, y)$ unter Annäherung an die Energieerhaltung

$$\iint\limits_{\mathrm{Target}} E_{ideal}\left(x,y\right)dxdy=\overline{E}A_{\mathrm{targ}}\,. \qquad (3)$$

wäre im Idealfall für eine Beleuchtung erstrebenswert. $A_{\mathrm{targ}}$ ist die Größe der Targetfläche. Mit dem konventionellen Arrayprojektor kann natürlich solch eine Leistungsumverteilung nicht erreicht werden, da gewünschte Lichtstrukturen nur durch das Abblenden von Lichtleistung erzeugt werden können. Die maximale Bestrahlungsstärke kann nur $\overline{E}$ sein, was einem vollständigen Lichtdurchlass entspricht. Damit wird die Bestrahlungsstärke eines konventionellen Arrayprojektors mit gleicher Topologie wie in Gleichung (3) durch $E_{proj}^{conv}\left(x,y\right)=E_{ideal}\left(x,y\right)\overline{E}\,/\max\left(E_{ideal}\right)$ gegeben sein. Hieraus folgt eine Abschätzung für die zugehörige, maximale Leistungseffizienz bei strukturierter Beleuchtung:

$$Eff_{proj}^{conv}=\frac{\overline{E}}{\max\left(E_{ideal}\right)}. \qquad (4)$$

Sehr enge, hochintensive Lichtstrukturfeatures bedeuten sehr große Maximalwerte max($E_{ideal}$) in der leistungsnormierten Bestrahlungsstärkeverteilung und führen zu sehr kleinen, möglichen Leistungseffizienzen. Diese feinen hochintensiven Lichtstrukturen werden z.B. durch eine Vielzahl von Arraykanälen mit sehr kleinen Blendenöffnungen *B* erreicht oder durch größere, stärkere Absorptionsbereiche von Graustufenfiltern. Allerdings wird der max. Akzeptanzwinkel der Optik, also die notwendige Lichtkollimation $\delta\theta_{col}^{\max}$, für alle möglichen Kanäle gleich bleiben, d.h. Gleichung (1) ist unabhängig von gewünschten Lichtstrukturverteilung.

Beim hier vorzustellenden Freiform-Array-Projektor 2 wird in jedem Arraykanal 6a das Kondensorlenslet durch zwei, zugehörige Freiformstrukturen ersetzt (siehe Fig. 5b, c, d). In der Fig. 5 befinden sich diese Freiformen auf der Ausgangsseite und der Eingangsseite zweier Substrate. Gemäß des Köhlerschen Beleuchtungsprinzips erzeugen beide Freiformflächen ein konvergentes Lichtbündel bei ideal kollimiertem Einfallslicht entlang der optischen Achse der Projektionsoptik (siehe Fig. 5b). Eine Bestrahlungsstärkeverteilung auf dem Target (oder auf einer Blendenebene) kann nun zusätzlich mittels einer Leistungsumverteilung innerhalb des konvergenten Gesamtlichtbündels ermöglicht werden (siehe Fig. 5c, d). Diese Lichtumverteilungen bei gleichzeitiger Beachtung der Strahlwinkel können durch Modifikation von entsprechenden Freiformdesignmethoden [Michaelis,Feng, Rubinstein] ermöglicht werden. Neben den mathematisch komplexeren Designmethoden können vereinfachter Modellüberlegungen helfen, einerseits das Verständnis über die Wirkungsweise des Freiform-Array-Projektors zu erhöhen und andererseits Kenngrößen abzuschätzen.

Um eine lichtintensive Teilstruktur auf dem Target zu generieren, wird Einfallslicht 16a von einem gewissen Einfallsbereich (siehe $I_2$ 16a" in Fig. 5c) auf einen kleinen Ausgangswinkel $\delta\theta_2^{cone}$ komprimiert. Hingegen werden Regionen kleiner Bestrahlungsstärke durch Aufweitung eines Eingangslichtteilbündels (siehe $I_1$ 16a' in Fig. 5d) in einen zugehörigen Ausgangslichtkegel mit $\delta\theta_1^{cone}$ erzeugt. In der Regel werden solche Lichtumverteilungsbereiche eine infinitisimale Größe aufweisen. Der Einfachheit halber wurden beide Szenarien in Fig. 5c,d genau im zentralen Bereich eines Optikkanals veranschaulicht. Durch die Wirkung der beiden Freiformflächen können nun jedem (infinitisimalen) Umverteilungsbündel lokale Brennweiten ( $F_{1,2,3...}^{free}$ 17a, 17b) mit entsprechenden lokalen Hauptebenen ( $LP_{1,2,3...}^{free}$ 17c, 17d) zugeordnet werden. Im Fortfolgenden wird zur Vereinfachung der Darstellung vernachlässigt, dass in unterschiedlichen Bündelschnittebenen unterschiedliche Brennweiten auftreten können. Lichtumverteilungsbereiche mit Lichtkompression, also Beleuchtungsstärkeerhöhung, werden größere effektive Brennweiten und einen größeren Abstand zur Projektionslinse besitzen (siehe $F_2^{free}$ 17a und $LP_2^{free}$ 17c in Fig. 5c). Dies kehrt sich für Lichtumverteilungsbereiche mit Bündelaufweitung, also Beleuchtungsstärkeerniedrigung, um (siehe $F_1^{free}$ 17b und $LP_1^{free}$ 17d in Fig. 5d). Die Wirkung beider Freiformflächen entspricht somit der Generation unterschiedlicher intensiver Teillichtbündel, deren Bündelrichtung und Größe der Ausgangslichtkegel $\delta\theta_{1,2}^{cone}$ 19a, 19b durch die unterschiedlichen, lokalen Hauptebenenlagen 17c, 17d bestimmt wird (Bem.: Der Einfachheit halber wird hier nur die rechtsseitige Hauptebene betrachtet). Die Verteilung der verschiedenen Hauptebenen / Brennweiten kann grob abgeschätzt werden durch

$$F'_{free} \sim -H_{sub}^{\mathrm{mod}}\sqrt{K(x,y)} \qquad K(x,y) = \frac{E_{ideal}(x,y)}{\overline{E}}. \qquad (5)$$

$K(x, y)$ ist ein Maß für die Lichtumverteilung. Eine Bestrahlungsstärkevergrößerung/- verkleinerung im Vergleich zum Mittelwert $\overline{E}$ äußert sich in Werten von $K > 1$ / $K < 1$. Für eine homogene Ausleuchtung $\overline{E}$ ergibt sich eine Brennweite $F'_{free} \sim -H_{sub}^{\mathrm{mod}}$ analog zum konventionellen Arrayprojektor. In $H_{sub}^{\mathrm{mod}}$ wird berücksichtigt, dass gemäß Fig. 5b das Gesamtlichtbündel schon ab der ersten Freiform 8a eine Konvergenz aufweist, d.h. man startet generell von einer größeren effektiven Brennweite. $H_{sub}^{\mathrm{mod}}$ berechnet sich aus der Brechung des Lichtes entsprechend herkömmlicher Brechungsgesetzte an der ersten und zweiten optischen Fläche ohne Lichtumverteilung. Hier wurde die Optik so eingerichtet, dass $H_{sub}^{\mathrm{mod}}$ sich im Wesentlichen aus der Substratdicke $H_{sub}$ 17f und dem Abstand D 17g der ersten und der zweiten refraktiven optischen Freiformfläche zusammensetzt. Für die Abschätzung (5) wurde eine Vielzahl von Näherungen / Idealisierungen angewendet, u.a. werden keine potentiell unterschiedlichen Brennweiten in unterschiedlichen Bündelschnittebenen (Hauptschnitte) berücksichtigt.

In Analogie zum konventionellen Arrayprojektor (siehe Gl. (1)) können nun mittels Gl. (5) Abschätzungen für die maximal zulässigen Eingangsdivergenzwinkel abgeleitet werden. Da bei der Freiformumverteilung unterschiedlich lichtintensive Bereiche verschiedene effektive Brennweiten und Hauptebenlagen besitzen, werden zugehörige Lichtbündel bei einer geneigt, kollimierten Einstrahlung (siehe Fig. 5c,d) unterschiedlich große Ablenkungen 17g $\delta Y \sim \delta\theta_{col} F_{free} \sim \delta\theta_{col} n_{sub} H_{sub}^{\mathrm{mod}} \sqrt{K}$ auf der Projektionsoptik erfahren. Die Fig. 5c veranschaulicht, dass Lichtteilbündel mit größerer Beleuchtungsstärke stärker abgelenkt werden. Um generell ein Übersprechen zu vermeiden, dürfen Auslenkungen von Lichtbündeln mit der maximalen Beleuchtungsstärke ($K_{max}$) die freie Apertur nicht überschreiten. Damit ist eine Lichtumverteilung immer mit einer verringerten zulässigen Eingangswinkeldivergenz $\delta\theta_{col}^{\max}$ 19c gemäß

$$\delta Y \sim \delta\theta_{col}^{\max} F_{free}^{\max} \sim \delta\theta_{col}^{\max} n_{sub} H_{sub} \sqrt{K_{\max}} \cong CA \qquad (6)$$

verbunden. Dies ist Ausdruck der Etendueerhaltung. Für die betrachtete Kleinwinkelapproximation entspricht das Maß der Lichtumverteilung *K(x, y)* auf dem Target auch approximativ der Lichtumverteilung im Bereich der Freiformlinsen (vernachlässigbare projektive, abbildungsinduzierte Veränderungen). Die Lichtumverteilung kann als ein Mapping von ursprünglichen transversalen Koordinaten $(x_1,y_1)$ auf verzerrte Koordinaten $(x_2,y_2)$ entsprechend der Jacobi-Matrix $\partial[x_2y_2] / \partial[x_1y_1] \sim K$ [Oliker, Sulman] aufgefasst werden. Auf Grund der Erhaltung des Phasenraumvolumens $dx_i\, dy_i\, dp_i dq_i = const$ [Winston] werden sich die zugehörigen transversalen Komponenten der Strahlvektoren $(p_i, q_i)$ wie $\partial[p_2q_2] / \partial[p_1\, q_1] \sim 1/K$ verhalten. Eine Kompression des Phasenraumes in den Ortkoordinaten wird gleichzeitig mit einer Ausdehnung in den Strahlvektorkomponenten verbunden. Wir erhalten somit über Etendueerhaltung eine analoge Aussage wie in Gl. (6).

Die durch die Lichtumverteilung generierten Lichtbündel mit unterschiedlichem Leistungsdichteinhalt starten natürlich auf der Eintrittsfläche der ersten Freiform 8a. Jedes infinitisimale Lichtbündelintervall genau auf der ersten Freiform kann somit als Eingangsapertur für das zugehörige Lichtbündel angesehen werden. Auf diese Eingangsapertur trifft das Einfallslicht mit unterschiedlicher Einfallsrichtung $\delta\theta_{col}$. Die Abbildung dieser Eingangsapertur mit der zugehörigen effektiven, lokalen Brennweite $F_{1,2}^{free}$ ergibt eine lokale Lichtobjektteilstruktur mit maximaler Schärfe, d.h. für jedes Umverteilungsintervall scheint das Licht mit allen Strahlwinkeln von einer effektiven Lichtobjektteilstruktur herzurühren. In der Fig. 5 wurden diese Lichtobjektteilstrukturen durch fette Punkte 19 gekennzeichnet. Die Lage aller Lichtobjektteilstrukturen mit minimaler Verwaschung kann durch die zugehörige Abbildungsgleichung bei der Abbildung der effektiven Eingangsapertur abgeschätzt werden. Gemessen von der Eingangspupille der Projektionsoptik ergibt sich ein Abstand $L_{obj} \sim -H_{sub}^{\mathrm{mod}} - H_{sub}^{\mathrm{mod}} \left(\sqrt{K}-1\right)^2 / \left(2\sqrt{K}-1\right)$. Die Lage jeder Lichtobjektteilstruktur hängt vom Maß der Lichtumverteilung K ab.

Die durch die Lichtumverteilung generierte virtuelle Objektstruktur soll durch die Projektionslinse auf das zugehörige Target abgebildet werden. Bei einer konventionellen Abbildung wird in der Regel eine Objektebene (Schale) auf eine Bildebene (Schale) überführt. Da allerdings die beste Objektstruktur mit minimaler Verwaschung in der Regel eine Ausdehnung in der longitudinalen Richtung infolge lokal veränderlichen Brennweite (siehe Gl. (5)) aufweist, wird sich in paraxialer Näherung die bestmögliche Projektionsbrennweite 17e für eine Fernfeldabbildung durch einen geeigneten Mittelwert

$$F_{proj} \sim H_{sub}^{\mathrm{mod}} + H_{sub}^{\mathrm{mod}} \left\langle \frac{\left(\sqrt{K}-1\right)^2}{2\sqrt{K}-1} \right\rangle \tag{7}$$

ergeben. (.) kennzeichnet die zugehörige, anpasste Mittelungsprozedur. Mit der Gl. (7) lässt sich die Reduktion eines Hauptanteils der Verwaschung von Targetlichtstrukturen für Freiformumverteilungsoptiken abschätzen.

Bei der Verwendung von einzelnen bzw. herkömmlichen Freiformoptiken zur Generation von strukturierten Beleuchtungen [Ries, Oliker, Michaelis, Rubinstein, Feng, Wu, Luo, Zhao] für kollimierten Lichteinfall werden Verwaschungseffekte hauptsächlich durch verbleibende Strahldivergenzen $\delta\theta_{col}$ des Eingangslichts hervorgerufen, d.h. der Hauptanteil der Targetverteilungsverschmierung wird in der Größenordnung der Eingangsstrahl-Restdivergenz liegen $\delta\theta_{div}^{main} \sim \delta\theta_{col}$ [Zwick]. Hingegen wird dieser ursprüngliche Verwaschungshauptanteil durch die hier vorgestellte Optikanordnung stark reduziert. Die Fig. 5c, d veranschaulichen diesen verbleibenden Anteil der Targetverteilungsverschmierung. Da unterschiedlich intensive, virtuelle Objektanteile sich in einem unterschiedlichen Abstand zur Projektionsoptikbrennweite befinden, werden sich bei Eingangswinkelvariation verschiedene Ausgangswinkel ergeben: $\delta\theta_{col}$ ($|L_{Obj}|$ — $F_{proj}$) / $F_{proj}$, d.h. virtuelle Objektstrukturanteile in der Nähe der Projektoroptikbrennweite werden sich eine starke Verwaschungsminderung auf dem Target auszeichnen

$$\delta\theta_{div} \sim \delta\theta_{ab}^{proj} + \frac{\left|L_{Obj}\right| - F_{proj}}{F_{proj}} \delta\theta_{col} + \ldots \tag{8}$$

Ferner können in dem beschriebenen Optiksystem weitere Verwaschungseffekte auftreten, wie z.B. durch die Verschiebung der Ausleuchtung der zweiten Freiform bei verkippt kollimierten Lichteinfall.

Im Folgenden werden die groben Abschätzungsformeln für den konventionellen Arrayprojektor und den Freiform-Array-Projektor gegenübergestellt.

| | Konventioneller Arrayprojektor | Freiform-Array-Projektor |
|---|---|---|
| (I) Rechtseitige, eff. Kondensorbrennweite | $F_{cond}^{'} \sim -H_{sub}$ | $F_{free}^{'} \sim -H_{sub}^{\mathrm{mod}} \sqrt{K(x,y)}$ |
| (II) Linkseitige Projektionsoptikbrennweite | $F_{pro} \sim H_{sub}$ | $F_{proj} \sim H_{sub}^{\mathrm{mod}} + H_{sub}^{\mathrm{mod}} \left\langle \frac{\left(\sqrt{K}-1\right)^2}{2\sqrt{K}-1} \right\rangle$ |
| (III) Max. Kollimationswinkel | $\delta\theta_{col}^{\max} n_{sub} H_{sub} \cong CA$ | $\delta\theta_{col}^{\max} n_{sub} H_{sub}^{\mathrm{mod}} \sqrt{K_{\max}} \cong CA$ |
| (IV) Leistungseffizienz | $Eff_{proj}^{conv} = \frac{\overline{E}}{\max\left(E_{ideal}\right)}$ | 1 |
| (V) Maß für Verwaschungseffekte für die Targetverteilung | $\delta\theta_{blur} \sim \delta\theta_{ab}^{pro}$ | $\delta\theta_{div} \sim \delta\theta_{ab}^{proj} + \frac{\left|L_{Obj}\right| - F_{proj}}{F_{proj}} \delta\theta_{col} + \ldots$ |

Während beim konventionellen Arrayprojektor infolge der Lichtabblendung kleine Leistungseffizienzen (siehe (IV)-rechts) in vielen Anwendungsfällen auftreten, können prinzipiell mit dem Freiform-Array-Projektor auf Grund der Lichtumverteilung hohe Systemtransmissionen erwartet werden. In Spezialfällen bei exklusiver Lichtumverteilung werden Systemtransmissionen nahe 100% möglich sein (siehe (IV)-links). Allerdings erkauft man sich eine durch Lichtumverteilung erzeugte, strukturierte Bestrahlungsstärke $K(x,y) = E_{ideal}(x,y) / \overline{E}$ mit einer notwendigen Einschränkung der Winkeldivergenz des einfallenden Lichts (siehe (III)). Folglich muss bei Lichtumverteilung das Einfallslicht besser kollimiert werden, als bei der Verwendung des konventionellen Arrayprojektors. Eine verbesserte Kollimation wird wiederum nur bei einer größeren lateralen Ausdehnung der Optik erreicht. Dies entspricht der Entendue-Erhaltung. Somit wird nicht nur die Vergrößerung des Lichtstroms, sondern auch die Erhöhung der Leistungseffizienz mit einer Vergrößerung der Optikfläche einhergehen.

Beim konventionellen Arrayprojektor wird eine Objektstruktur (z.B. Dia) mit einer vorgegeben, festen Objektlage durch die Projektionslinse auf das Target abgebildet. Hingegen erscheinen für eine Lichtumverteilungsstruktur unterschiedliche Beleuchtungsstärken von unterschiedlichen longitudinalen Positionen oder Objektlagen herzurühren (siehe (I)). Damit wird man bei einer konventionellen Abbildung (eine Objektebene (Schale) auf eine Bildebene (Schale)) eine günstigste, mittlere Objektweite anwenden müssen (siehe (II)). Hieraus folgt, dass im Vergleich zur herkömmlichen Freiformlichtumverteilung [Ries, Oliker, Michaelis, Rubinstein, Feng, Wu, Luo, Zhao] eine Reduktion aber keine Elimination der Strukturverwaschungseffekte erreicht wird (siehe (V)).

Eine weitere Verringerung der Strukturverwaschungseffekte kann durch eine Anpassung der Abbildungseigenschaften der Projektionsoptik erreicht werden. Da die effektive Lichtobjektstruktur eine nichttriviale Ausdehnung in der longitudinalen Richtung aufweist (siehe Fig. 5e), also auf einer Freiformfläche 38 liegt, sind Projektionsoptiken 12a mit einer oder mehrerer Freiformflächen 12a', 12a" notwendig, um eine scharfe Abbildung auf das Target zu erreichen. In anderen Worten kann die Projektionsoptik 12a mindestens eine weitere refraktive optische Freiformfläche 12a', 12a" aufweisen, die ausgebildet ist, einen Abbildungsfehler (z.B. Verwaschungseffekte) oder eine Mehrzahl von Abbildungsfehlern in einem projizierten Bild zu korrigieren. Die Abbildungsfehler können z.B. dadurch hervorgerufen sein, dass die Lichtobjektstruktur nicht in einer Ebene sondern auf der Freiformfläche 38 liegt und somit durch die Objektebene der Projektionsoptik (ohne weitere Freiformflächen) maximal im Mittel in die Freiformfläche 38 bzw. in die Nähe der Lichtobjektstruktur gelegt werden kann.

Eine Schlüsselkomponente des neuen Beleuchtungskonzepts ist ein Array zweier gekoppelter brechender Freiformflächen, bei denen sowohl die Strahlungsintensitätsverteilung (bzw.: Beleuchtungsstärkeverteilung) als auch die Strahlenrichtungen gesteuert werden. In der Literatur besteht der typische Lösungsansatz in der Bestimmung eines geeigneten Strahl-Mapping (engl.: ray mapping) z.B. anhand eines Variationsproblems und in der anschließenden Berechnung der Oberflächen der Freiformflächen unter Verwendung dieses Mappings [Rubinstein, Feng].

Im Folgenden wird ein alternatives, relativ einfaches Verfahren vorgestellt, das auf einer Kartesisches-Oval-Darstellung (engl.: Cartesian oval representation) der Freiformflächen beruht und das manche Gedanken des hinreichend bekannten Lösungsansatzes "Supporting Paraboloid" von Oliker anpasst. Bei diesem Verfahren wird eine einzelne Freiform durch einen diskreten Satz von Kartesischen-Oval-Segmenten dargestellt, wobei ein gemeinsamer Fokus auf der Quellstruktur liegt. Die anderen Kartesischen-Oval-Foki werden auf das Beleuchtungstarget (Projektionsfläche) verteilt, d.h. sie werden zur Diskretisierung der Zielverteilung verwendet. Deshalb sind die Fokusparameter aller Oberflächen bzw. Flächensegmente festgelegt. Jedes Segment weist immer noch einen freien Parameter auf - den Parameter der optischen Weglänge, der ein Maß des Abstandes des Quellpunkts von dem Element oder ein Maß der Elementdicke ist. Eine Veränderung dieser Parameter führt zu einer Veränderung der Leistungsverteilung am Zielort. Somit können dadurch, dass der Weglängenparameter festgelegt wird, bestimmte Zielverteilungen unter Verwendung einer einzigen Freiformfläche verwirklicht werden. Diese Parameter der optischen Weglänge können anhand eines von Oliker [Oliker] vorgeschlagenen Algorithmus bestimmt werden.

Um die Strahlenrichtungen zusätzlich zu steuern, wird eine zweite Freiform benötigt. Die Laserstrahlformung kann als eines der bekanntesten Beispiele einer derartigen Freiform-Lichtumverteilung [Shealy] angesehen werden. In diesem Fall wird ein auf ideale Weise kollimierter Laserstrahl mit einer bestimmten Eingangsintensitätsverteilung auf einen kollimierten Ausgangsstrahl mit einer gewünschten Zielintensität unter Verwendung zweier Freiformflächen übertragen. Die Lichtumverteilung lässt sich wie folgt verstehen. Die erste Freiform erzeugt das gewünschte Ausgangsintensitätsmuster exakt an der zweiten Freiformfläche. Dort können natürlich die auftreffenden Strahlen nicht kollimiert sein, weil zur Lichtumverteilung Strahlrichtungsänderungen nötig sind. Deshalb verändert die zweite Freiform die Strahlenrichtung mittels Brechung auf geeignete Weise. Nun werden diese Überlegungen mit dem Verfahren einer Kartesisches-Oval-Darstellung kombiniert. Um an der zweiten Freiform eine gewünschte Intensitätsverteilung zu erzeugen, muss die erste Freiformfläche durch Ellipsoide/Koniken zerlegt werden, wobei sich die relevanten Foki exakt auf der zweiten Freiform befinden. Um nun die durch jedes Eingangssegment gesammelte Leistung zu kollimieren, wird ein zweites Ellipsoid/konisches Segment an der zweiten Freiformfläche verwendet. Die zugeordneten Foki müssen exakt an der entsprechenden ersten Freiform platziert werden. Somit werden sowohl die Eintritts- als auch die Austrittsfläche bei einem diskreten Satz von Ellipsoiden/Koniken 61, 63a zerlegt, wobei ein einzelnes Eingangssegment einem bestimmten Ausgangssegment zugewiesen wird und sich die jeweiligen Foki an dessen zugeordnetem Gegenstück befinden (siehe Fig. 6a). Die genaue Gestalt des doppelten Freiformelements hängt von den Weglängenparametern jedes Segmentpaares ab. Diese Parameter werden iterativ bestimmt. Wir beginnen mit einer ersten Vermutung für die Gestalt der zweiten Freiform. Danach werden die Weglängenparameter der Eingangssegmente 61 wie für den Fall einer einzelnen Freiform erhalten. Nun unterscheidet sich die Gesamtweglänge jedes Segmentpaares voneinander. Diese Informationen können dazu verwendet werden, den Weglängenparameter der Ausgangssegmente 63a zu verändern. Deshalb erhält man eine neue Gestalt für die zweite Ausgangsfreiform. Die Prozedur wird wiederholt, bis eine Konvergenz eintritt. Indem man die Art von Diskretisierungsgrundelementen verändert, können verschiedene Situationen einer Winkelverteilung verwirklicht werden. Falls man die Ellipsoiddarstellung an der Eingangsoberfläche beibehält und die Ellipsoide an der Ausgangsfläche durch gewöhnliche Kartesische Ovale 63b ersetzt, wird eine Strahlungsintensitätsverteilung (bzw.: Beleuchtungsstärkeverteilung) mit einem konvergierenden Strahlenbündel erzielt (siehe Fig. 6b). Nichttriviale Verteilungen der Strahlenrichtungen können unter Verwendung verallgemeinerter Ovale 63c erhalten werden (siehe Fig. 6c). Glatte Freiformflächen werden unter Verwendung einer ausreichend hohen Anzahl von Diskretisierungselementen erzeugt.

In anderen Worten kann die erste refraktive optische Freiformfläche 8 ausgebildet sein, eine räumliche Lichtumverteilung und/oder eine Steuerung der Strahlwinkel von Lichtstrahlen, die von der Lichtquelle ausgesendet werden, vornehmen. Dabei ist die zweite refraktive optische Freiformfläche ausgebildet, Lichtstrahlen gemäß der Köhlerschen Beleuchtung konvergent auf die Projektionsoptik 12 zu leiten, wobei sich die erste und die zweite refraktive optische Freiformfläche gegenseitig beeinflussen.

Die Fig. 7 zeigt einen schematischen Ausschnitt von einem Freiform-Array-Projektor 2 gemäß Fig. 2, jedoch ohne transmissionsmodulierte Strukturen (wie absorptive Blenden etc. ). Solch eine Optik kann auch als eine Verallgemeinerung des Wabenkondensors [WAKO] betrachtet werden, bei welchem die Kondensorarrayfläche durch zwei Freiform-Array-Oberflächen ersetzt wurden. Die Erzeugung eines Targetlichtmusters erfolgt ausschließlich durch refraktive Freiform-Lichtumverteilung zur Generation einer strukturierten, in der Regel (i.R.) virtuellen Lichtverteilung innerhalb eines Kanals und deren Abbildung durch die Projektionslinse auf das Target. Der Vorteil einer solchen Anordnung besteht darin, dass im Idealfall eine Transmission von 100% für vollständig entspiegelte Flächen erreicht werden kann. Zusätzlich arbeitet die Optik Nahe der Etendueerhaltung. Allerdings können hierdurch selbst mit Projektionsoptiken hoher Auflösung keine sehr scharfen Lichtverteilungen auf dem Target erzeugt werden, da die refraktiv generierte Lichtverteilung Aberrationen aufweist. Diese aberrationsbedingten Verschmierungen steigen in der Regel mit größerer Eingangswinkeldivergenz, also bei Annäherung an die potentiell approximativ mögliche Etendue-Erhaltung (siehe Fig. 3d,e). Weiterhin kann bei solchen Anordnungen Störlicht u.a. an den Übergängen der einzelnen Kanäle entstehen (z.B. infolge von herstellungsbedingten Formabweichungen). Solche Freiform-Array-Projektoren bzw. Freiform-Wabenkondensoren werden somit für Anwendungen mit eher glatten Targetzielbildern und bei gewisser Störlichttoleranz eingesetzt werden.

Die Fig. 8 verdeutlicht schematisch die Mischungs- und Homogenisierungswirkung des Freiform-Array-Projektors 2 aus Fig. 5 (Quelllichthomogenisierung / Farbmischung etc.). Das Quelllicht 16 kann von einer oder mehreren, homogenen oder strukturierten sowie monochromatischen, polychromatischen oder weiß abstrahlenden Lichtquellen herrühren. Sehr häufig sind Quellen zwar räumlich stark strukturiert, weisen aber im Winkelraum eine eher stetige Lichtverteilung auf. Aus diesem Grund wird das Köhlersche Prinzip für Beleuchtungen bevorzugt eingesetzt, bei welchem Quellwinkelverteilungen in räumliche Targetpostionen überführt werden. Die dicken, durchgezogenen Pfeile 40 in Fig. 8 verdeutlichen exemplarisch diese Wirkungsweise. Analog dazu ist das Köhlersche Beleuchtungsprinzip gut in der Fig. 3 sichtbar. Durch den Arraycharakter wird noch zusätzlich die insgesamt berücksichtigte Quellwinkeldivergenz in eine Vielzahl von Teilintervallen aufgeteilt, die auf der Targetfläche superponiert werden (siehe gestrichelte Pfeile 42 in Fig. 8). Somit wird eine weitere Lichtdurchmischung erreicht. Für den Freiform-Array-Projektor hat diese Anordnung eine weitere Implikation. Um eine hinreichend gute refraktive Lichtumverteilung zu erzeugen, muss die Eingangslichtverteilung gut bekannt sein. Für kleine Winkelintervalle kann diese Verteilung als quasi homogen betrachtet werden.

Um sowohl Targetmuster mit sehr hohen Raumfrequenzen als auch hohe optische Systemtransmission zu bekommen, können refraktive Freiformstrahlformungen und absorptiv/reflektive Lichtabblendung kombiniert werden. Die Fig. 9 verdeutlicht die Wirkungsweise eines solchen optischen Elements. Die refraktive Freiformstrahlformung wird dafür verwendet, um einen Großteil des Lichts durch die Blendenstruktur zu propagieren und zusätzlich das Licht auf die Projektionslinse (z.B. gemäß des Köhlerschen Beleuchtungsprinzips) zu überführen. Die beiden Beleuchtungsfreiformen erzeugen somit eine an die Blenden angepasste, reelle räumliche Lichtstruktur und kontrollieren gleichzeitig die Strahlwinkel für die Gewährleistung des Köhlerschen Beleuchtungsprinzips. Die dicken Pfeile 16 des linken Insets 27 der Fig. 9 veranschaulichen, dass die Lichtstrahlen vorzugsweise durch die Blendenstrukturen geführt werden. Die Blendenstruktur befindet sich in der idealen Objektebene/Objektraum der Projektionsoptik und wird somit scharf auf das Target abgebildet, d.h. im Gegensatz zu Fig. 7 wird eine Buchstabenfolge mit sehr scharfen Strukturberandungen entstehen. In anderen Worten kann die transmissionsmodulierte Struktur 20 die Lichtobjektstruktur basierend auf der erhöhten Bestrahlungsstärke in dem lichtdurchlässigen Bereich 29a der transmissionsmodulierten Struktur 20 formen. Dabei kann das Zusammenspiel von transmissionsmodulierten Strukturen und Freiform-lichtumverteilung die Lichtobjektstruktur formen. Ferner kann die Projektionsoptik 12 die Lichtobjektstruktur von der transmissionsmodulierten Struktur abbilden, um die Beleuchtung von der Lichtobjektstruktur in der Bildfläche der Projektionsoptik zu erhalten.

Die Fig. 10 zeigt, dass auch im Vergleich zu Fig. 2 inverse Lichtstrukturen durch reine refraktive Effekte erzeugt werden können. Hier wurde durch refraktive Freiformstrahlformung und nachfolgende Projektion ein dunkler Schriftzug auf hellem Hintergrund generiert. Hierbei werden Ein- Auswölbungen in den Insets 8i und 8i' sowie 10h und 10h' getauscht werden.

Herstellungsbedingte, nichtideale Übergangsbereiche zwischen den einzelnen Arraykanälen, z.B. Störflanken, Totzonen, etc, können zu Streu- und Störlicht führen. Desweitern kann auch eine ungenügende Lichtkollimation schon mit Stör- und Streulicht außerhalb des Akzeptanzwinkelbereichs der Arrayoptik verbunden sein, was zu Übersprechen zwischen den einzelnen Optikkanälen und somit zu Geisterbildern in der Nähe der Targetausleuchtung führt. Um solche Störeffekte zu minimieren, können weitere absorptive/reflektive Strukturen eingefügt werden. Dies können sowohl Blendenlagen als auch isolierende Blendenwände zwischen den einzelnen Kanälen sein. Die Fig. 11 zeigt exemplarisch besonders einfache Blendenanordnungen. Blenden 44 vor dem ersten Freiformarray können zur Bedeckung von nichtidealen Übergangsbereichen zwischen den einzelnen Kanälen verwendet werden. Im Besonderen sind solche Blenden bei nichtstetigen oder nichtstetig differenzierbaren Übergängen der Idealoptikfläche sehr hilfreich. Ähnliches gilt für Blenden 46, 48 zwischen den beiden Freiformenarrays oder kurz nach dem zweiten Freiformarray. Allerdings können solche Blenden auch eine Doppelfunktion aufweisen, wenn sich die Objektebene der Projektionsabbildungsoptik in Blendennähe befindet. In diesem Fall können sowohl Störlichtminimierung als auch scharfe Targetmusterdetails durch die gleiche Blendenstruktur verursacht werden. Hingegen können Blenden zwischen dem Projektionsarray und dem zweiten Freiformarray eher zur Minimierung des Kanalübersprechens dienen. In anderen Worten kann die Projektionsvorrichtung zumindest eine weitere transmissionsmodulierte Struktur 44, 46, 48 aufweisen, die Streu-und/oder Störlicht unterdrückt.

Die Superposition aller Lichtverteilungen aller Kanäle ergibt die gewünschte Targetlichtverteilung. Optional können alle Kanäle die gleiche Targetlichtverteilung erzeugen (siehe Fig. 2, 8-11 und Fig. 12 links) und somit einen maximalen Grad an Homogenisierung ermöglichen. Allerdings können auch verschiedene Kanaltypen unterschiedliche Targetbeleuchtungen 50a, 50b hervorrufen (siehe Fig. 12 rechts), und erst die Superposition aller Lichtverteilungen auf dem Target generiert dann die gewünschte Form der Endverteilung. Dies ist besonders dann sinnvoll, wenn sehr große Abstrahlwinkel für die volle Ausleuchtung des Targets notwendig sind. Unterschiedliche Kanaltypen mit kleineren numerischen Aperturen können unterschiedliche Bereiche des Targets abdecken. Unterschiedliche Optikbereiche werden topologisch unterschiedliche transmissionsmodulierte Strukturen und Beleuchtungsfreiformen aufweisen. Auch bereichsabhängige, qualitativ verschiedene Abbildungsoptiken der Projektionseinheit können auftreten, um z.B. stark unterschiedliche Abbildungsrichtungen oder qualitativ unterschiedliche Lagen von virtuellen Objektlichtstrukturen zu berücksichtigen. Durch die geschickte Kanalüberlagerung können auch die Anforderungen an die Einzelkanäle, im Besonderen an die Beleuchtungsfreiformen, entschärft werden.

Fig. 13 zeigt eine schematische der Projektionsvorrichtung 2 mit weiteren optischen Strukturen zwischen der Lichtquelle 4 und der ersten refraktiven optischen Freiformfläche und weiteren optischen Strukturen nach der Projektionsoptik gemäß einem Ausführungsbeispiel. Das Array von optischen Kanälen zwischen der Lichtquelle 4 und der ersten refraktiven optischen Freiformfläche 8 und/oder nach der Projektionsoptik 12, von zumindest zwei Kanälen, eine gemeinsame refraktive optische Struktur 52, 54 aufweisen, die ausgebildet ist, eine Hauptstrahlwinkelverteilung der optischen Kanäle überwiegend durch Lichtumverteilung einzustellen. Bei einer überwiegenden Lichtumverteilung wird zumindest 50%, zumindest 65% oder zumindest 80% bis hin zu 100% der Hauptstrahlwinkelverteilung mittels Lichtumverteilung erreicht, wobei der restliche Anteil z.B. mittels Abschattung erhalten wird. Um die Hauptabstrahlrichtungen der einzelnen Kanäle individuell an die erforderliche Targetverteilung anzupassen, können zusätzliche, für wenigstens einige Kanäle gemeinsam wirkende optische Flächen/Freiformflächen 52, 54 dem Freiform-Array-Projektor vor und/oder nachgeschaltet werden. Hierbei kann es sich um glatte Optiken als auch Fresnelstrukturen handeln. Diese Zusatzoptiken sollen so ausgelegt werden, dass Targetzielverteilung weitestgehend durch Lichtumverteilung und nur begrenzt durch verlustbehaftetes Lichtabblenden erreicht wird. Hierfür sind in der Regel Freiformoptik notwendig. An Hand eines vereinfachten Beispiels wollen wir den Freiformcharakter der Zusatzoptik aufklären. Der Einfachheit halber betrachten wir eine dem Freiform-Array-Projektor nachgeschaltete Optik. Analog zu oben seien $(x, y)$ transversale Koordinaten eines ebenen Targets mit einer Normale in z-Richtung. Es soll eine Targetleistungsverteilung $dp / (dx\, dy)$ erreicht werden. Für einen Freiform-Array-Projektor mit einzelnen Projektoren an den Orten $(x_P, y_p, z = const)$ betrachten wir zur Vereinfachung ausschließlich Hauptstrahlen mit transversalen Abstrahlrichtungskosinussen $(\alpha,\beta)$. Zusätzlich sollen die Projektorkoordinaten als kontinuierliche Variablen aufgefasst werden. Die Projektoren können näherungsweise durch eine Leistungsdichte $\pi(x_p,y_p,\alpha,\beta) = dP_{pro} / (dx\, dy\, d\alpha\, d\beta)$ beschrieben werden. Wir gehen davon aus, dass die Zusatzoptik eine Transformation der Gestalt $(x,y) = F(x_p,y_p,\alpha,\beta)$ bzw. $(x_p,y_p) = G(x,y,\alpha,\beta)$ erzeugt. Die Targetleistungsdichte kann nun durch

$$\frac{dP}{dx\,dy}=\int \pi\left(G\left(x,y,\alpha,\beta\right),\alpha,\beta\right)\frac{\partial\left[x_p,y_p\right]}{\partial\left[x,y\right]}d\alpha d\beta \qquad (9)$$

ausgedrückt werden. Wie häufig üblich, wird die Freiform durch ein notwendiges Mapping entsprechend eines Jacobians $\partial[x_p,y_p] / \partial[x,y]$ beschrieben.

Nachfolgend werden die Fig. 14 bis 18 beschrieben. Fig. 14 zeigt die Projektionsvorrichtung 2 mit prismatischen refraktiven optischen Freiformflächen 8, 10 sowie der transmissionmodulierten Struktur 20 in einer Ebene zwischen den zweiten refraktiven optischen Freiformflächen 10 und der Projektionsoptik 20. Fig. 15 zeigt die Projektionsvorrichtung aus Fig. 14, wobei die Blendenstruktur 20 in einer Ebene zwischen der ersten refraktiven optischen Freiformfläche 8 und der zweiten refraktiven optischen Freiformfläche 10 angeordnet ist. Fig. 16 zeigt die Projektionsvorrichtung 2, wobei die optischen Strukturen, hier die erste und die zweite refraktive optische Freiformfläche 8, 10, die Blende 20 sowie die Projektionsoptik 12 in dem Array der optischen Kanäle auf einer schiefen Ebene angeordnet ist, wobei die schiefe Ebene der Projektionsvorrichtung (Treppen-) Stufen aufweist. Fig. 17 zeigt die Projektionsvorrichtung 2 aus Fig. 16, wobei die schiefe Ebene der Projektionsoptik eine durchgehende Struktur und keine Stufen aufweist. Fig. 18 zeigt die Projektionsvorrichtung aus Fig. 17, wobei die Lichtquelle 4 ebenfalls auf einer schiefen Ebene angeordnet ist.

In der Fig. 12 wird auf dem Target ein helles Dreieck auf einem weniger hellen, rechteckigen Hintergrund erzeugt. Die beiden eingangsseitigen Freiformen haben wenigstens näherungsweise eine verzerrt, rechteckige Berandungsform (Mapping von einer rechteckigen Eingangsverteilung zu einer rechteckigen Ausgangsverteilung). Wird allerdings eine Dreiecksverteilung ohne Hintergrundbeleuchtung auf dem Target durch reine Freiformstrahlformung bei rechteckiger Lenslet-Anordnung angestrebt, dann werden die entsprechenden Freiformberandungen die Topologie der Quell- und Zielverteilung wiederspiegeln. In unserem Fall heißt dies, dass Licht von verzerrt, quasi rechteckigen Eingangsfreiformen zur verzerrt dreieckigen Freiformen überführt wird (siehe Fig. 14). Neben der topologisch unterschiedlichen Form der Ein- und Ausgangsverteilung tritt allerdings auch eine starke Unsymmetrie in den Leistungsverteilungen auf. Während beim Eingangslicht pro Arraykanal von einer homogenen Verteilung ausgegangen werden kann, muss infolge der Dreiecksform der Ausgangsverteilung das Licht in jeden Arraykanal stark unsymmetrisch verteilt werden. Dies geschieht durch einen ausgeprägten Blaze-Charakter (prismatische Form) der Freiformen 8; 10. Die eingangsseitige erste Freiform muss viel Licht in Richtung der Dreiecksbasisfläche bringen, während die eingangsseitige zweite Freiform ein teilweises Zurückkippen der Strahlen zur Strahlwinkelkorrektur bewirkt. Dieser Blaze-Charakter der Freiformen führt allerdings zu starken Unstetigkeiten der Optikfläche beim Übergang zwischen verschiedenen Kanälen. Diese Blaze-Rückflanken werden einerseits zu Störlicht und andererseits zu Schwierigkeiten bei der Strukturherstellung führen. Eine Störlichtminimierung kann wieder durch das Einführen von Blendenstrukturen 20 ermöglicht werden (siehe Fig. 14). Hierbei müssen Störlichtanalysen für verschiedenste Blendenpositionen und -formen durchgeführt werden (siehe Fig. 14, 15).

Generell wird jegliche Unsymmetrie in der Leistungsumverteilung eine potentiell, stärkere Strukturunstetigkeit nach sich ziehen, falls eine trivial, ebene Arraykanalanordnung beibehalten wird (siehe Fig. 2-15). Eine ausgeprägte Minimierung und teilweise sogar Eliminierung der Unstetigkeiten kann durch eine angepasste Kanalanordnung erreicht werden. Eine einfache Möglichkeit einer solchen Modifikation besteht in der Kanalordnung auf geneigten Ebenen (siehe Fig. 16,17). Sehr häufig sind effektive Brennweiten (siehe Fig. 5) (Mikro-Optik) sowie transversale Ausdehnungen des Freiform-Array-Projektors um ein Vielfaches kleiner als der Optik-Target-Abstand. In diesem Fall kann das Targetmuster als eine Fernfeldverteilung aufgefasst werden, bei welcher kleine Variationen des Kanal-Target-Abstandes eine untergeordnete Rolle spielen. Leistungsverteilungsunsymmetrien ergeben nun ähnliche Unstetigkeitsverhältnisse bei allen Kanalübergängen. Durch longitudinale Verschiebungen der Kanäle um ähnliche, mittlere Unstetigkeitshöhendifferenzen (hier zwei Dimensionen) entstehen Arrays auf geneigten Ebenen mit stark verringerten Unstetigkeiten (siehe Fig. 16,17). Eine analoge Strategie ist natürlich auch für endliche, aber nicht allzu kleine Optik-Targetabstände approximativ anwendbar. Die Bereitstellung einer angepassten Eingangsverteilung durch z.B. kollimiert, verkippte Quelleinheiten 4 (Quelle mit Primäroptilk, siehe Fig. 18) bzw. durch zusätzliche Transformationsoptiken entsprechend Fig. 13, kann dabei förderlich sein. In anderen Worten kann zumindest eine optische Struktur ausgebildet sein, eine asymmetrische Lichtverteilung in der Bildebene der Projektionsoptik zu erzeugen, wobei die optische Struktur auf einer geneigten Ebene angeordnet ist, um Unstetigkeiten zwischen einander angrenzenden optischen Strukturen benachbarter optischer Kanäle 6 zu reduzieren und wobei die Projektionsoptik 12 ausgebildet ist, die Bilder basierend auf der asymmetrischen Lichtverteilung zu projizieren. Die optische Struktur kann die erste oder die zweite oder eine weitere refraktive optische Freiformfläche, eine transmissionsmodulierte Struktur oder auch die Lichtquelle sein.

Bei endlichen Optik-Targetabständen bzw. bei nichttrivialen Hauptstrahlneigungsverteilung der einzelner Kanäle (für Superpositionsoptik analog zu Fig. 12) werden kanalweise variierende, longitudinale Kanalverschiebungen notwendig sein, um unstetig Kanalübergänge zu minimieren. Folglich werden sich die Einzelkanäle auf gekrümmten Einhüllendenflächen 65a, 65b, 65c anordnen (siehe Fig. 19). Dies bedeutet, dass die Array-Einhüllende, also die Optikgrobstruktur die Hauptstrahlen der Kanäle durch Brechung kontrolliert (siehe exemplarisch die Pfeile in Fig. 19). Hingegen werden durch Kanalfeinstrukturen und transmissionsmodulierte Einheiten die Bestrahlungsstärkeverteilungen der Einzelkanäle erzeugt. Somit kann durch die Kanalanordnung auf gekrümmten Flächen einerseits die Funktion von Zusatzoptiken entsprechend Fig. 13 durch den Freiform-Array-Projektor selbst übernommen werden, und andererseits werden gleichzeitig Unstetigkeiten / Totzonen zwischen den Kanälen minimiert. Falls die Kanalberandungen durch die Schnittkurven der Nachbarkanäle bestimmt werden, ist eine vollständige Vermeidung von Unstetigkeiten / Totzonen möglich. Die Optikform wird durch Extremumsbildung (in Analogie zu [Michaelis]) der Einzelkanalstrukturen erzeugt. In anderen Worten kann jeweils die erste und/oder die zweite refraktive optische Freiformfläche und/oder die Projektionsoptik aneinander angrenzender optischer Kanäle auf jeweils einer gemeinsamen, gekrümmten Einhüllenden 65a, 65b, 65c angeordnet sein, wobei Hauptabstrahlwinkel 67a, 67b, 67c der aneinander angrenzenden optischen Kanals angepasst werden, um bei der Überlagerung der Bilder Projektionsartefakte und/oder optisch inaktive Bereiche und/oder Unstetigkeiten zwischen den Arraykanälen zu gänzlich vermeiden oder zumindest erheblich zu reduzieren. Ferner kann die Einhüllende als weitere (brechende) Optik fungieren bzw. die Funktion der gemeinsam wirkenden optischen Freiformflächen 52, 54 (vgl. Fig. 13) übernehmen. Somit kann auch ohne die optisch wirkenden Freiformflächen eine Targetzielverteilung weitestgehend durch Lichtumverteilung und nur begrenzt durch verlustbehaftetes Lichtabblenden erreicht werden. Totzonen sind beispielsweise optisch nicht-aktive Zonen, die insbesondere in einem Übergangsbereich zwischen benachbarten optischen Kanälen bzw. in Randbereichen von optischen Kanälen auftreten können. Somit werden zur Reduktion von Projektionsartefakten keine Totzonen bzw. optisch nicht-aktive Zonen erzeugt, die zwischen den Kanälen viel Licht abblenden. Die Leistungstransmission der Projektionsvorrichtung wird maximiert.

Bei der Kanalanordnung können verschiedenste Parkettierungsytpen angewendet werden. In den Fig. 1-18 wurden der Einfachheit halber rechteckige Anordnungsschemata angewendet. Fig. 20 zeigt exemplarisch sechs beispielhafte Anordnungen der optischen Kanäle in dem Array von optischen Kanälen, wobei beispielhaft sechs verschiedene Paketierungstypen gezeigt sind. Es gibt verschiedene Auswahlkriterien für den Parkettierungstyp. Es sollten vollständige Parkettierungen (also kleine Totzonen, kleine ungenutzten Bereiche, kleine Abblendungen) erreicht werden, wobei die optische Wirkung so einfach wie möglich gestaltet werden sollte. Letzteres bedeutet, dass vorzugsweise geringe Freiformumverteilungsprozesse angestrebt werden sollen. Dies führt einerseits zu einfacheren optischen Flächen. Andererseits werden hierdurch gemäß der Etendueeerhaltung (siehe Fig. 5) kleinere Beeinflussungen des Strahlwinkelspektrums erreicht. Eine vollständige Parkettierung des einfallsseitigen Freiformarrays mit optisch aktiven Bereichen ist aus Effizienzgründen erstrebenswert. Die Berandungsformen der einfallsseitig zweiten Freiformflächen (pro Kanal) wird grob durch die vorgesehene Targetausleuchtungsgeometrie des Kanals bestimmt, falls die Effizienz maximiert werden soll. Um die Lichtumverteilung möglichst einfach zu gestalten, wäre eine Ähnlichkeit in der Berandung/Größe der einfallseitig ersten und zweiten Freiformfläche vorteilhaft. Hieraus könnte ein günstiger Parkettierungstyp bestimmt werden. Natürlich müssen auch günstige Parkettierungsmöglichkeiten für die Projektionslinsen/optiken beachtet werden. Einerseits wird die Ausleuchtung der Eingangspupille durch die Quellform bestimmt (Köhlersche Beleuchtung). Andererseits müssen aber auch Herstellungsaspekte berücksichtigt werden. Um Beispielsweise Abbildungsmikrolinsen mit hoher Qualität zu erzeugen, könnten das Reflow-Verfahren und UV-Abformung sinnvoll sein. In diesem Falle wären in der Regel nur runde Linsenberandungen vorhanden, was z.B. eine hexagonale Parkettierung zweckmäßig erscheinen lässt. In anderen Worten können die optischen Kanäle eine hexagonale, rechteckige, streifenartige, verzerrt regelmäßige, unregelmäßige oder eine stochastische Parkettierung aufweisen.

Bei Lichtquellen mit größerer Kohärenz könnten hingegen periodische Anordnung störende Gittereffekte nach sich ziehen. In solchen Fällen wären eher stochastische Anordnungen sinnvoll.

Freiform-Array-Projektoren können chromatische Aberrationen aufweisen. Klassische Aberrationskorrekturen für chromatische Fehler, bei welchem unterschiedliche optische Materialien zu Einsatz kommen, sind möglich, würden aber zu viel komplexeren Optiken führen. Ein Ausweg hierfür ist, dass einzelne Kanäle nur ein beschränktes Wellenlängenspektrum bedienen und somit direkt auf die Wellenlänge korrigiert werden können. Dies kann dadurch erreicht werden, dass verschiedene Kanalgruppen nur durch unterschiedlich, farbige Quellen 60 beleuchtet werden. Ein anderer Weg besteht darin, in den Optickanälen Farbfilter zu integrieren (siehe Fig. 21). In anderen Worten können zwei Kanäle oder zwei Gruppen von Kanälen des Arrays von optischen Kanälen ausgebildet sein, sich unterscheidende Wellenlängenbereiche zu verarbeiten, wobei der erste Kanal oder die erste Gruppe von Kanälen Abbildungsfehler in einem ersten Wellenlängenbereich reduziert und wobei der zweite Kanal über die zweite Gruppe von Kanälen Abbildungsfehler in einem zweiten Wellenlängenbereich reduziert. Um Licht in einem ersten Wellenlängenbereich in den ersten Kanal oder die erste Gruppe von Kanälen zu leiten und Licht in einem zweiten Wellenlängenbereich in den zweiten Kanal oder die zweite Gruppe von Kanälen zu leiten kann die Projektionsvorrichtung eine Mehrzahl von Farbfiltern oder eine Mehrzahl von Lichtquellen sich unterscheidender Wellenlängenbereiche aufweisen,

Fig. 22 zeigt ein schematisches Flussdiagramm eines Verfahrens 2100 zur Projektion mit einer Projektionsvorrichtung nach Anspruch 1 mit mindestens einer Lichtquelle und einem Array von optischen Kanälen. Das Verfahren weist einen Schritt 2105 mit Anordnen einer ersten und einer zweiten refraktiven optischen Freiformfläche zwischen der Lichtquelle und der Projektionsoptik, einen Schritt 2110 bewirken, mit der ersten und der zweiten refraktiven optischen Freiformfläche, eine Köhlersche Beleuchtung der Projektionsoptik von einer Lichtobjektstruktur, die in einer Bildfläche der Projektionsoptik das zu projizierende Bild ergibt und einen Schritt 2115 mit Überlagern der Bilder des Arrays der optischen Kanäle.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen:

[Malacara] Daniel Malacara and Zacarias Malacara, "Handbook of Optical Design", (2004) by Marcel Dekker, Inc, NEW YORK, BASEL.

[Pan] J. W. Pan, C. M. Wang, H. C. Lan, W. S. Sun, and J. Y. Chang, "Homogenized LED-illumination using microlens arrays for a pocket-sized projector," Opt. Express 15, 10483-10491 (2007). [US 2006/0285078 A1]

[Ries] Harald Ries and Julius Muschaweck. "Tailored freeform optical surfaces." J. Opt. Soc. Am. A, 19(3):590-595, Mar 2002.

[Oliker] V. I. Oliker. "Mathematical aspects of design of beam shaping surfaces in geometrical optics." Trends in Nonlinear Analysis, page 191-222, 2002. [DE 102011014779 A1] Kühmstedt Peter, Notni Gunther, Zwick Susanne, "Vorrichtung und Verfahren zur Vermessung eines Gegenstandes."

[Zwick] S. Zwick, R. Feßler, J. Jegorov, and G. Notni, "Resolution limitations for tailored picture-generating freeform surfaces." OPTICS EXPRESS 20, 3642 (2012).

[Wu] Rengmao Wu, Pablo Benitez, Yaqin Zhang, and Juan C. Minano, "Influence of the characteristics of a light source and target on the monge-ampere equation method in freeform optics design," Opt. Lett., 39(3):634-637, (2014).

[Luo] Luo, Y., , Feng, Z., Han, Y., Li, H.,"Design of compact and smooth free-form optical system with uniform illuminance for LED source," Opt. Express 18, 9055-9063 (2010). [Zhao] Shuang Zhao, Kai Wang, Fei Chen, Zong Qin, and Sheng Liu, "Integral freeform illumination lens design of LED based pico-projector Integral freeform," APPLIED OPTICS 52, 2985 (2013).

[Minano] Juan C. Minano, Pablo Benitez, Jose Blen, Asunción Santamaria, "Highefficiency free-form condenser overcoming rotational symmetry limitations," Optics Express 16, 20193-20205, (2008).

[US8616711] Masahiko Yatsu, Oblique projector havig movable free form lenses [US 2015/0205099 A1] Nobuyuki ARAI, Kanagawa, Optical projection system and image projector incorporating the same

[Ricoh] https://www.ricoh.com/technology/tech/040_projection.html, aufgesucht am 14.08.2015

[US 8717671 B2] Hibiki Tatsuno, "Projection optical system and image projection device" [DE 102009024894 A1] Schreiber, P.; Sieler, M.; Foerster, E., "Projektionsdisplay und dessen Verwendung"

[[DE 102013208625 A1] Sieler, M.; Schreiber, P.,; Riedel, A., "MULTIAPERTUR-PROJEKTIONSDISPLAY UND EINZELBILDERZEUGER FÜR EIN SOLCHES"

[DE 102011076083 A1] Sieler, M.; Schreiber, P., "Projektionsdisplay und Verfahren zum Anzeigen eines Gesamtbilds für Projektionsfreiformflächen oder verkippte Projektionsflächen"

[Sieler] Sieler, Marcel; Schreiber, Peter; Dannberg, Peter; Bräuer, Andreas; Tünnermann, Andreas, "Ultraslim fixed pattern projectors with inherent homogenization of illumination", Applied optics 51, , 64-74 (2012).

[Feng] Zexin Feng, Lei Huang, Guofan Jin, and Mali Gong, "Designing double freeform optical surfaces for controlling both irradiance and wavefront," Opt. Express, 21(23), 28693-28701, Nov 2013.

[WAKO] US-patent 2,186,123, "Illumination system," Kurt Räntsch, et al. 1940. [Born-Wolf] M. Born and E. Wolf, "Principles of Optics", Cambridge University Press (1999).

[Sulman] M. M. Sulman, J. F. Williams, and R. D. Russel, "An efficient approach for the numerical solution of mongeamp'ere equation," Appl. Numer. Math. 61, 298-307 (2011).

[Rubinstein] Jacob Rubinstein and Gershon Wolansky, "Intensity control with a free-form lens," J. Opt. Soc. Am. A, 24(2):463-469, (2007).

[Michaelis] D. Michaelis, P. Schreiber, and A. Bräuer, "Cartesian oval representation of freeform optics in illumination systems," Opt. Lett. 36(6), 918-920 (2011). [Winston] Winston, R., Minano, J. C., and Benitez, P. G., "Nonimaging Optics,", Elsevier Academic Press, Oxford, (2006).

[Shealy] Shealy, D.L., "Geometrical Methods" and "Classical (Non-laser) Methods" in "Laser Beam Shaping" ed. F. Dickey and S. Holswade, Dekker, (2000).

## Patentansprüche

1. Projektionsvorrichtung (2) mit mindestens einer Lichtquelle (4) und einem Array von optischen Kanälen (6, 6a, 6b, 6c), wobei jeder Kanal Folgendes aufweist:

   eine erste und eine zweite refraktive optische Freiformfläche (8, 8a, 8b, 10, 10a, 10b) und eine Projektionsoptik (12, 12a, 12b);
   wobei die erste und die zweite refraktive optische Freiformfläche (8, 10) zwischen der mindestens einen Lichtquelle (4) und der Projektionsoptik (12) angeordnet sind und eine Köhlersche Beleuchtung der Projektionsoptik (12) von einer Lichtobjektstruktur (13, 13a, 13b, 13a', 13a") bewirken, die auf einer Bildfläche der Projektionsoptik (12) ein zu projizierendes Bild ergibt, wobei sich Bilder der optischen Kanäle des Arrays überlagern, wobei als Lichtobjektstruktur diejenige Lichtstruktur angesehen wird, die von der Projektionsoptik (12) abgebildet wird, und als Lichtstruktur eine räumliche Verteilung des Lichts angesehen wird,
   wobei in jedem optischen Kanal die erste refraktive optische Freiformfläche (8) und die zweite refraktive optische Freiformfläche (10) eine Strahlungsintensitätsverteilung und Strahlenrichtungen steuern, wobei die erste refraktive optische Freiformfläche (8) ein Ausgangsintensitätsmuster an der zweiten Freiformfläche auf eine Weise erzeugt, bei der auftreffende Strahlen nicht kollimiert sind, wobei die zweite refraktive optische Freiformfläche (10) eine Richtung der Strahlen verändert, um die Strahlen gemäß der Köhlerschen Beleuchtung konvergent auf die Projektionsoptik (12) zu leiten.

2. Projektionsvorrichtung (2) gemäß Anspruch 1, wobei optische Strukturen aller Kanäle des Arrays von optischen Kanälen auf planen Substraten und/oder in Ebenen angeordnet sind.

3. Projektionsvorrichtung (2) gemäß Anspruch 1 oder 2, wobei jeweils die erste und/oder die zweite refraktive optische Freiformfläche und/oder die Projektionsoptik aneinander angrenzender optischer Kanäle auf jeweils einer gemeinsamen, gekrümmten Einhüllenden (65a, 65b, 65c) angeordnet sind, wobei Hauptabstrahlwinkel (67a, 67b, 67c) der aneinander angrenzenden optischen Kanäle angepasst werden, um bei der Überlagerung der Bilder Projektionsartefakte und/oder optisch inaktive Bereiche und/oder Unstetigkeiten zwischen den Arraykanälen zu vermeiden.

4. Projektionsvorrichtung (2) gemäß einem der vorherigen Ansprüche, wobei die Projektionsvorrichtung zumindest eine transmissionsmodulierte Struktur (44, 46, 48) aufweist, die Streu- und/oder Störlicht unterdrückt.

5. Projektionsvorrichtung (2) gemäß einem der vorherigen Ansprüche, wobei die optischen Kanäle (6) eine hexagonale, rechteckige, streifenartige oder unregelmäßige Parkettierung aufweisen.

6. Projektionsvorrichtung (2) gemäß Anspruch 1, mit einer Blende (20, 20a, 20h), wobei die Projektionsvorrichtung so ausgebildet ist, dass das Bild in der Bildfläche auch ohne die Blende erzeugt wird, aber mit der Blende im Vergleich zu der Erzeugung ohne die Blende geschärft erzeugt wird.

## Claims

1. A projection device (2) comprising at least one light source (4) and an array of optical channels (6, 6a, 6b, 6c), wherein each channel comprises:

   a first and a second refractive optical free-form surface (8, 8a, 8b, 10, 10a, 10b) and projection optics (12, 12a, 12b);
   wherein the first and second refractive optical free-form surfaces (8, 10) are arranged between the at least one light source (4) and the projection optics (12) and cause Kohler illumination of the projection optics (12) by an object light pattern (13, 13a, 13b, 13a', 13a"), resulting in an image to be projected on an image surface of the projection optics (12), wherein the images of the optical channels are superimposed, wherein the light structure being imaged by the projection optics (12) is regarded as the object light structure, and wherein a spatial distribution of the light is regarded as the light structure,
   wherein, in each optical channel, the first refractive optical free-form surface (8) and the second refractive optical free-form surface (10) control a radiation intensity distribution and beam directions, wherein the first refractive optical free-form surface (8) generates an output intensity pattern at the second free-form surface in such a way that the incident beams are nit collimated, wherein the second refractive optical free-form surface (10) varies a direction of the beams so as to guide the beams onto the projection optics (12) in a convergent manner in accordance with Köhler illumination.

2. The projection device (2) in accordance with claim 1, wherein optical structures of all the channels of the array of optical channels are arranged on planar substrates and/or in planes.

3. The projection device (2) in accordance with claim 1 or 2, wherein the first and/or the second refractive optical free-form surface(s) and/or the projection optics of mutually adjacent optical channels are arranged on a common curved envelope (65a, 65b, 65c) each, wherein chief ray direction angles (67a, 67b, 67c) of the mutually adjacent optical channels are adapted in order to avoid projection artifacts and/or optically inactive regions and/or discontinuities between the array channels when superimposing the images.

4. The projection device (2) in accordance with any of the preceding claims, wherein the projection device comprises at least one further transmission-modulated structure (44, 46, 48) which suppresses scattering and/or stray light.

5. The projection device (2) in accordance with any of the preceding claims, wherein the optical channels (6) comprise hexagonal, rectangular, strip-like, or irregular tiling.

6. The projection device (2) in accordance with claim 1, comprising an aperture (20, 20a, 20h), wherein the projection device is configured so that the image is also generated in the image surface without the aperture, but is generated sharpened with the aperture as compared to when it is generated without the aperture.

## Revendications

1. Dispositif de projection (2) avec au moins une source de lumière (4) et un réseau de canaux optiques (6, 6a, 6b, 6c), dans lequel chaque canal présente les caractéristiques suivantes:

   une première et une deuxième surface optique réfractive de forme libre (8, 8a, 8b, 10, 10a, 10b) et une optique de projection (12, 12a, 12b);
   dans lequel la première et la deuxième surface optique réfractive de forme libre (8, 10) sont disposées entre l'au moins une source de lumière (4) et l'optique de projection (12) et provoquent un éclairage de Kôhler de l'optique de projection (12) par une structure d'objet lumineux (13, 13a, 13b, 13a', 13a") qui résulte, sur une surface d'image de l'optique de projection (12), en une image à projeter, où les images des canaux optiques du réseau se superposent, où comme la structure d'objet lumineux est considérée la structure lumineuse qui est reproduite par l'optique de projection (12), et comme la structure lumineuse est considérée une répartition spatiale de la lumière,

dans lequel, dans chaque canal optique, la première surface optique réfractive de forme libre (8) et la deuxième surface optique réfractive de forme libre (10) régulent une distribution d'intensité de rayonnement et les directions des rayons, la première surface optique réfractive de forme libre (8) générant un modèle d'intensité de sortie sur la deuxième surface de forme libre de manière telle que les rayons incidents ne soient pas collimatés, la deuxième surface de forme libre optique réfractive (10) changeant une direction des rayons pour guider les rayons selon l'éclairage de Koehler de manière convergente sur l'optique de projection (12).

**2.** Dispositif de projection (2) selon la revendication 1, dans lequel les structures optiques de tous les canaux du réseau de canaux optiques sont disposées sur des substrats plans et/ou dans des plans.

**3.** Dispositif de projection (2) selon la revendication 1 ou 2, dans lequel respectivement la première et/ou la deuxième surface optique réfractive de forme libre et/ou l'optique de projection des canaux optiques adjacents l'un à l'autre sont disposés respectivement sur une enveloppe commune courbe (65a, 65b, 65c), les angles de rayonnement principaux (67a, 67b, 67c) des canaux optiques adjacents l'un à l'autre étant adaptés pour éviter, lors de la superposition des images, des artefacts de projection et/ou des zones optiquement inactives et/ou des discontinuités entre les canaux du réseau.

**4.** Dispositif de projection (2) selon l'une des revendications précédentes, dans lequel le dispositif de projection présente au moins une structure modulée en transmission (44, 46, 48) qui supprime la lumière diffusée et/ou parasite.

**5.** Dispositif de projection (2) selon l'une des revendications précédentes, dans lequel les canaux optiques (6) présentent un pavage hexagonal, rectangulaire, en forme de bande ou irrégulier.

**6.** Dispositif de projection (2) selon la revendication 1, avec un diaphragme (20, 20a, 20h), dans lequel le dispositif de projection est conçu de sorte que l'image dans la zone d'image soit générée même sans le diaphragme, mais soit, avec le diaphragme, générée de manière accentuée en comparaison avec la génération sans le diaphragme.

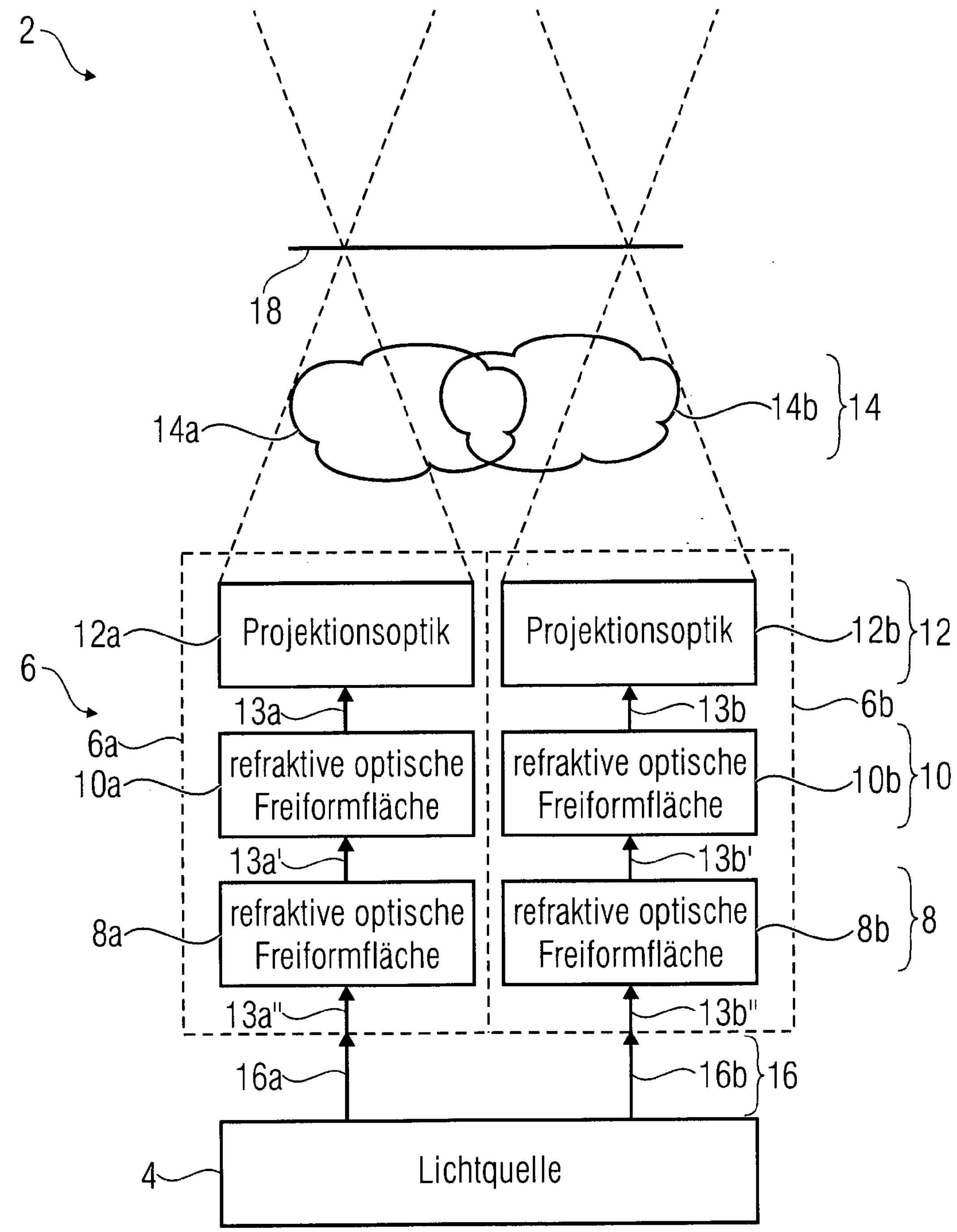
2
18
14a
14b
14
Projektionsoptik
Projektionsoptik
12a
12b
12
6
13a
13b
6b
6a
refraktive optische Freiformfläche
refraktive optische Freiformfläche
10a
10b
10
13a'
13b'
refraktive optische Freiformfläche
refraktive optische Freiformfläche
8a
8b
8
13a''
13b''
16a
16b
16
Lichtquelle
4

FIG 1

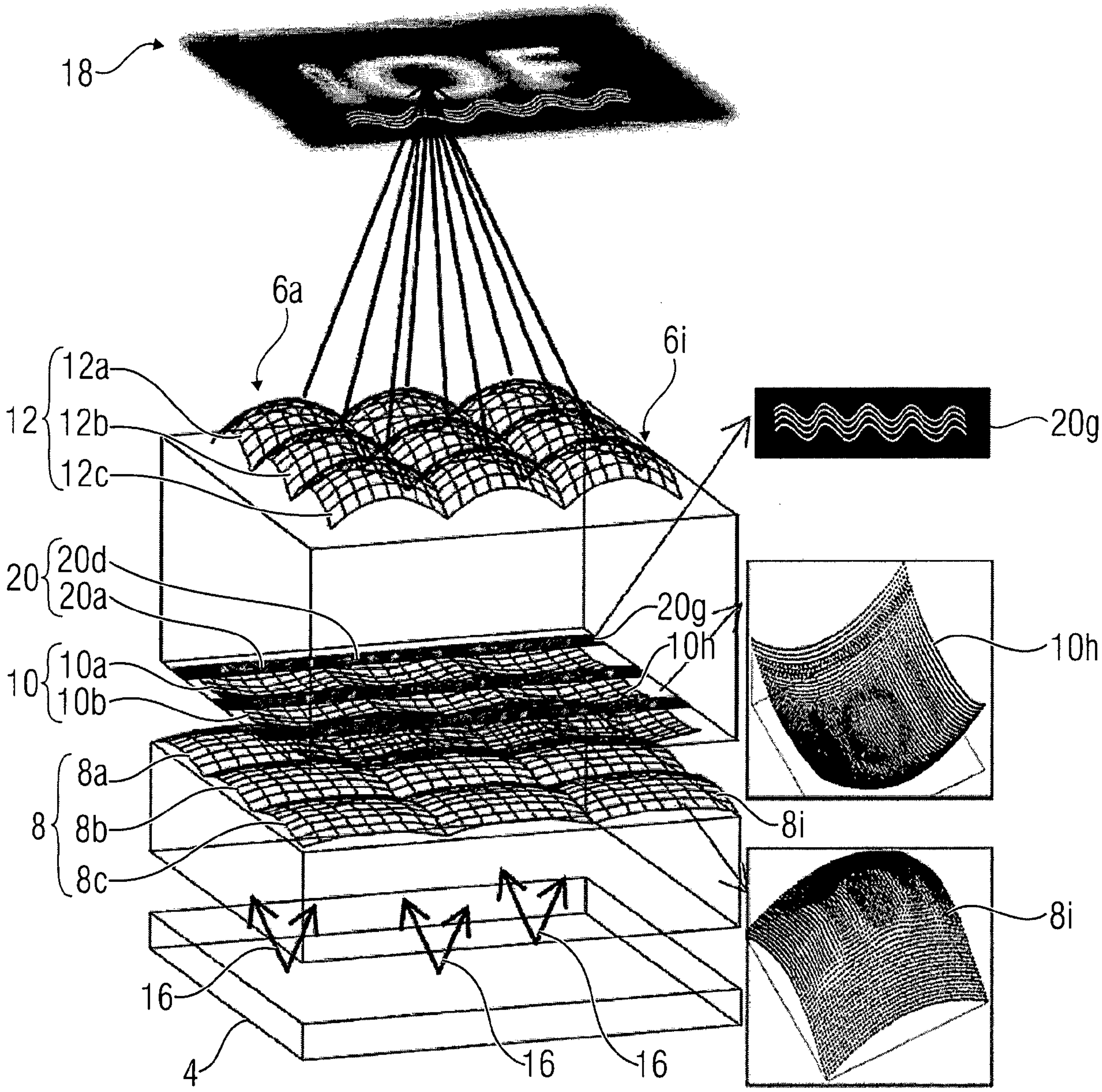
18
6a
6i
12
12a
12b
12c
20g
20
20d
20a
20g
10h
10h
10
10a
10b
8
8a
8b
8c
8i
8i
16
16
16
4

FIG 2

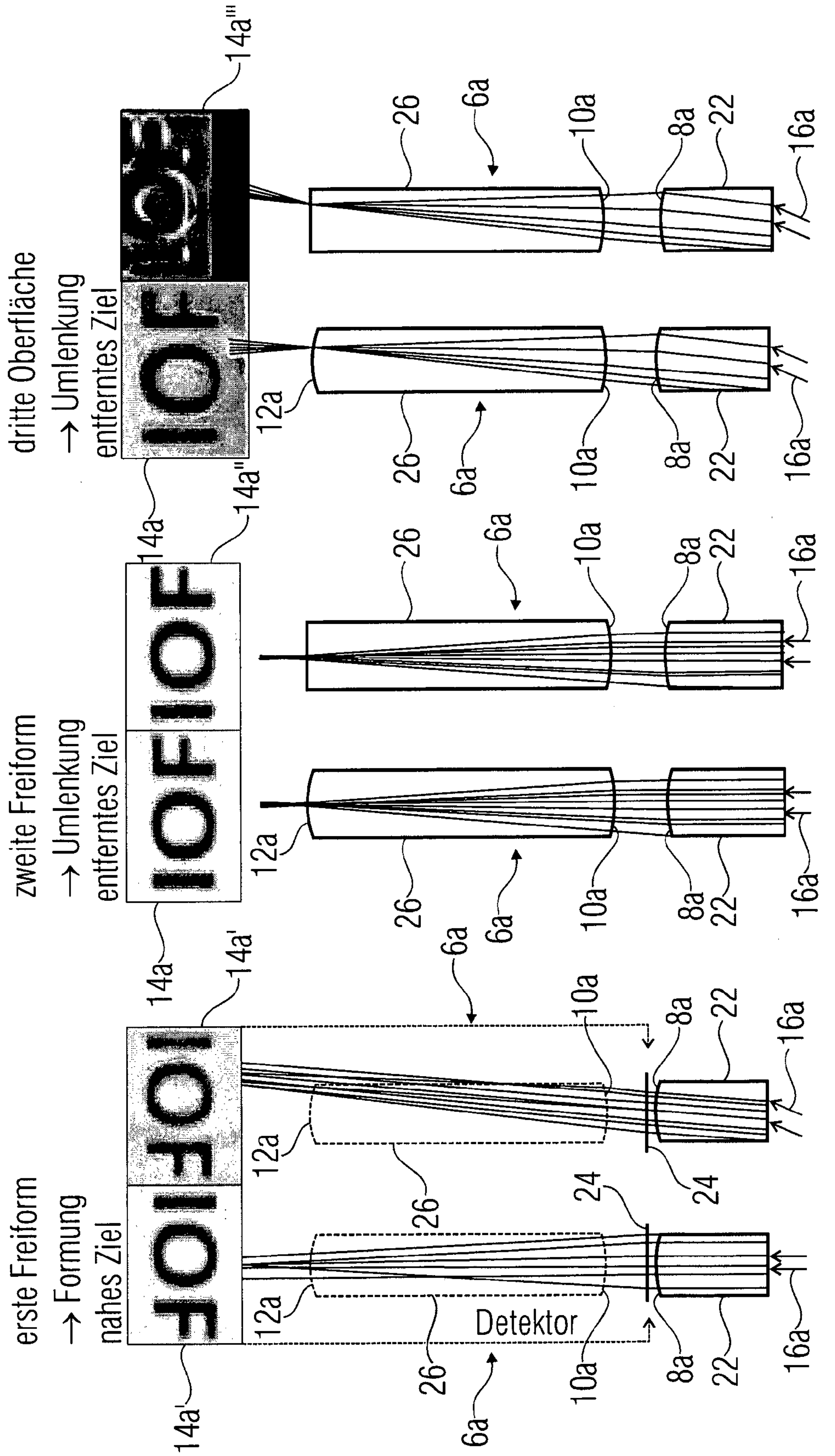


FIG 3A

FIG 3B

FIG 3C

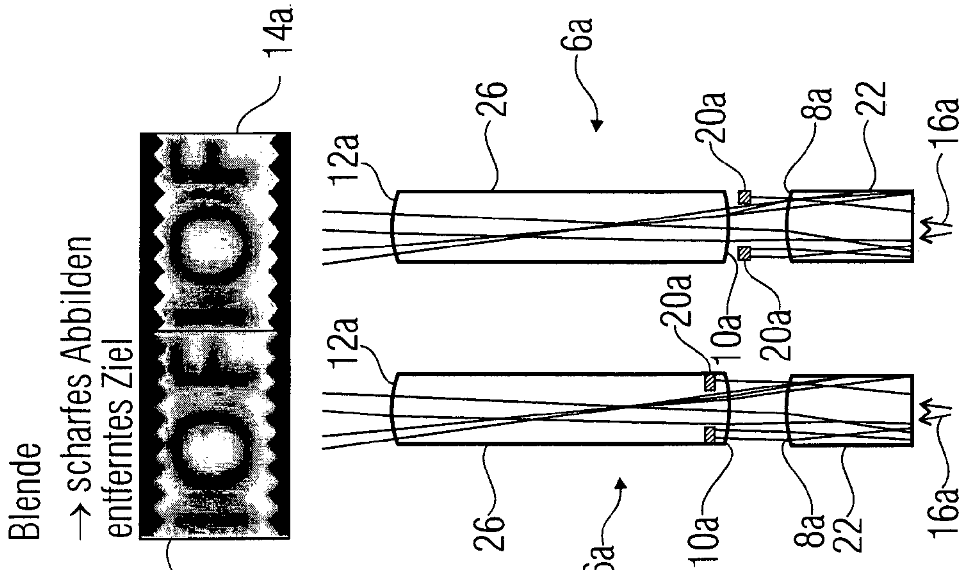


FIG 3F

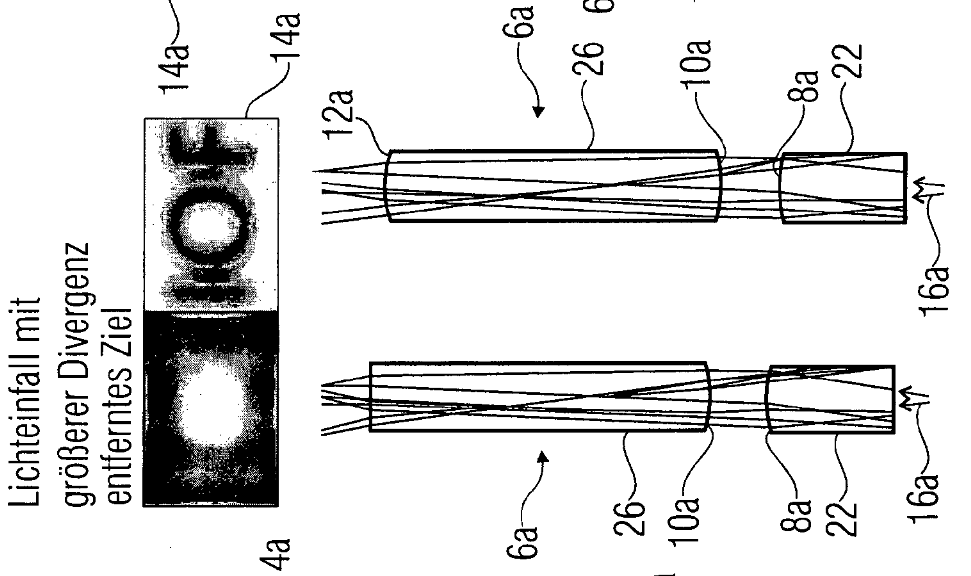


FIG 3E

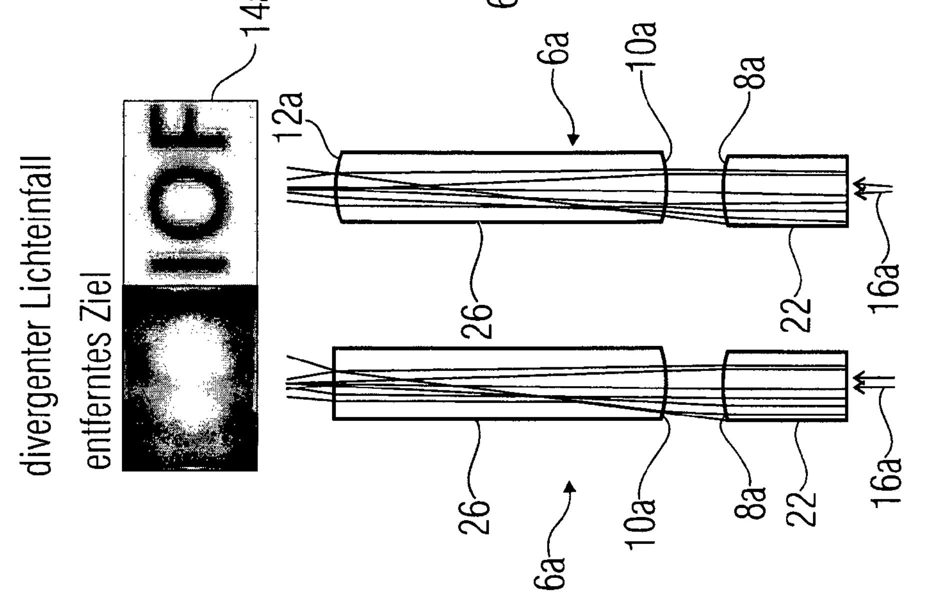


FIG 3D

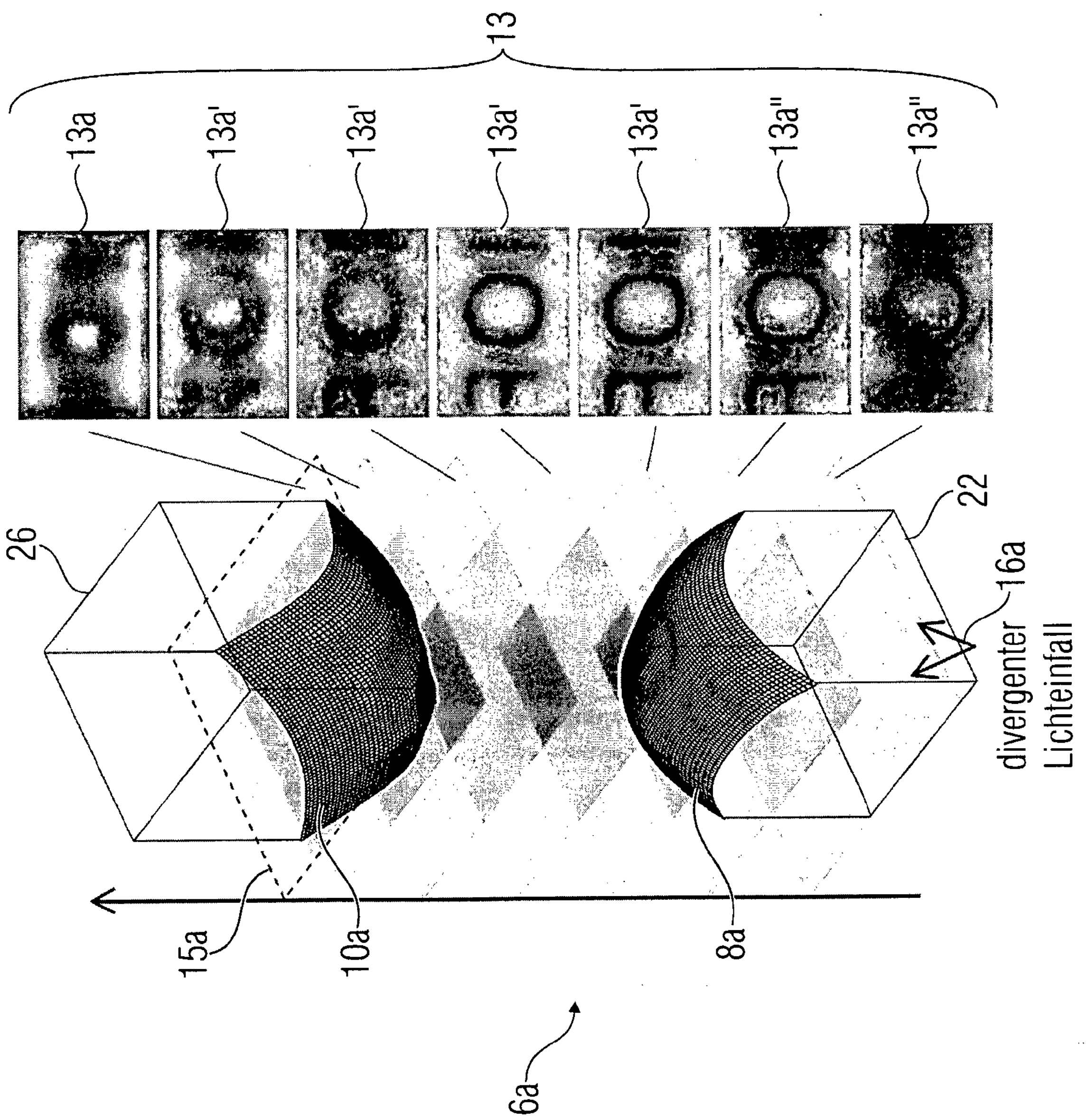
13
13a
13a'
13a'
13a'
13a'
13a''
13a''
26
22
16a
divergenter
Lichteinfall
15a
10a
8a
6a

FIG 4

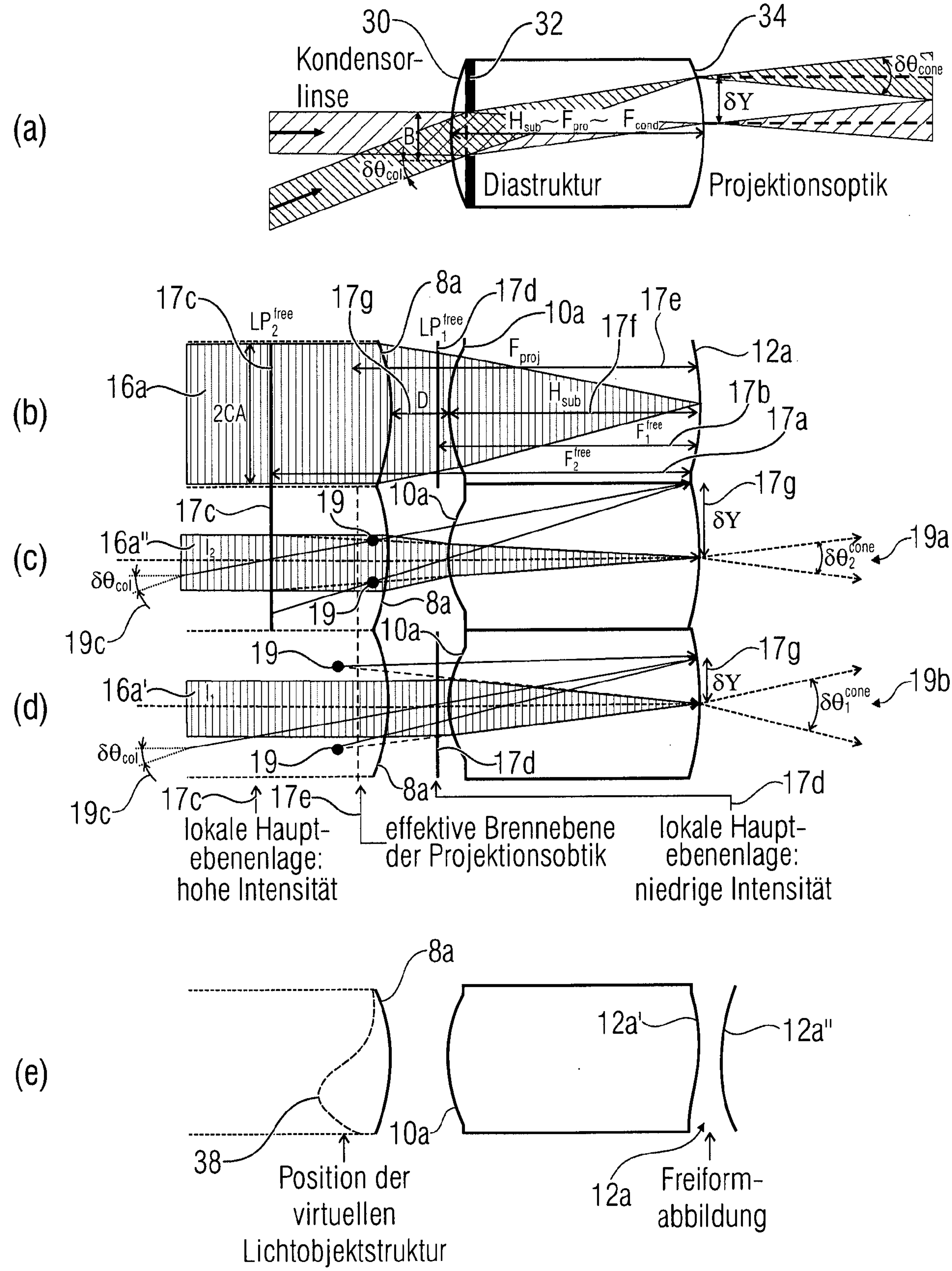

(a)
30
Kondensor-
linse
32
34
B
δθcol
H sub ~ F pro ~ F cond
δY
δθcone
Diastruktur
Projektionsoptik
(b)
17c
LP2 free
17g
8a
LP1 free
17d
10a
17f
17e
F proj
12a
16a
2CA
D
H sub
17b
F1 free
17a
F2 free
(c)
17c
19
10a
17g
δY
16a''
I2
δθ2 cone
19a
δθcol
19
8a
19c
(d)
10a
19
17g
δY
16a'
I1
δθ1 cone
19b
δθcol
19
17d
19c
17c
17e
8a
17d
lokale Haupt-
ebenenlage:
hohe Intensität
effektive Brennebene
der Projektionsobtik
lokale Haupt-
ebenenlage:
niedrige Intensität
(e)
8a
12a'
12a''
10a
38
Position der
virtuellen
Lichtobjektstruktur
12a
Freiform-
abbildung


FIG 5

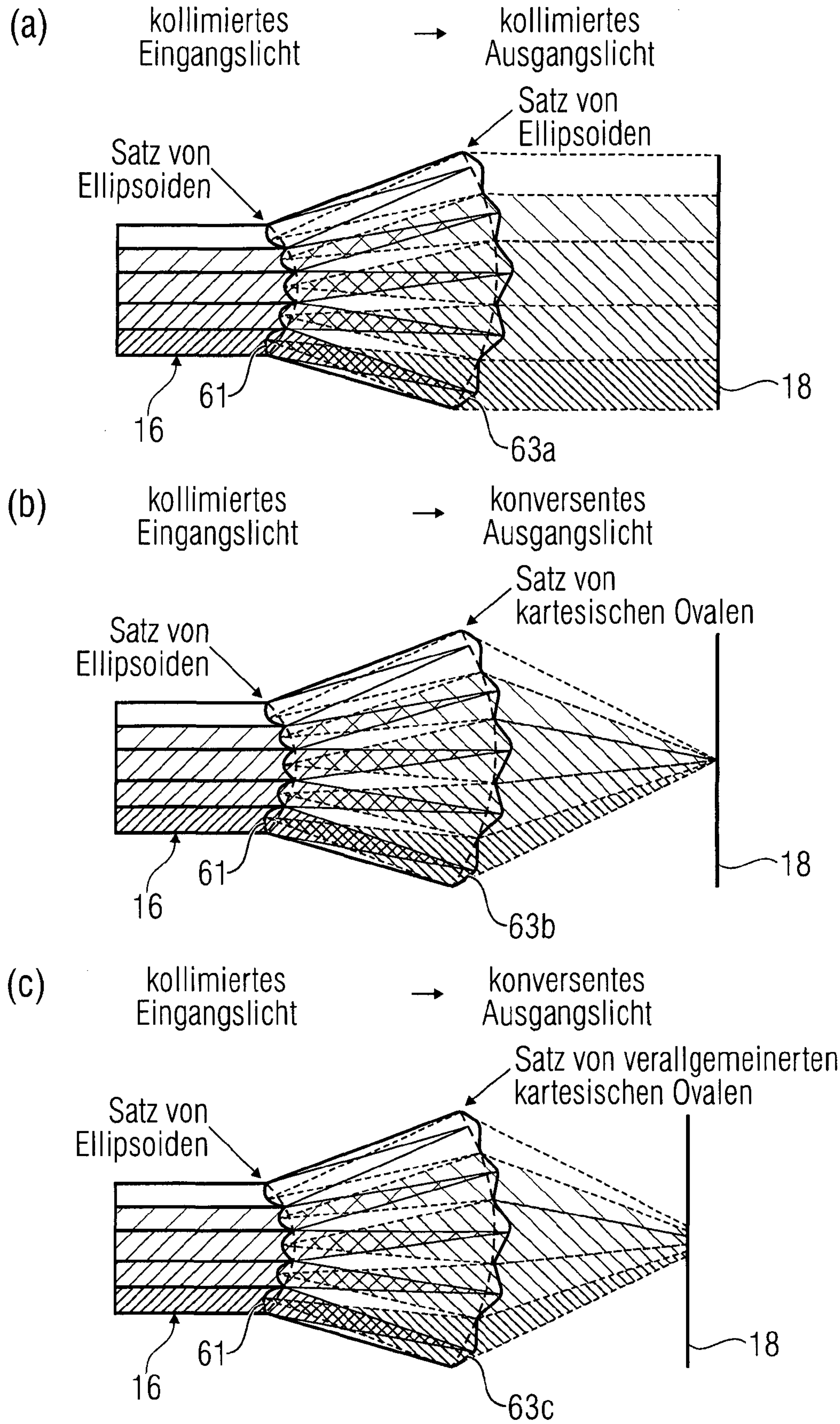
(a)
kollimiertes Eingangslicht
→
kollimiertes Ausgangslicht
Satz von Ellipsoiden
Satz von Ellipsoiden
61
16
63a
18
(b)
kollimiertes Eingangslicht
→
konversentes Ausgangslicht
Satz von kartesischen Ovalen
Satz von Ellipsoiden
61
16
63b
18
(c)
kollimiertes Eingangslicht
→
konversentes Ausgangslicht
Satz von verallgemeinerten kartesischen Ovalen
Satz von Ellipsoiden
61
16
63c
18

FIG 6

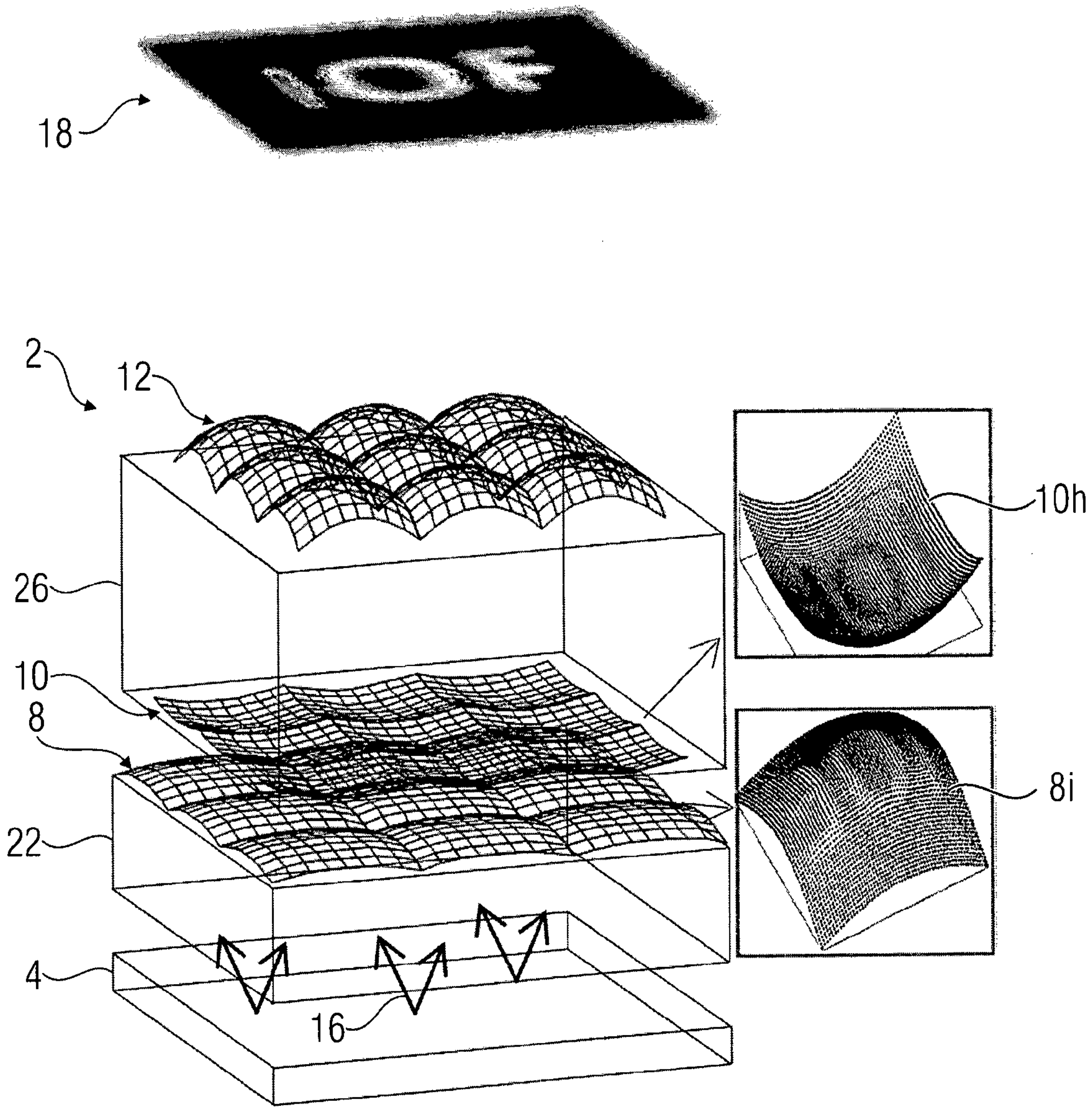


FIG 7

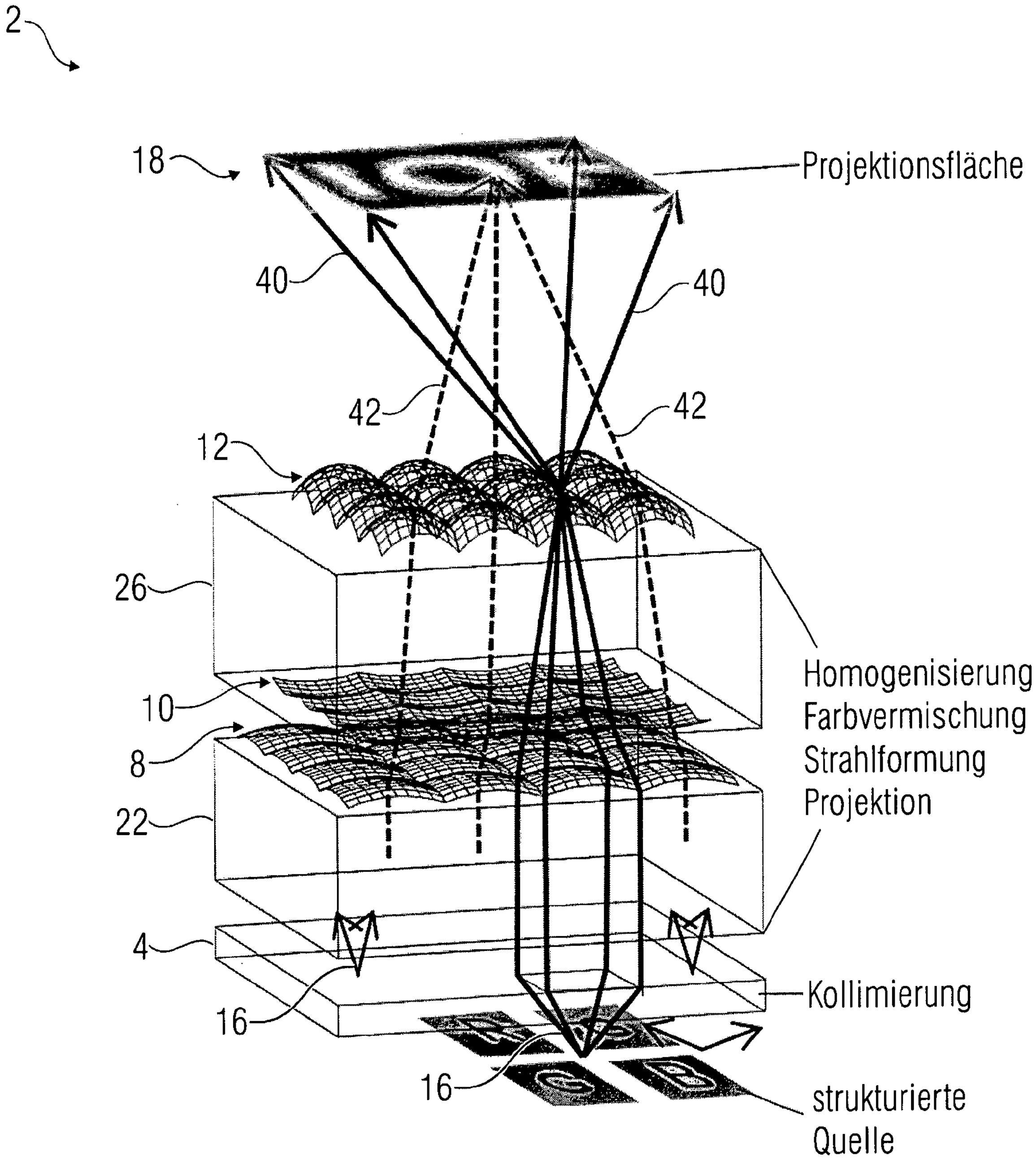
2
18
Projektionsfläche
40
40
42
42
12
26
10
8
22
Homogenisierung
Farbvermischung
Strahlformung
Projektion
4
Kollimierung
16
16
strukturierte
Quelle

FIG 8

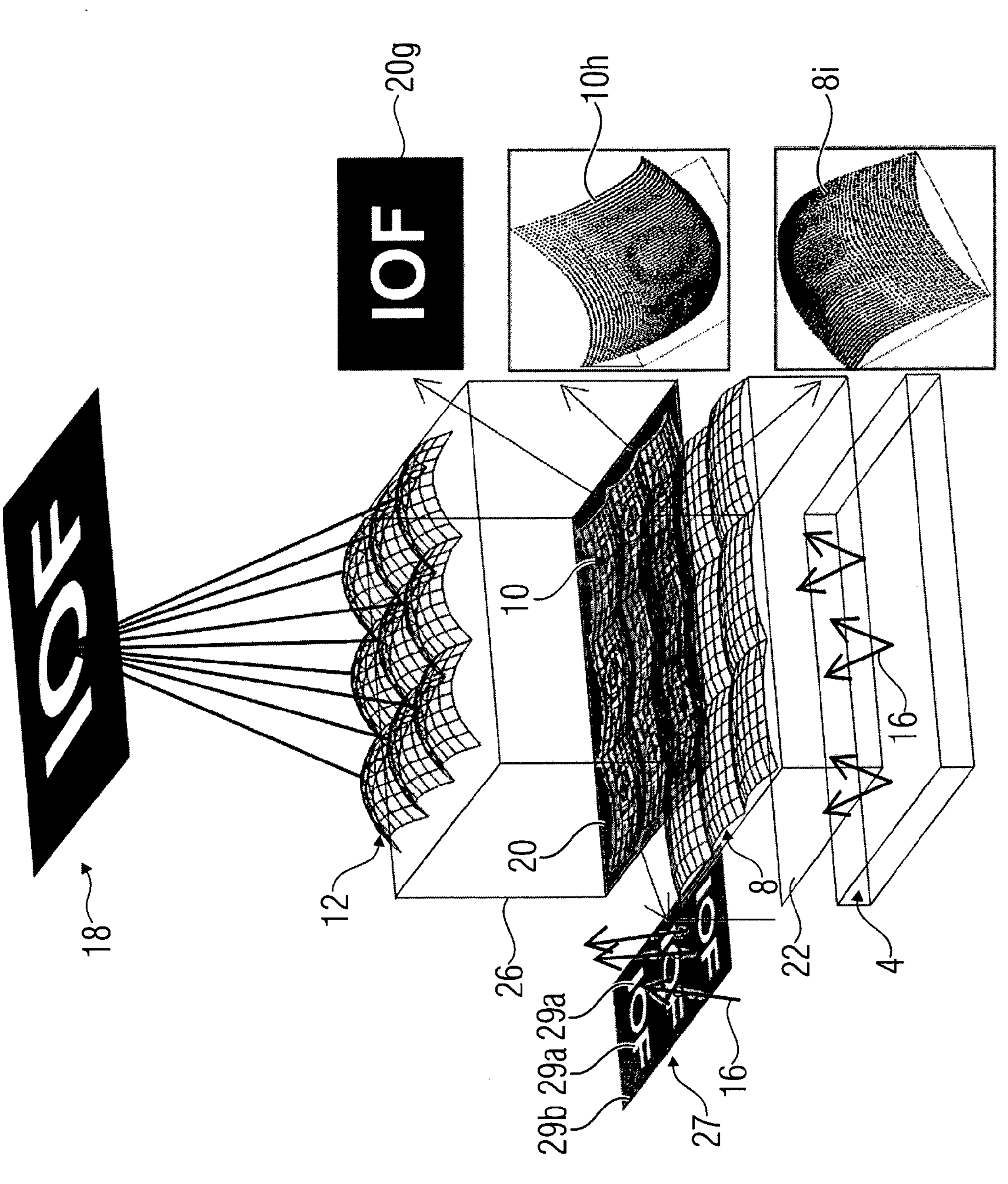


FIG 9

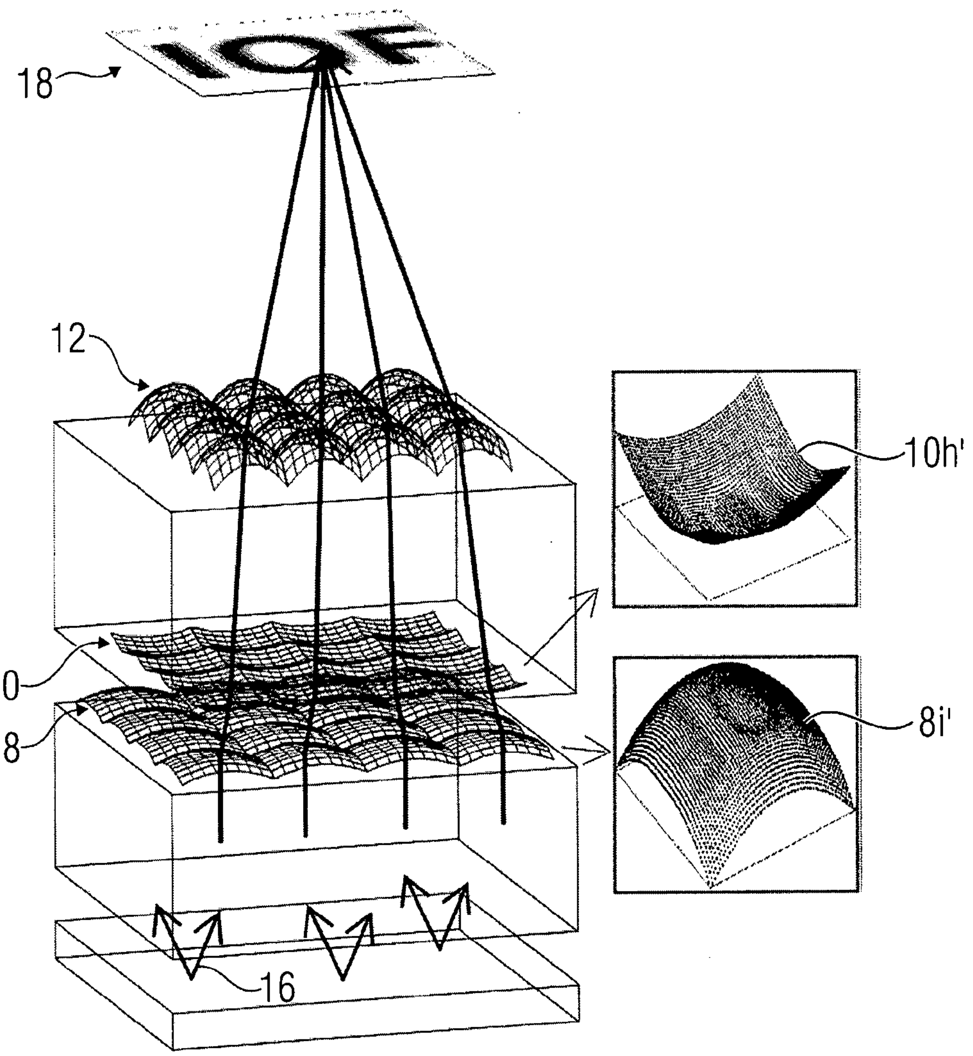


FIG 10

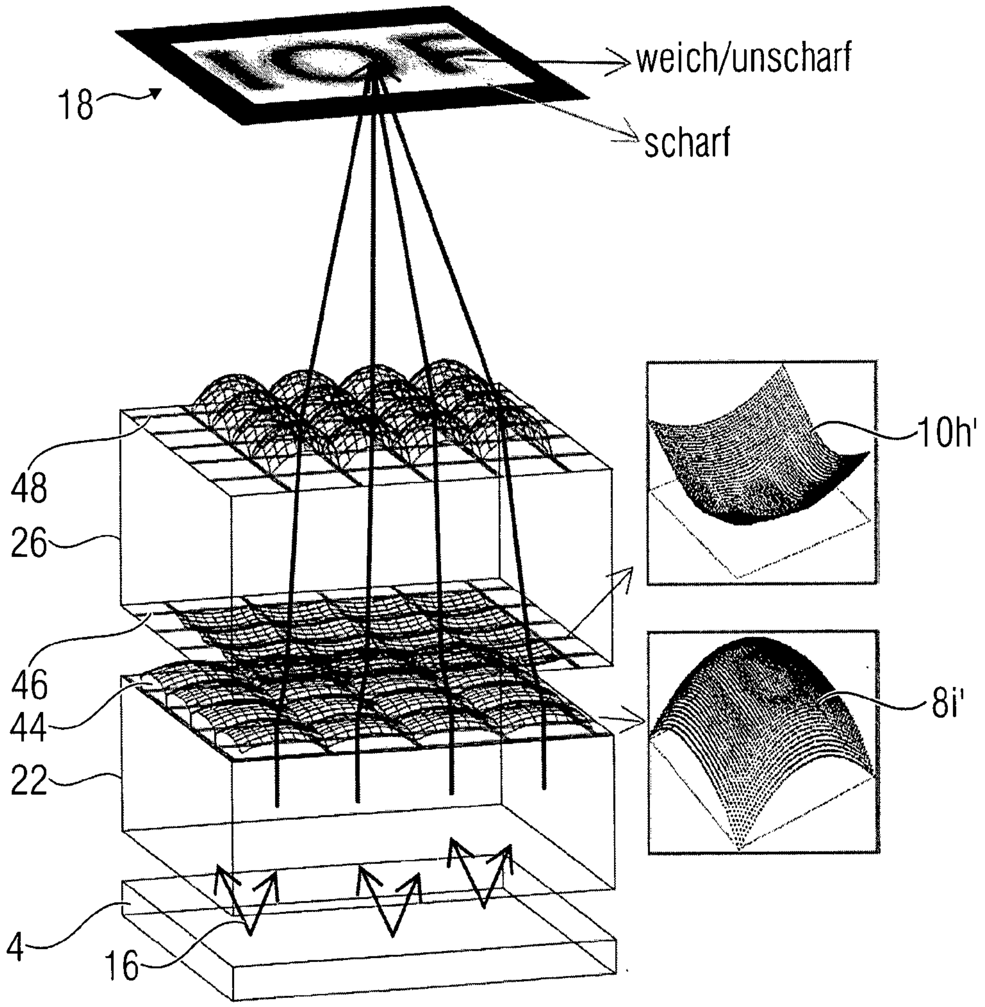


FIG 11

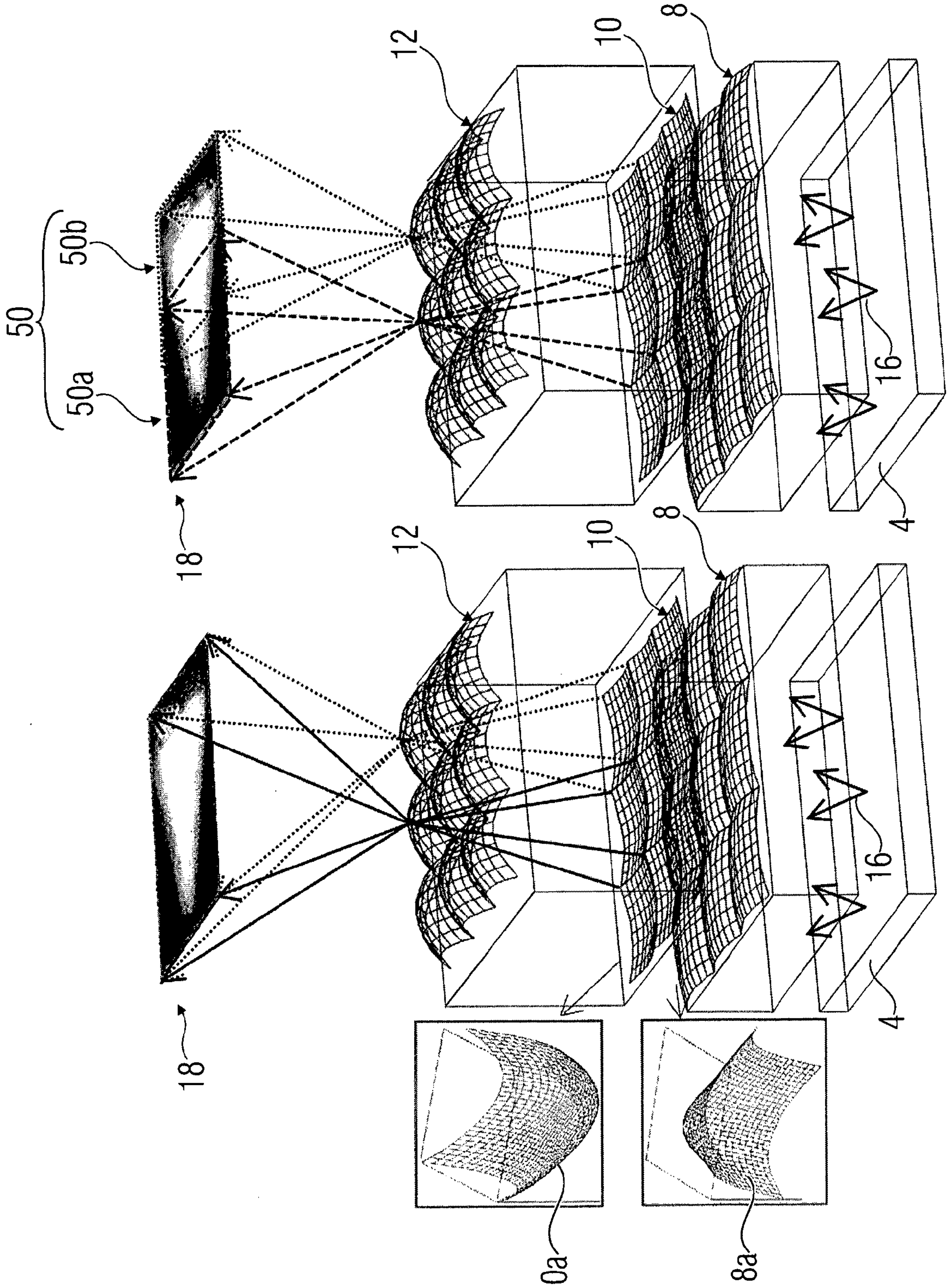


FIG 12

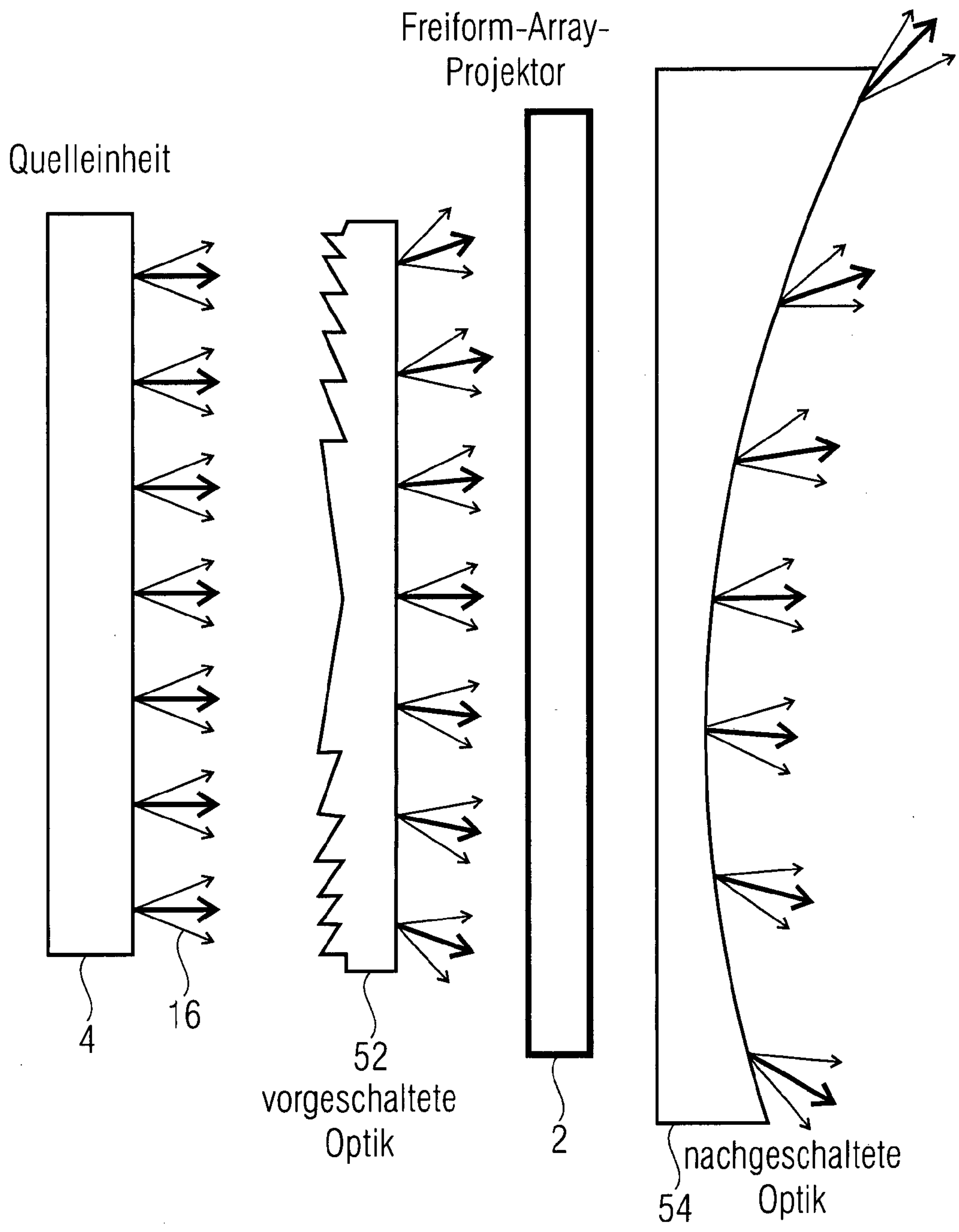
Freiform-Array-
Projektor
Quelleinheit
4
16
52
vorgeschaltete
Optik
2
nachgeschaltete
Optik
54

FIG 13

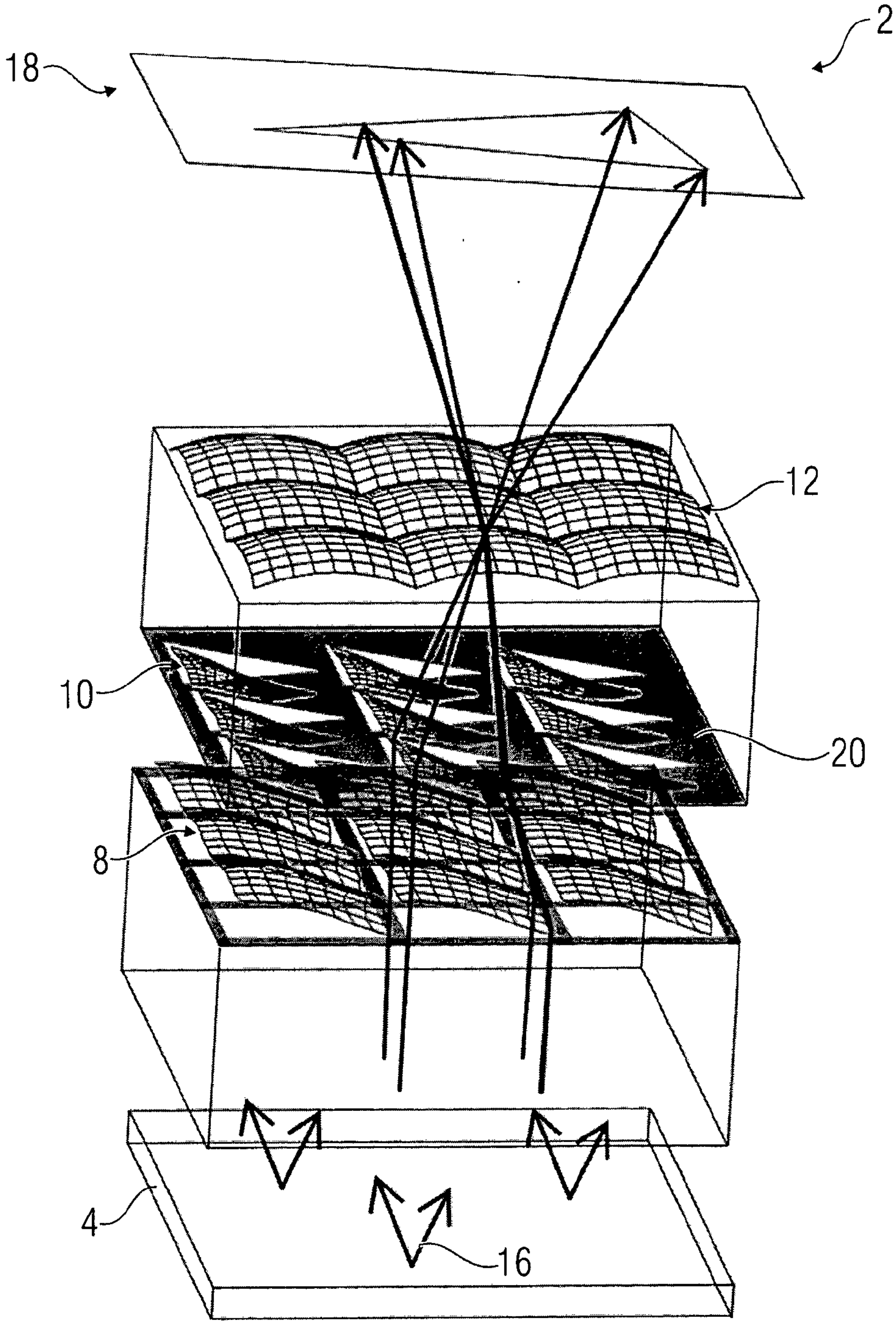


FIG 14

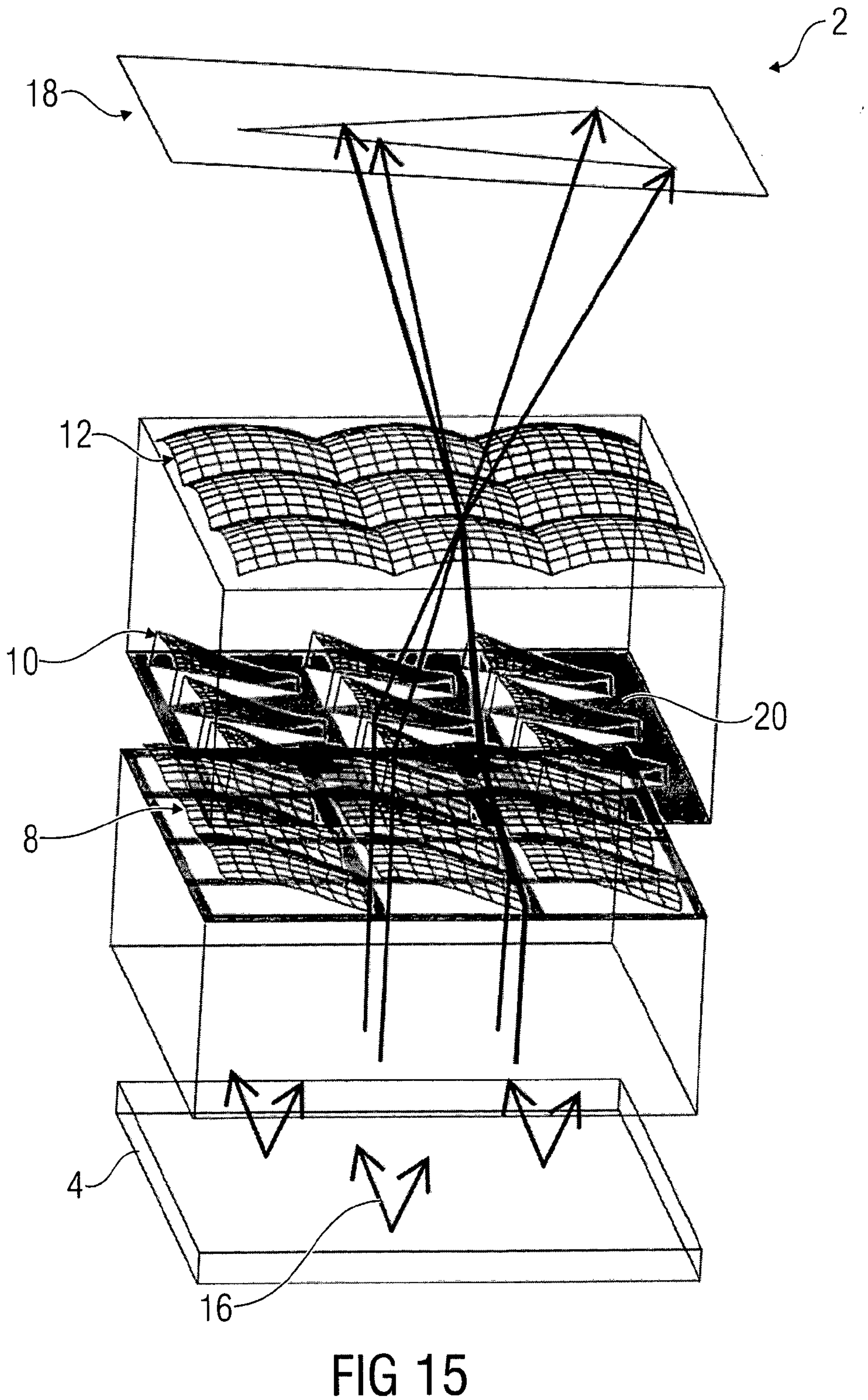


FIG 15

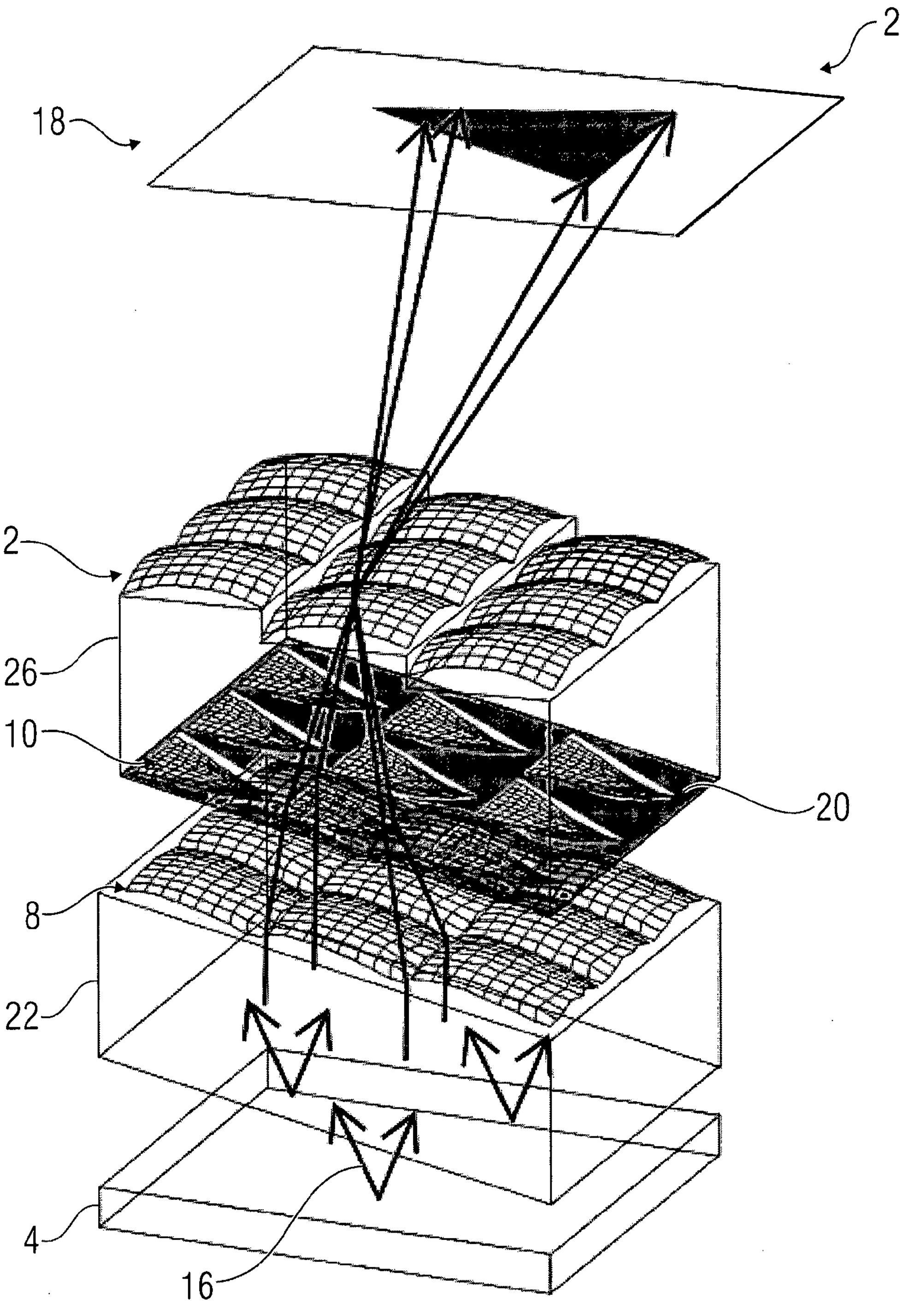


FIG 16

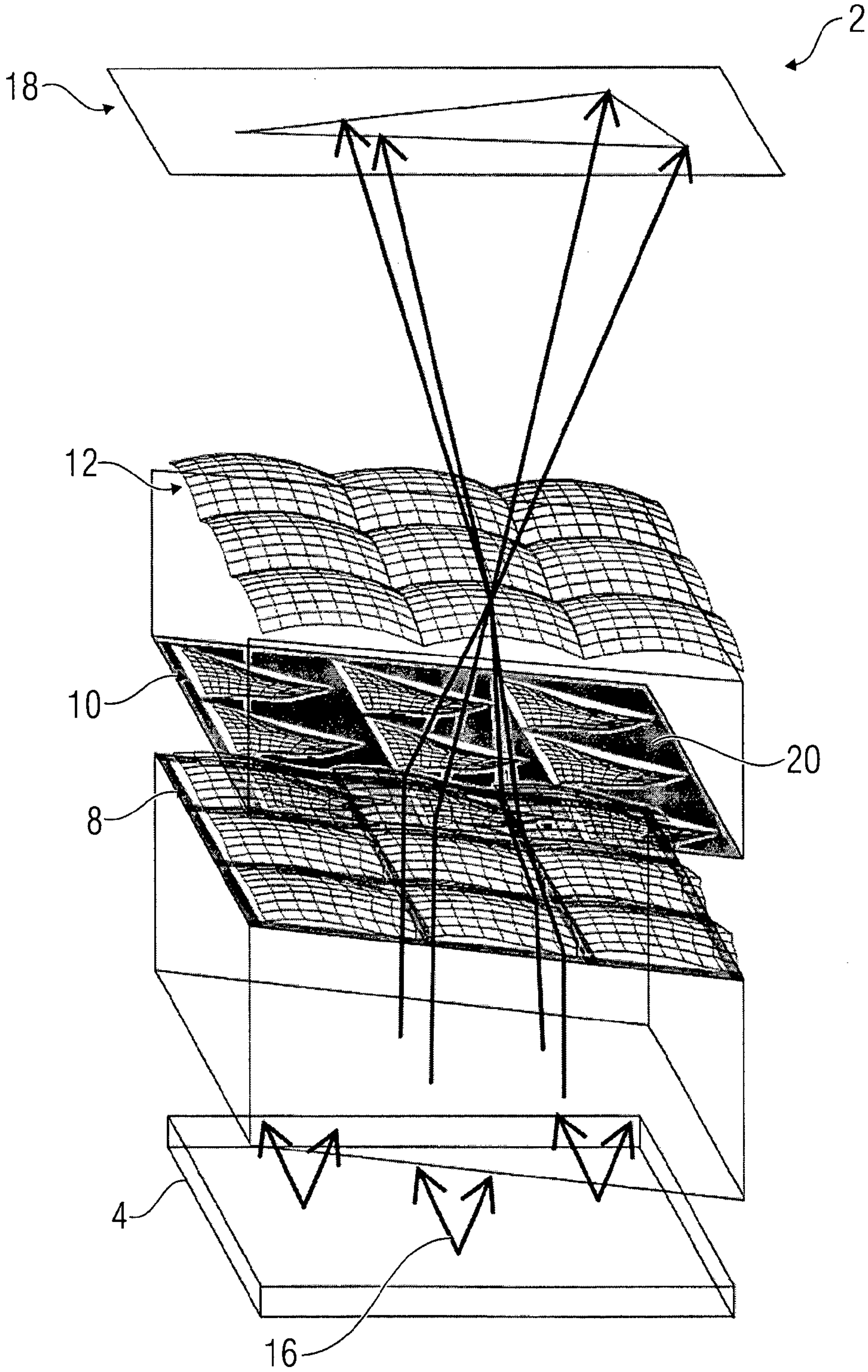


FIG 17

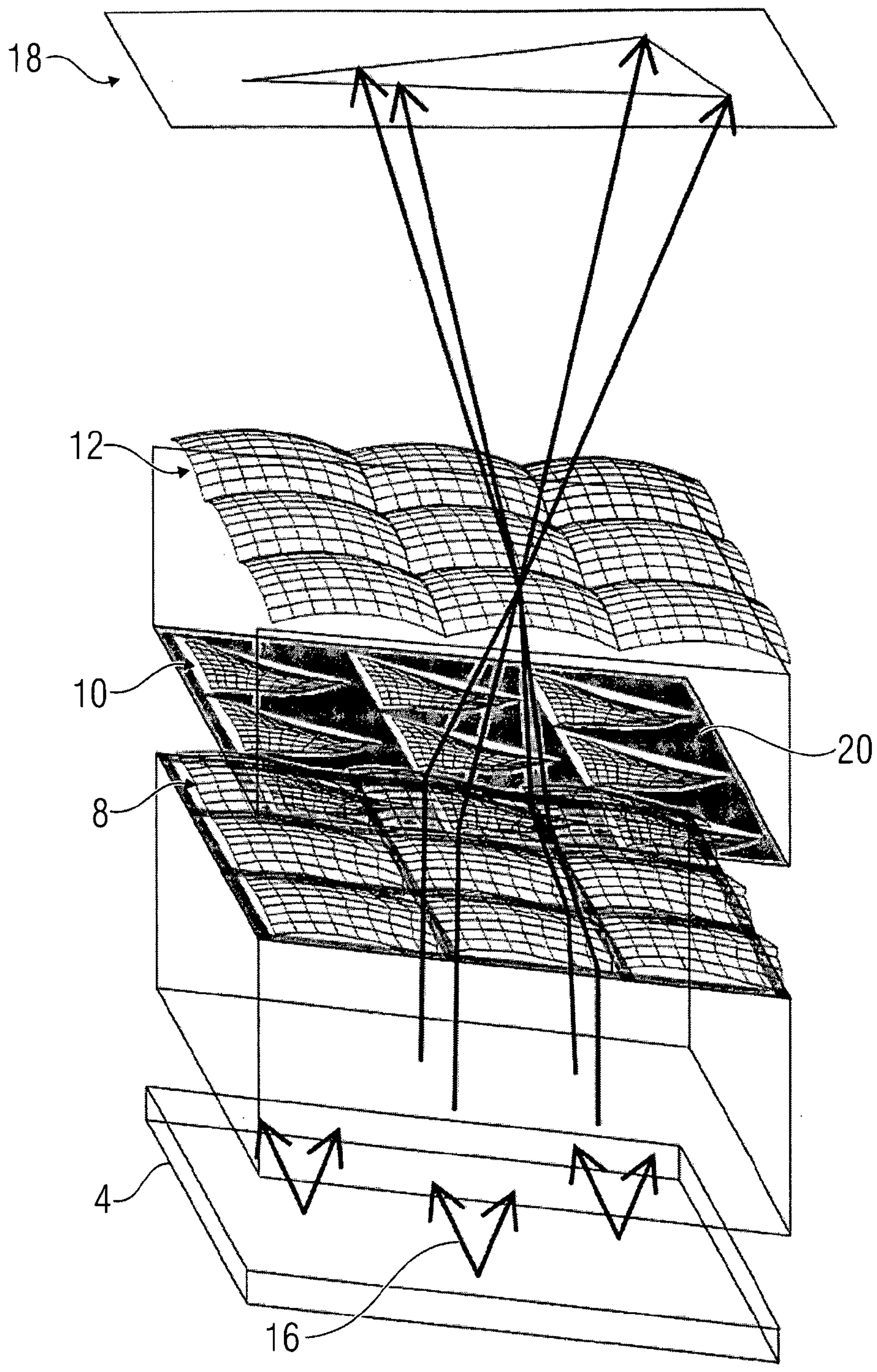


FIG 18

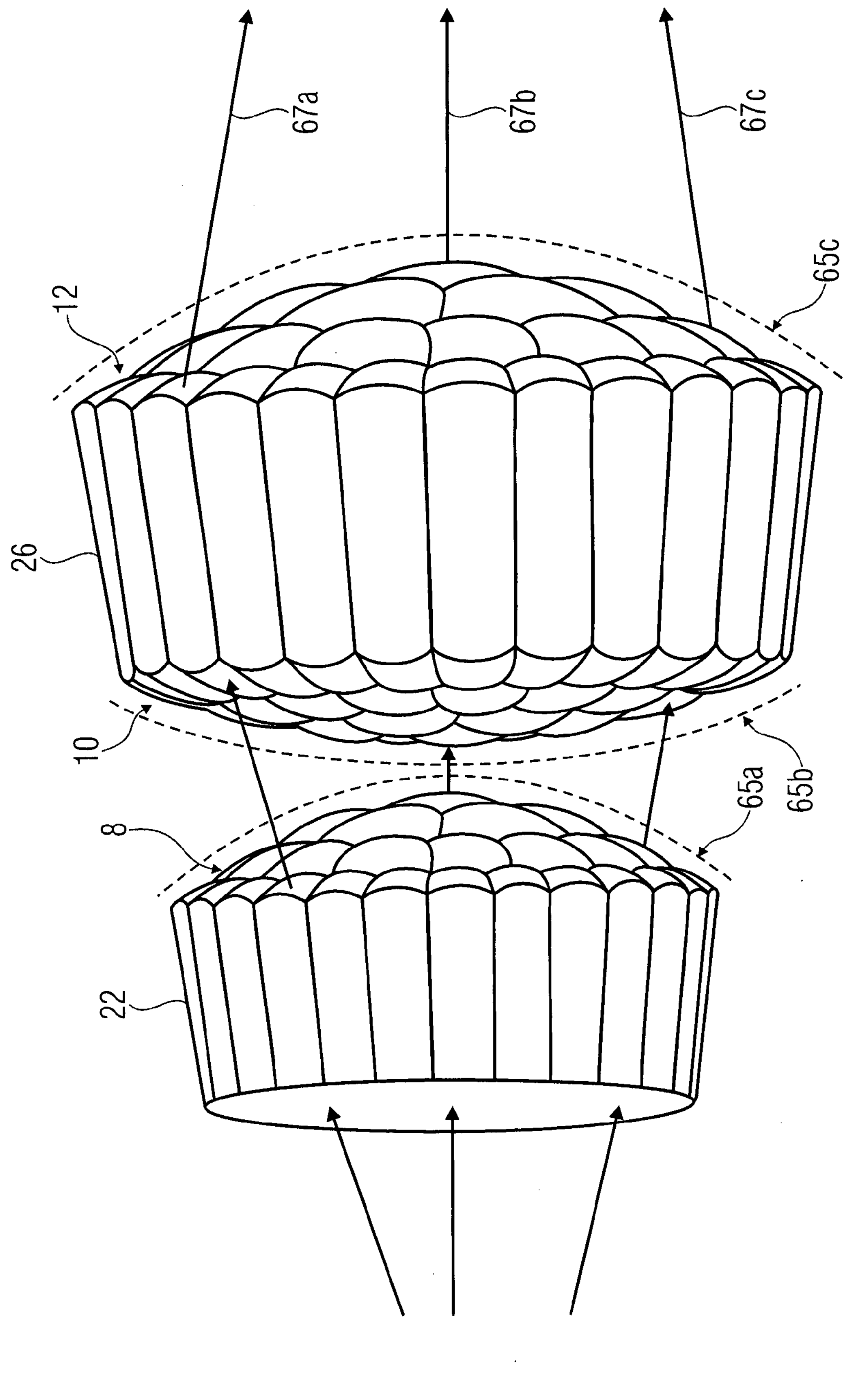


FIG 19

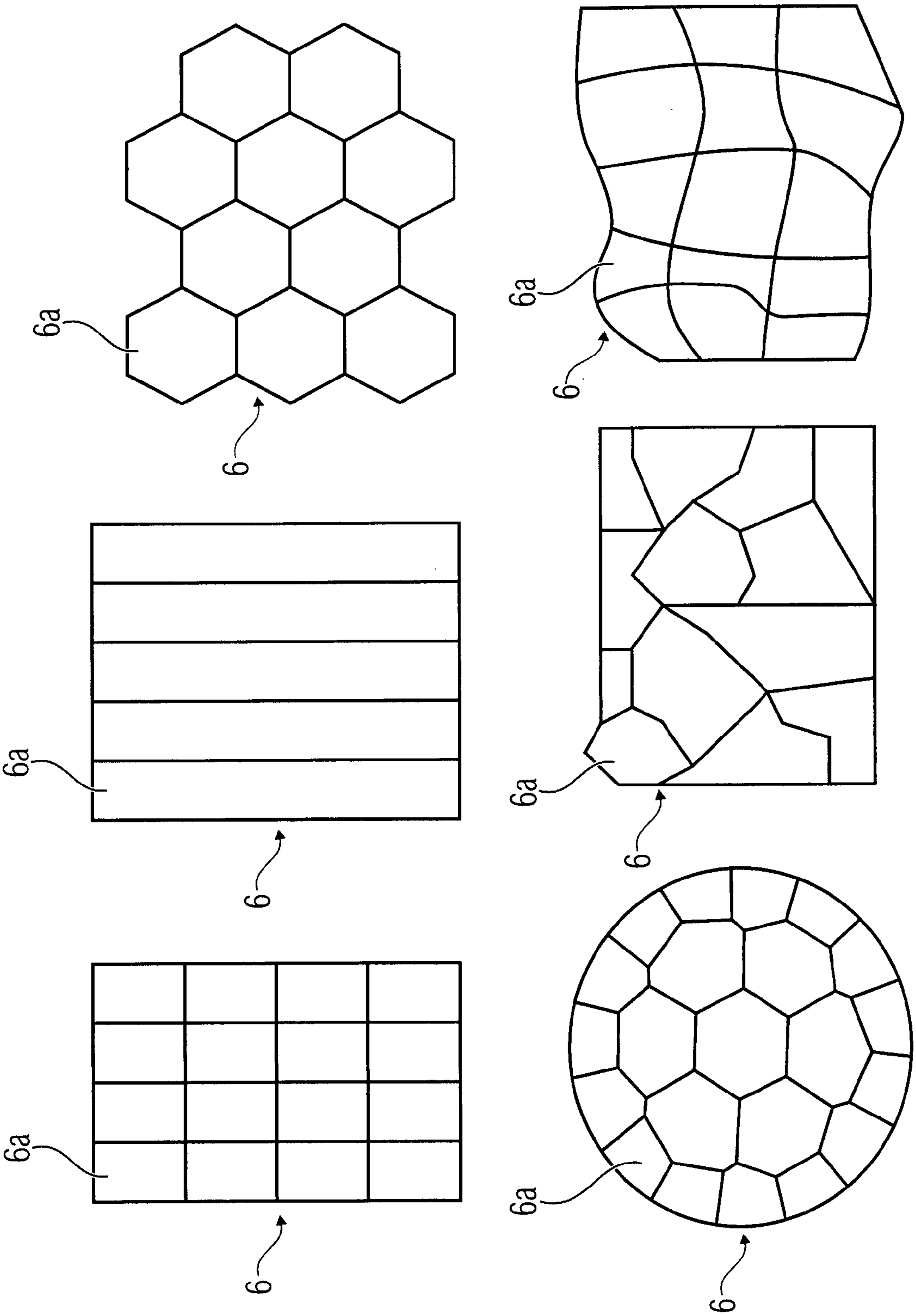


FIG 20

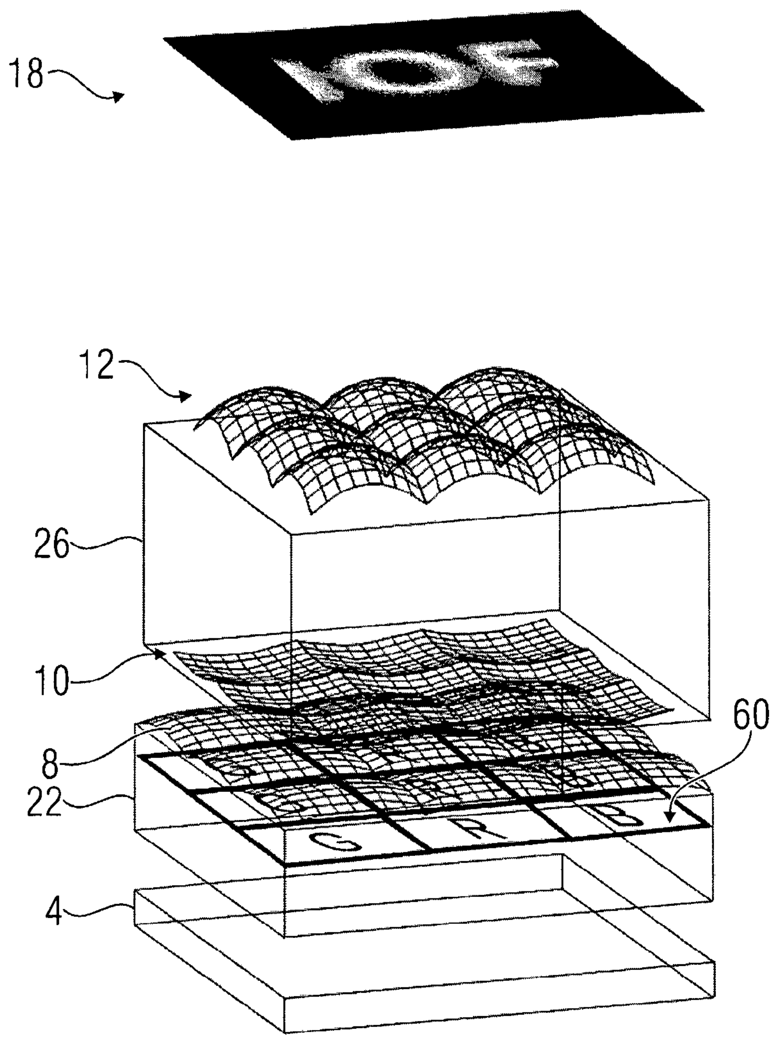


FIG 21

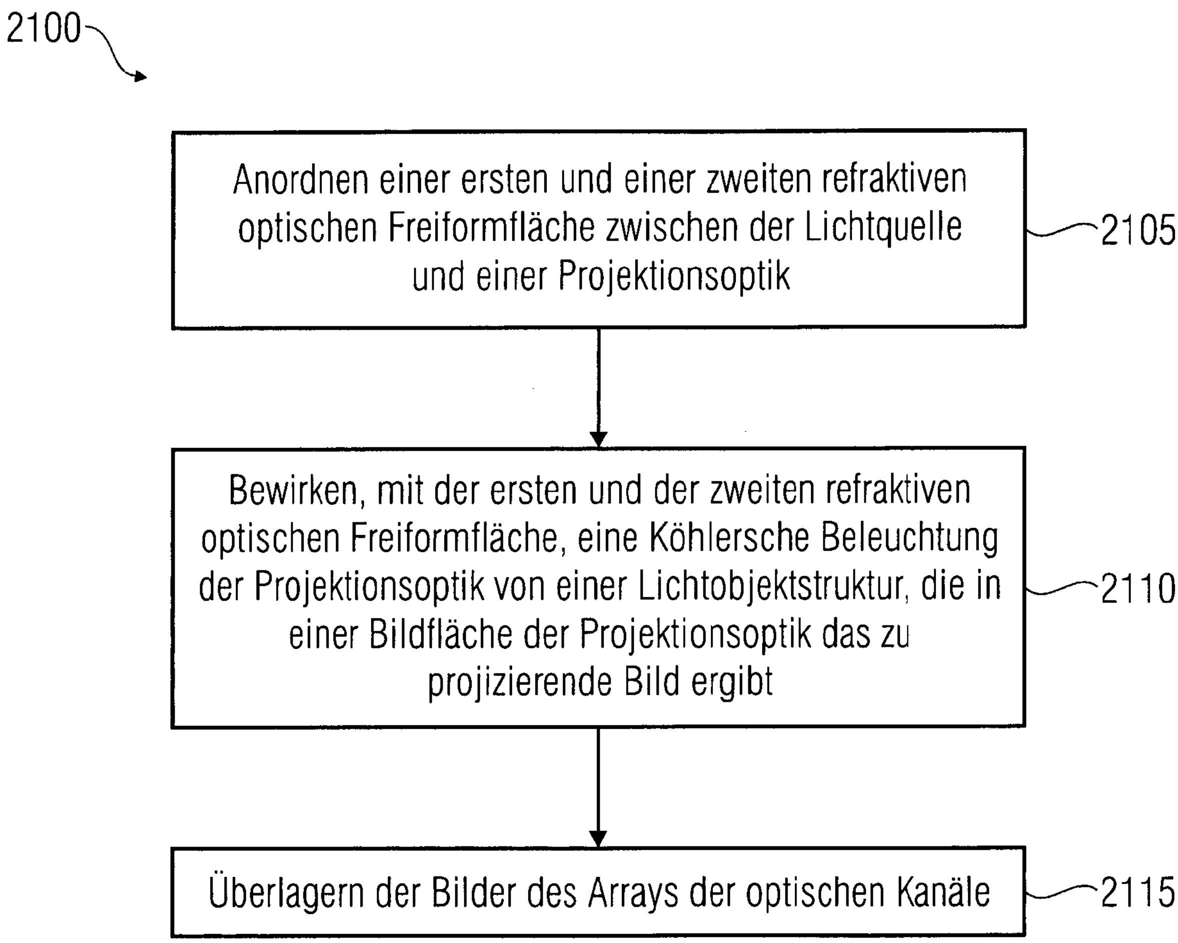
2100
Anordnen einer ersten und einer zweiten refraktiven optischen Freiformfläche zwischen der Lichtquelle und einer Projektionsoptik
2105
Bewirken, mit der ersten und der zweiten refraktiven optischen Freiformfläche, eine Köhlersche Beleuchtung der Projektionsoptik von einer Lichtobjektstruktur, die in einer Bildfläche der Projektionsoptik das zu projizierende Bild ergibt
2110
Überlagern der Bilder des Arrays der optischen Kanäle
2115

FIG 22

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20060285078 A1
- DE 102011014779 A1
- US 8717671 B2
- US 8616711 B
- US 20150205099 A1
- DE 102013208625 A1
- DE 102009024894 A1
- DE 102011076083 A1
- US 2186123 A, Kurt Räntsch


### In der Beschreibung aufgeführte Nicht-Patentliteratur


- **DANIEL MALACARA ; ZACARIAS MALACARA.** Handbook of Optical Design. Marcel Dekker, Inc, 2004
- **J. W. PAN ; C. M. WANG ; H. C. LAN ; W. S. SUN ; J. Y. CHANG.** Homogenized LED-illumination using microlens arrays for a pocket-sized projector. *Opt. Express,* 2007, vol. 15, 10483-10491
- **HARALD RIES ; JULIUS MUSCHAWECK.** Tailored freeform optical surfaces. *J. Opt. Soc. Am. A,* Marz 2002, vol. 19 (3), 590-595
- **V. I. OLIKER.** Mathematical aspects of design of beam shaping surfaces in geometrical optics. *Trends in Nonlinear Analysis,* 2002, 191-222
- **KÜHMSTEDT PETER ; NOTNI GUNTHER ; ZWICK SUSANNE.** *Vorrichtung und Verfahren zur Vermessung eines Gegenstandes*
- **S. ZWICK ; R. FEßLER ; J. JEGOROV ; G. NOTNI.** Resolution limitations for tailored picture-generating freeform surfaces. *OPTICS EXPRESS,* 2012, vol. 20, 3642
- **RENGMAO WU ; PABLO BENITEZ ; YAQIN ZHANG ; JUAN C. MINANO.** Influence of the characteristics of a light source and target on the monge-ampere equation method in freeform optics design. *Opt. Lett.,* 2014, vol. 39 (3), 634-637
- **LUO, Y. ; FENG, Z. ; HAN, Y. ; LI, H.** Design of compact and smooth free-form optical system with uniform illuminance for LED source. *Opt. Express,* 2010, vol. 18, 9055-9063
- **SHUANG ZHAO ; KAI WANG ; FEI CHEN ; ZONG QIN ; SHENG LIU.** Integral freeform illumination lens design of LED based pico-projector Integral freeform. *APPLIED OPTICS,* 2013, vol. 52, 2985
- **JUAN C. MINANO ; PABLO BENITEZ ; JOSE BLEN ; ASUNCIÓN SANTAMARIA.** Highefficiency free-form condenser overcoming rotational symmetry limitations. *Optics Express,* 2008, vol. 16, 20193-20205
- **SIELER, MARCEL ; SCHREIBER, PETER ; DANNBERG, PETER ; BRÄUER, ANDREAS ; TÜNNERMANN, ANDREAS.** Ultraslim fixed pattern projectors with inherent homogenization of illumination. *Applied optics,* 2012, vol. 51, 64-74
- **ZEXIN FENG ; LEI HUANG ; GUOFAN JIN ; MALI GONG.** Designing double freeform optical surfaces for controlling both irradiance and wavefront. *Opt. Express,* November 2013, vol. 21 (23), 28693-28701
- **M. BORN ; E. WOLF.** Principles of Optics. Cambridge University Press, 1999
- **M. M. SULMAN ; J. F. WILLIAMS ; R. D. RUSSEL.** An efficient approach for the numerical solution of mongeamp'ere equation. *Appl. Numer. Math.,* 2011, vol. 61, 298-307
- **JACOB RUBINSTEIN ; GERSHON WOLANSKY.** Intensity control with a free-form lens. *J. Opt. Soc. Am. A,* 2007, vol. 24 (2), 463-469
- **D. MICHAELIS ; P. SCHREIBER ; A. BRÄUER.** Cartesian oval representation of freeform optics in illumination systems. *Opt. Lett.,* 2011, vol. 36 (6), 918-920
- **WINSTON, R. ; MINANO, J. C. ; BENITEZ, P. G.** Nonimaging Optics. Elsevier Academic Press, 2006
- Geometrical Methods'' and ''Classical (Non-laser) Methods. **SHEALY, D.L.** Laser Beam Shaping. Dekker, 2000